Europäisches Patentamt

European Patent Office

Office européen des brevets

(19)

(11) **EP 0 831 310 B1**

(12) **EUROPÄISCHE PATENTSCHRIFT**

(45) Veröffentlichungstag und Bekanntmachung des Hinweises auf die Patenterteilung:
**11.12.2002 Patentblatt 2002/50**

(51) Int Cl.$^7$: **G01H 3/12**

(21) Anmeldenummer: **97116062.7**

(22) Anmeldetag: **16.09.1997**

(54) **Verfahren und Vorrichtungen zur Bestimmung meteorologischer Zusatzdämpfungen der Schallausbreitung**

Method and arrangement for measuring the meteorological additional damping of sound

Procédé et dispositif pour déterminer l'atténuation additionnel météorologique du son

(84) Benannte Vertragsstaaten:
**AT DE DK FR GB SE**

(30) Priorität: **20.09.1996 DE 19638537**

(43) Veröffentlichungstag der Anmeldung:
**25.03.1998 Patentblatt 1998/13**

(73) Patentinhaber: **Kühner, Dietrich, Dr.**
**51519 Odenthal (DE)**

(72) Erfinder: **Kühner, Dietrich, Dr.**
**51519 Odenthal (DE)**

(74) Vertreter: **Springorum, Harald, Dr. et al**
**Kiani & Springorum,**
**Patent- und Rechtsanwälte,**
**Heinrich-Heine-Allee 29**
**40213 Düsseldorf (DE)**

(56) Entgegenhaltungen:
- LAMANCUSA J S ET AL: "RAY TRACING IN A MOVING MEDIUM WITH TWO-DIMENSIONAL SOUND-SPEED VARIATION AND APPLICATION TO SOUND PROPAGATION OVER TERRAIN DISCONTINUITIES" JOURNAL OF THE ACOUSTICAL SOCIETY OF AMERICA, Bd. 93, Nr. 4 PT 01, 1. April 1993, Seiten 1716-1726, XP000363142
- WALKDEN F, WEST M: "Prediction of enhancement factor for small explosive sources in a stratified moving atmosphere" JOURNAL OF THE ACOUSTICAL SOCIETY OF AMERICA, Bd. 84, Nr. 1, Juli 1988, Seiten 321-326, XP002104128
- VDI RICHTLINIEN 2714: "Schallausbreitung im Freien" Januar 1988 , VDI-VERLAG GMBH , DÜSSELDORF XP002104130 * Seite 6 - Seite 7 *
- LEHN W H: "A simple parabolic model for the optics of the atmospheric surface layer" APPLIED MATHEMATICAL MODELLING (UK), Bd. 9, Nr. 6, Dezember 1985, Seiten 447-453, XP002104129
- RASPET R ET AL: "THE EFFECT OF REALISTIC GROUND IMPEDANCE ON THE ACCURACY OF RAY TRACING" JOURNAL OF THE ACOUSTICAL SOCIETY OF AMERICA, Bd. 97, Nr. 1, 1. Januar 1995, Seiten 154-158, XP000611042

**Beschreibung**

Die vorliegende Erfindung betrifft Verfahren und Vorrichtungen zur Bestimmung meteorologischer Zusatzdämpfungen der Schallausbreitung.

## 1. Einleitung

Bekannt sind die VDI-Richtlinie 2714 "Schallausbreitung im Freien" und die VDI-Richtlinie 2720 "Schallschutz durch Abschirmung im Freien", welche Basis der Ausbreitungsrechnung von Schall in der praktischen Anwendung sind. In der Regel wird das im Haupttext der VDI 2714 dargestellte Ausbreitungsmodell, das die Witterung und die Reflexion am Boden frequenzunabhängig berücksichtigt, angewendet. In Ausnahmefällen wird das auch die Bodenbeschaffenheit und die Frequenz berücksichtigende Modell des Anhangs D benutzt. Das vereinfachte Modell ist auch die Grundlage für das Berechnungsverfahren von Verkehrslärm nach der 16. Verordnung zur Durchführung des Bundes-Immissionsschutzgesetzes-BImSchV (Verkehrslärmschutzverordnung). Die beiden Berechnungsalternativen sind in die internationale Normung eingegangen in Gestalt der ISO 9613-1-1993 mit dem Titel "Acoustics-Attenuation of Sound during propagation outdoors, Part 1: Calculation of the absorption of sound by the atmosphere". Außerhalb Deutschlands wird das auch unter dem Namen "Nordisches Modell" bekannte Verfahren des Anhangs D aus der VDI 2714 bevorzugt.

Das vereinfachte Modell ist aus Messungen an Industrieanlagen abgeleitet (Stüber, B.: Schallschutztechnische Planung bei petrochemischen Neuanlagen zum Schutz der Arbeitsplätze und der Nachbarschaft, Chemie-Ing. Technik 47 (1975) Nr. 15, S. 624/628), das im Anhang D beschriebene Verfahren stellt eine Kombination aus grundsätzlichen Überlegungen mit einem Schallstrahlenmodell und Meßergebnissen dar und ist ebenfalls ein heuristisches Modell.

Beide Modelle führen zu vergleichbaren Ergebnissen, wenn im vereinfachten Modell der Boden als 100 % reflektierend und im Verfahren nach Anhang D absorbierende Böden angenommen werden, und stimmen nach der Erfahrung gut im langfristigen Mittel mit Messungen von Industrieanlagen zur Nachtzeit bis ca. 1000 m Entfernung überein. Unter langfristigem Mittel sind Mittelungen über Pegel zu verstehen, die über mehr als 3 Wochen gemessen wurden und eine größere Zahl unterschiedlicher Wetterlagen zur Nachtzeit bei Mitwind erfaßt haben.

Das Ausbreitungsmodell der VDI 2714 berücksichtigt allgemein anerkannte physikalische Tatbestände, wie z.B. daß der Schallpegel eines Punktstrahlers durch eine Kugelwelle beschrieben werden kann und damit der Pegel mit $20 \log \cdot r$ abnimmt, wobei r der Abstand zwischen Aufpunkt und Quelle ist. Entsprechend wird die Absorption von Schallenergie in der Luft, auf der Basis von Labormessungen (siehe auch: ISO 9613-1-1993) berücksichtigt. Dies schließt die Abhängigkeit der Absorption von der Temperatur und Feuchte ein.

Zu diesen Dämpfungsmaßen tritt das Bodenmeteorologiemaß $D_{BM}$ hinzu, das die meßtechnisch nachgewiesene Zusatzdämpfung durch Boden- und Meteorologieeinflüsse berücksichtigt. Das $D_{BM}$ erreicht nach VDI 2714 für größere Entfernungen 4.8 dB. Die gängige Erklärung für diese Pegelreduzierung ist Interferenzauslöschung zwischen Direktstrahl und den Strahlen, die am Boden reflektiert werden.

Diese Erklärung ist insofern unbefriedigend, als Interferenzauslöschung in gemessenen Immissionsspektren von gewerblichen Anlagen auch bei größeren Abständen (z.B. über 1000 m) in der Frequenzstruktur der Immissionsspektren nicht erkennbar ist. Wird Interferenz beobachtet, wie dies beispielsweise bei kurzen Entfernungen (unter 300 m) und bei Messungen in Bodennähe (unter 4 m) auch gelegentlich geschieht, wird Auslöschung in einzelnen Frequenzbereichen sichtbar, in anderen Frequenzbereichen treten Pegelerhöhungen ein. Eine weitgehend frequenzunabhängige Auslöschung über den Frequenzbereich von 100 Hz bis 800 Hz setzt voraus, daß die am Boden reflektierte Welle und die Direktwelle keine oder nur geringe Wegunterschiede aufweisen und kohärent sind. Dies ist theoretisch bei geradliniger Schallausbreitung und großen Entfernungen erfüllt; bei Schallwellen, die entlang gekrümmter Bahnen (Schallstrahlen) verlaufen, bleiben auch mit zunehmender Entfernung nicht verschwindende Wegunterschiede. Die VDI 2714 geht von solchen gekrümmten Strahlenverläufen aus. Beispielsweise wird der Einfluß der Vegetation auf die Schallausbreitung nach VDI 2714 dadurch berücksichtigt, daß Quelle und Aufpunkt mit einem Krümmungsradius von 5000 m verbunden werden und geprüft wird, über welche Strecke die Schallwellen durch die Vegetation verlaufen. Für diese Strecke wird eine wegproportionale Zusatzdämpfung angenommen und mit Vegetationsdämpfung bezeichnet. Weiter ist davon auszugehen, daß Turbulenzen der Luft zu Phasenfluktuationen führen, die die Kohärenz stören. Das bedeutet, daß ein innerer Widerspruch zwischen den physikalischen Begründungen der unterschiedlichen Dämpfungsmaße in der VDI 2714 besteht.

Das Erklärungsmodell der Interferenz von Direktwelle mit den am Boden reflektierten Wellen wird auch bei der Berechnung der Schallabschirmung nach VDI 2720 durch Wälle und Wände herangezogen. Die Einfügungsdämmung des Schirms wird dadurch berechnet, daß vom Schirmmaß $D_Z$ das Bodenmeteorologiemaß abgezogen wird, um zu berücksichtigen, daß der Schirm nicht nur die Direktwelle, sondern auch die reflektierte Welle reduziert und wegen der zu erwartenden viel höheren Abschirmung der reflektierten Welle Interferenz nicht mehr eintreten kann.

Auch hier müßten hinter Schirmen Interferenzstrukturen im Spektrum aufgrund der Beugungstheorie zu beobachten sein. Dies geschieht jedoch allenfalls in Ausnahmefällen, wie Langzeitmessungen hinter Schirmen an Straßen gezeigt haben (siehe hierzu auch: deBAKOM Gesellschaft für sensorische Meßtechnik mbH, Dr. D. Kühner, Dr. J. Schewe, Untersuchung über "Wirksamkeit von Lärmschirmen", Forschungsbericht FE-Nr. 03.230 R 90M Teil II, im Auftrag des Bundesministers für Verkehr, 08.12.1993). Andererseits werden beim Straßenverkehr tatsächlich Interferenzeinbrüche beobachtet, so daß die Interferenzauslöschung als Teil des $D_{BM}$'s auch nicht ausgeschlossen werden kann. Weiterhin berüchsichtigt das Modell der VDI 2714 eine durch Bebauung hervorgerufenen Dämpfung.

Die Zielsetzung der standardisierten Ausbreitungsmodelle ist es, die Schallausbreitung unter günstigen Ausbreitungsbedingungen im Mittel zu beschreiben, wobei die VDI 2714 neben dem Fall der mittleren Mitwindwetterlage auch die Möglichkeit beschreibt, das Langzeitmittel zu berechnen. Die Mitwindwetterlage umfaßt alle meteorologischen Situationen, bei denen Wind von der Anlage in Richtung des Aufpunktes weht. Nach der Schießlärmrichtlinie (VDI 3745, Beurteilung von Schießgeräuschimmissionen, Beuth-Verlag, Berlin, Mai 1993) sind darunter alle Windrichtungen zu verstehen, die nicht mehr als $\pm 45°$ von der Verbindungslinie Quelle-Aufpunkt abweichen.

Der Langzeitmittelungspegel soll den mittleren Pegel beschreiben, der zu erwarten ist, wenn alle Windrichtungen etwa gleich häufig aufgetreten sind.

Die Ausbreitungsmodelle der VDI 2714 berücksichtigen weder die Windrichtung, die Windgeschwindigkeit noch andere relevante meteorologische Parameter, die die Schallgeschwindigkeit beeinflussen können. Diese Einflüsse sind in zahlreichen Publikationen dargestellt.

So beschäftigt sich etwa BOND, Leonhard J. in dem Aufsatz "Absorption of ultrasonic waves in air at high frequencies (10-20 MHz)" in Journals of the Acoustics Society of America, Vol. 92, No. 4, Pt. 1, Oktober 1992, S. 2006-2015 mit der Absorption von Schall unter bestimmten meteorologischen Bedingungen, jedoch bleibt seine Untersuchung auf die Luftabsorption im dort genannten Bereich beschränkt, der für Schallemissionen als Umweltproblem unerheblich ist.

Darüber hinaus lehrt die deutsche Patentschrift DE 38 05 778 C2 "Verfahren und Vorrichtung zur Erfassung und Überwachung der meteorologisch bedingten Übertragungsverhältnisse von Lärm". Das in dieser Schrift gelehrte Verfahren basiert jedoch nicht auf einer deduktiv gewonnen physikalischen Erkenntnis, sondern vielmehr auf einem experimentellen Ansatz und versursacht daher jeweilig einen Grundaufwand zur Vornahme einer Eichmessung, mit Hilfe derer die jeweils vorliegenden meteorologische Dämpfung ermittelt wird. Dies ist zeitaufwendig und arbeitsintensiv und erfordert darüber hinaus im Falle eines Wechsels der meteorologischen Situation jeweils zu wiederholende Eichmessungen. Das Verfahren ist daher, insbesondere bei instabilen Wetterlagen unpraktikabel. Auch ist es nicht geeignet zur Prognose von Schallausbreitungen verwendet zu werden.

Desweiteren ist der direkte Einfluß der Wetterlagen auch bei Kühner, D., "Schallausbreitung im klimatologischen Mittel", DAGA '93 dargestellt und belegt, daß klimatologische Einflüsse auf die Schallausbreitung im Freien von wesentlicher Bedeutung sind. Die dortigen Berechnungen erfolgen jedoch auf einem numerischen Lösungsansatz, der so in der Praxis technisch nicht durchführbar, da viel zu aufwendig ist.

Ein Verfahren zur ingenieurmäßigen Anwendung, das die klimatologischen Einflüsse der Schallausbreitung angemessen berücksichtigt, steht somit bis heute nicht zur Verfügung.

Hier setzt die vorliegende Erfindung an: Es ist ihre Aufgabe technisch anwendbare Verfahren und Vorrichtungen zur Bestimmung der Schallimmission unter Berücksichtigung klimatologischer Effekte anzugeben.

Diese Aufgabe wird erfindungsgemäß durch ein Verfahren nach dem Patentanspruch 1 und eine Vorrichtung nach Anspruch 14 gelöst.

Weitere vorteilhafte Ausführungsformen des Verfahrens ergeben sich aus den Patentansprüchen 2 bis 13, sowie solche von Vorrichtungen zu ihrer Durchführung aus den folgenden Patentansprüchen 15 bis 16.

Anspruch 2 kennzeichnet dabei einen spezifischer angegebenen parabolischen Ansatz für den Verlauf der Schallstrahlen, der auch den hier dargelegten Ausführungsformen von Verfahren nach der vorliegenden Erfindung, wie auch den hier angeführten Ausführungsbeispielen zugrunde liegt.

Anspruch 3 betrifft ein Verfahren zur Bestimmung der meteorologischen Zusatzdämpfung ohne Berücksichtigung von Reflexionen.

Die Ansprüche 4 und 5 betreffen den Fall einer einmaligen Reflexion des Schallstrahles und Anspruch 6 den Fall einer mehrfachen Reflexion unter der Randbedingung, daß die Krümmung der Teilstrahlen auf ihrem Wege gleich ist.

Anspruch 7 betrifft eine spezielle Ausführungsform der erfindungsgemäßen Verfahren zur Bestimmung der meteorologischen Zusatzdämpfung, bei der die Größe $\beta$ mit Hilfe des reziproken Krümmungsradius des gesamten Schallstrahles angepaßt wird.

Am Aufpunkt ist es natürlich auch von Interesse, welchen meteorologischen Zusatzdämpfungen mehrere (insbesondere alle), also unreflektierte, einfach reflektierte, wie auch mehrfach reflektierte Schallstrahlen, die von einer bestimmten Quelle zum Aufpunkt hin verlaufen, unterworfen sind. Dies ist vor allem im Hinblick auf eine, für eine Gesamtbetrachtung notwendige Überlagerung erforderlich.

Anspruch 8 kennzeichnet daher ein Verfahren zur Bestimmung der meteorologischen Zusatzdämpfungen aller, von einer Quelle zu einem Aufpunkt führenden Schallstahlen (unreflektierte, einfach reflektierte, wie auch alle mehrfach reflektierten) unter Verwendung der erfindungsgemäßen Verfahren zur Bestimmung der meteorologischen Zusatzdämpfungen einzelner Schallstrahlen. Strahlen mit einer Anzahl von n Reflexionen existieren insbesondere immer dann, wenn für diese Strahlen noch entsprechende Reflexionspunkte gefunden werden. Zu der Frage, wie genau bestimmt wird, ob noch Strahlen mit einer bestimmten Anzahl von Reflexionen am Boden existieren, wird in diesem Zusammenhang insbesondere auf die weiteren Ausführungen im Abschnitt Berechnungsverfahren, dort zum Punkt Reflexionen verwiesen.

Die Ansprüche 9 bis 12 betreffen Verfahren, die auf der Basis der erfindungsgemäß bestimmten meteorologischen Zusatzdämpfungen die erfindungsgemäße Überlagerung des Schalls ermitteln.

Der Anspruch 13 kennzeichnet ein Verfahren zur Ermittlung und graphischen Darstellung der räumlichen Verteilung der erfindungsgemäß ermittelten Schalldruckquadrate.

Dabei dienen diese Verfahren zur Ermittlung der Überlagerung des Schalls unter Verwendung mit Hilfe des Verfahrens nach Anspruch 8 bestimmter meteorologischer Zusatzdämpfungen **$dM_k$** unter Berücksichtigung von Turbulenzen, wobei zusätzlich der Schallpegel L am Ort Q bestimmt wird und die Überlagerung derart ermittelt wird, daß die jeweilige Amplitude **$A_k$** des jeweiligen Schallstrahles durch

$$A_k \cdot \sqrt{dM_k} \cdot e^{i\varphi_t}$$

substituiert wird, statt nur mit **$A_k$** angenommen zu werden, wobei

hier vorstehend **$A_k$** die Amplitude unter Berücksichtigung der bekannten, durch Abstand, Luftabsorption, Bewuchs und Bebauung sowie durch Abschirmung hervorgerufenen Dämpfungen mit Ausnahme des bisher bekannten Bodenmeterologiemaßes darstellt,

i für die imaginäre Einheit steht,

$\varphi_t$ die Phasenfluktuation zwischen zwei Strahlwegen ist, die zwischen einem Minimalwert $-\Delta\chi_i$ und einem Maximalwert $+\Delta\chi_i$ zeitlich zufällig verteilt ist, und

durch Integration über einen Zeitraum T das mittlere Schalldruckquadrat $\widetilde{P}_{.A_{ges.}}$ durch

$$\widetilde{P}_{A_{ges.}} = \sum_{k=1}^{n} A_k^2 + 2 \cdot \sum_{k=1}^{n} \sum_{p=k+1}^{n} A_k \cdot A_p \cdot \cos\psi_{kp} \cdot \frac{\sin\Delta\chi_{kp}}{\Delta\chi_{kp}}$$

mit

$$\Delta\chi_{kp} = wt_{kp} \cdot 2\pi \cdot f / C_o$$

bestimmt wird, wobei

$\psi$ der Phasenunterschied ist, der durch die Zeitdifferenz bestimmt ist, die der Schall von der Quelle Q zum Aufpunkt A über die unterschiedlichen Schallwege k und p benötigt,

$\Delta\chi_{kp}$ die maximale Phasenfluktuation durch Turbulenz,

$w_{tkp}$ die maximale Wegdifferenz durch Turbulenz

f die Frequenz, und

$C_o$ die Geschwindigkeit des Schalls in der Höhe 0 ist, sowie

hier vorstehend die Amplituden $A_k$ bereits unter Berücksichtigung der ermittellen $dM_k$ wie angeführt substituiert sind.

Auch können Verfahren zur Ermittlung der Überlagerung des Schalls unter Verwendung mit Hilfe des Verfahrens nach Anspruch 8 bestimmter meteorologischer Zusatzdämpfungen **$dM_k$** unter Berücksichtigung von Inkohärenz so verwendet werden, daß zusätzlich der Schallpegel L am Ort Q bestimmt wird und die Überlagerung derart ermittelt wird, daß die jeweilige Amplitude $A_k$ des jeweiligen Schallstrahles durch

$$A_k \cdot \sqrt{dM_k} \cdot e^{i\varphi_t}$$

substituiert wird, statt nur mit **$A_k$** angenommen zu werden, wobei

hier vorstehend **A$_k$** die Amplitude unter Berücksichtigung der bekannten, durch Abstand, Luftabsorption, Bewuchs und Bebauung sowie durch Abschirmung hervorgerufenen Dämpfungen mit Ausnahme des bisher bekannten Bodenmeterologiemaßes darstellt,

i für die imaginäre Einheit steht,

φ$_r$ die Phasenfluktuation zwischen zwei Strahlwegen ist, die zwischen einem Minimalwert -Δχ$_i$ und einem Maximalwert +Δχ$_i$ zeitlich zufällig verteilt ist, und

durch Integration über einen Zeitraum T das mittlere Schalldruckquadrat $\tilde{P}_{A_{ges.}}$ durch

$$\tilde{P}_{A_{ges.}} = \sum_{k=1}^{n} A_k^2 + 2 \cdot \sum_{k=1}^{n} \sum_{p=k+1}^{n} A_k \cdot A_p \cdot \cos \psi_{kp} \cdot \frac{\sin \Delta \chi_{kp}}{\Delta \chi_{kp}}$$

mit

$$\Delta \chi_{kp} = \Delta l_{kp} \cdot 2\pi \cdot f / C_o$$

bestimmt wird, wobei

ψ der Phasenunterschied ist, der durch die Zeitdifferenz bestimmt ist, die der Schall von der Quelle Q zum Aufpunkt A über die unterschiedlichen Schallwege k und p benötigt,

Δχ$_{kp}$ die maximale Phasenfluktuation durch Inkohärenz,

Δl$_{kp}$ die scheinbare mittlere Wegverschiebung durch Inkohärenz, mit Δl$_{kp}$ = 4 · s · sin(Δ$_{kp}$) ist, wobei s die vertikale Abmessung der Quelle und Δ$_{kp}$ der Abstrahlwinkel zwischen zwei Strahlwegen k und p ist, sowie

f die Frequenz, und

C$_o$ die Geschwindigkeit des Schalls in der Höhe 0 ist, sowie

hier vorstehend die Amplituden A$_k$ bereits unter Berücksichtigung der ermittelten dM$_k$ wie angeführt substituiert sind.

Weiterhin können Verfahren zur Ermittlung der Überlagerung des Schalls unter Verwendung mit Hilfe des Verfahrens nach Anspruch 8 bestimmter meteorologischer Zusatzdämpfungen **dM$_k$** unter Berücksichtigung von Turbulenzen und Inkohärenz so verwendet werden, daß zusätzlich der Schallpegel L am Ort Q bestimmt wird und die Überlagerung derart ermittelt wird, daß die jeweilige Amplitude A$_k$ des jeweiligen Schallstrahles durch

$$A_k \cdot \sqrt{dM_k} \cdot e^{i\varphi_t}$$

substituiert wird, statt nur mit **A$_k$** angenommen zu werden, wobei

hier vorstehend **A$_k$** die Amplitude unter Berücksichtigung der bekannten, durch Abstand, Luftabsorption, Bewuchs und Bebauung sowie durch Abschirmung hervorgerufenen Dämpfungen mit Ausnahme des bisher bekannten Bodenmeterologiemaßes darstellt,

i für die imaginäre Einheit steht,

φ$_t$ die Phasenfluktuation zwischen zwei Strahlwegen ist, die zwischen einem Minimalwert -Δχ$_i$ und einem Maximalwert +Δχ$_i$ zeitlich zufällig verteilt ist, und

durch Integration über einen Zeitraum T das mittlere Schalldruckquadrat $\tilde{P}_{A_{ges.}}$ durch

$$\tilde{P}_{A_{ges.}} = \sum_{k=1}^{n} A_k^2 + 2 \cdot \sum_{k=1}^{n} \sum_{p=k+1}^{n} A_k \cdot A_p \cdot \cos \psi_{kp} \cdot \frac{\sin \Delta \chi_{kp}}{\Delta \chi_{kp}}$$

mit

$$\Delta \chi_{kp} = \sqrt{w_{tkp}^2 + \Delta l_{kp}^2} \cdot 2\pi \cdot f / C_o$$

bestimmt wird, wobei

$\psi$ der Phasenunterschied ist, der durch die Zeitdifferenz bestimmt ist, die der Schall von der Quelle Q zum Aufpunkt A über die unterschiedlichen Schallwege k und p benötigt,

$\Delta\chi_{kp}$ die maximale Phasenfluktuation durch Turbulenz und Inkohärenz,

$w_{tkp}$ die maximale Wegdifferenz durch Turbulenz,

$\Delta l_{kp}$ die scheinbare mittlere Wegverschiebung durch Inkohärenz, mit $\Delta l_{kp} = 4 \cdot s \cdot \sin(\Delta_{kp})$ ist, wobei s die vertikale Abmessung der Quelle und $\Delta_{kp}$ der Abstrahlwinkel zwischen zwei Strahlwegen k und p ist, sowie,

f die Frequenz, und

$C_o$ die Geschwindigkeit des Schalls in der Höhe 0 ist, sowie

hier vorstehend die Amplituden $A_k$ bereits unter Berücksichtigung der ermittelten $dM_k$ wie angeführt substituiert sind.

Auch kann ein Verfahren zur Ermittlung der Überlagerung des Schalls unter Verwendung mit Hilfe des Verfahrens nach Anspruch 8 bestimmter meteorologischer Zusatzdämpfungen dienen, wobei zusätzlich der Schallpegel L am Ort Q bestimmt wird und aus den so bestimmten Größen das mittlere Schalldruckquadrat $\tilde{p}_{A_{ges.}}$ bestimmt wird.

Vorteilhaft ist auch ein Verfahren zur Ermittlung der Verteilung der mittleren Schalldruckquadrate $\tilde{p}_{A_{ges.k}}$ unter Verwendung mit Hilfe des Verfahrens nach einem der Ansprüche 9 bis 12 bestimmter meteorologischer Zusatzdämpfungen $dM_i$ des Schalls einer Schallquelle am Orte Q in einem bestimmten Gebiet im Freien, derart, daß in diesem Gebiet Aufpunktorte $A_k$ in einem bestimmten Raster gewählt werden und

(i)

a) für jeden der gewählten Aufpunkte $\mathbf{A_k}$ das zugehörige mittlere Schalldruckquadrat $\tilde{p}_{A_{ges.k}}$ für den von Q ausgehenden Schall bestimmt wird,

b) jedes der bestimmten mittleren Schalldruckquadrate $\tilde{p}_{A_{ges.k}}$ mit den Koordinaten des jeweils zugehörigen Aufpunktes $\mathbf{A_k}$ in einem Speicher abgelegt wird, und

(ii) hiernach dann die meteorologischen mittleren Schalldruckquadrate $\tilde{p}_{A_{ges.k}}$ aus dem Speicher ausgelesen werden und mit Hilfe eines graphischen Ausgabegerätes entprechend der räumlichen Verteilung ihrer Aufpunkte $\mathbf{A_k}$ und entsprechend dem Wert der jeweiligen bestimmten mittleren Schalldruckquadrate $\tilde{p}_{A_{ges.k}}$ graphisch dargestellt werden.

Die Ansprüche 14 bis 16 schließlich kennzeichnen Vorrichtungen zur Durchführung der erfindungsgemäßen Verfahren. Vorteilhafterweise können die Verfahren nach der vorliegenden Erfindung auf Computern durchgeführt werden, die Erfassungseinrichtungen für die notwendigen Ausgangswerte und vorzugsweise auch Ausgabeeinrichtungen zur graphischen Darstellung der erhaltenen Ergebnisse aufweisen.

Dabei ist die Vorrichtung zur Durchführung des Verfahrens nach Anspruch 13 vorzugsweise dadurch gekennzeichnet, daß sie zusätzlich noch einen Plotter oder graphischen Drucker oder graphischen Bildschirm aufweist, auf dem die aus dem Speicher ausgelesenen mittleren Schalldruckquadrate $\tilde{p}_{A_{ges.k}}$ entprechend der räumlichen Verteilung ihrer Aufpunkte $\mathbf{A_k}$ und entsprechend ihrer jeweiligen Werte graphisch dargestellt werden können und auch einen Speicher in den ein Programm, daß nach der in dem Verfahren enthaltenen Berechnung arbeitet, geladen ist.

Alle Verfahren basieren auf dem gleichen hier gefundenen Lösungsprinzip, nämlich, daß der Schallstrahl in etwa parabolisch verläuft und das technische Umsetzung dieser naturwissenschaftlichen Erkenntnis eine weitaus bessere Bestimmung der Schallausbreitung im Freien ermöglicht, als dies bislang möglich ist.

Es kann gezeigt werden, daß $D_{BM}$ primär durch die nicht linearen Änderungen der Schallgeschwindigkeit mit der Höhe in der Atmosphäre und durch den am Boden reflektierten Schall zu erklären ist, wobei neben der Absorption am Boden auch die Ausbildung der Bodenwelle als Oberflächenwelle eine wichtige Rolle spielt. Es wird desweiteren gezeigt, daß resultierende Interferenzeffekte für vertikal ausgedehnte Quellen zur Erklärung der beobachteten Bodenmeteorologiemaße für größere Entfernungen von untergeordneter Bedeutung für den Gesamtpegel bei der Schallausbreitung in der Mitwindrichtung sind. Unter resultierenden Interferenzeffekten werden hier die mittleren, über alle Frequenzen eines Spektrums auftreten-den Pegelreduzierungen durch Interferenz verstanden. Andererseits wird gezeigt, daß für bodennahe Quellen mit geringer vertikaler Ausdehnung Interferenzeffekte das dBM (=$D_{BM}$) wesentlich mitbestimmen können.

Dazu wird ein parabolisches Schallstrahlenmodell entwickelt, das auf klimatologischen Werten aufbaut, wie sie bei der Berechnung der Ausbreitung von Kaminfahnen benutzt werden (Technische Anleitung zur Reinhaltung der Luft - TA Luft vom 27.02.1986 (GMB1. S.95, 202) 1. BImSchVwV) und auf gemessene Werte der Bodenimpedanz zurückgegriffen.

Auf diesem Modell basieren die durch die vorliegende Erfindung gelehrten Verfahren und Vorrichtungen. Zu deren Verständnis bedarf es jedoch weitreichender Ausführungen:

Es werden zunächst die meteorologischen Einflüsse auf die Schallgeschwindigkeit anhand des in der TA Luft enthaltenen Ausbreitungsmodells für luftfremde Stoffe abgeleitet. Im weiteren wird ein parabolisches Strahlenmodell angesetzt und gezeigt, daß der nicht lineare Aufbau der Atmosphäre bezüglich der Temperatur und Windgeschwindigkeit eine Zusatzdämpfung bewirkt. Hiernach wird das Ergebnis auf Strahlen übertragen, die am Boden reflektiert werden. Danach wird der Reflexionsfaktor auf der Basis von Ansätzen aus der Literatur übernommen. Um die Phasenlage der am Boden reflektierten Strahlen zu berücksichtigen, wird auf die durch Kaustiken hervorgerufene Phasendrehung eingegangen. Danach wird die Wirkung der atmosphärischen Turbulenz für unterschiedliche Ausbreitungsbedingungen erläutert und dargelegt, wie diese nach dem TA-Luft-Modell berücksichtigt werden kann. Dies schließt die Berücksichtigung von aus der Optik bekannten Prinzipien bezüglich der Kohärenz der Strahlung einer inkohärenten Quelle ein. Hiernach werden die erfindungsgemäß bestimmten Bodenmeteorologiemaße mit den Ansätzen der VDI 2714 verglichen. Dabei steht insbesondere die Frage im Vordergrund, welche Witterungsbedingungen der VDI 2714 zugrundeliegen und an welchen Stellen signifikante Abweichungen auftreten. Die aus den Modellansätzen folgenden Gleichungen für das Meteorologiemaß werden abgeleitet und die erforderlichen numerischen Lösungsansätze dargestellt, die eine technische Umsetzung der gefundenen Lösungen erlauben. Für die Bodenreflexion wird dabei ebenfalls eine vereinfachte numerische Lösung des Problems wiedergegeben.

Aufbauend auf dem vorgenannten Vergleich wird ein allgemeines klimatologisches Verfahren zur Bestimmung der Schallausbreitung abgeleitet, das es in seiner technischen Anwendung erlaubt, die Schallausbreitung auch für andere meteorologische Situationen als die, die der VDI 2714 zugrundeliegen, zu bestimmen, d.h. das Verfahren nebst seinen zugehörigen Vorrichtungen erlauben es, Windrichtung, Windgeschwindigkeit und die atmosphärische Stabilität zu berücksichtigen.

## 2. Klimatologische Ansätze

Die Schallgeschwindigkeit hängt von der Temperatur und der Windgeschwindigkeit in Ausbreitungsrichtung ab ohne Berücksichtigung des Luftdrucks:

$$(2.1) \qquad C = 331.4 \sqrt{1 + \frac{t}{273}} + \upsilon \cdot \cos\varphi$$

wobei $\upsilon$ die Windgeschwindigkeit, $\varphi$ der Winkel zwischen Ausbreitungsrichtung und Windrichtung und t die Temperatur in $°C$ ist.

In B. Hallberg, C. Larson, S. Israelson, "Numerical ray tracing in the atmosphere surface layer, I. Acoustic Soc. Am. 83 (6), 88, sowie in H. Klug, "Schallimpulse als Meßsonde zur Bestimmung meteorologischer Einflüsse auf die Schallausbreitung", Dissertation 10.01.90, Universität Oldenburg und W. Huismann, "Sound propagation over vegetation covered ground", Dissertation 19.11.90, Universität Nijmegen sind Modellansätze für den Windgeschwindigkeits- und Temperaturverlauf mit der Höhe dargestellt, die auf der Ähnlichkeitstheorie von Monin-Obukhov aufbauen. Dabei wird angestrebt, für eine gemessene Situation diese Verläufe anhand von Profilmessungen physikalisch optimal anzupassen. Bei der vorliegenden Erfindung stellt sich die Frage, welche Profile im üblichen klimatologischen Ablauf auftreten können bzw. welche Informationen dazu zur Verfügung stehen. Dabei kann auf einen in der Luftreinhaltung zur Berechnung der Ausbreitung von luftfremden Stoffen benutzten Ansatz zurückgegriffen werden, wie er in der Technischen Anleitung zur Reinhaltung der Luft beschrieben ist.

Der Zusammenhang zwischen Windgeschwindigkeit und Höhe ist nach TA Luft

$$(2.2) \qquad \upsilon(z) = \upsilon_o \left(\frac{Z}{Z_o}\right)^m$$

wobei $\upsilon_o$ die Windgeschwindigkeit in der Höhe $z_o$ ist, die in der Regel mit 10 m festgelegt wird. m ist eine Konstante, die von der atmosphärischen Stabilität abhängt. Nach TA Luft nimmt sie die folgenden Werte an:

Tab. 2.1:

| Stabilitätsklassen nach TA Luft und der Stabilitätsfaktor m | | |
|---|---|---|
| **m** | **Stabilitätsklasse** | |
| 0.41 | I | (sehr stabil) |
| 0.37 | II | (stabil) |

Tab. 2.1: (fortgesetzt)

| Stabilitätsklassen nach TA Luft und der Stabilitätsfaktor m | | |
|---|---|---|
| m | Stabilitätsklasse | |
| 0.28 | III.1 | (neutral) |
| 0.22 | III.2 | (neutral) |
| 0.20 | IV | (labil) |
| 0.09 | V | (sehr labil) |

Die Häufigkeit, in der die Windrichtung und Windgeschwindigkeit in den 6 Stabilitätsklassen auftreten, stehen für ein Raster von 30 x 30 km für Deutschland beim Deutschen Wetterdienst abrufbar zur Verfügung. Ähnliche Modelle stehen in ganz Europa, so in Frankreich mit den Pasquill-Klassen oder in Großbrittanien mit den sogenannten Turner Klassen zur Verfügung. Das hier vorliegende erfindungsgemäße Verfahren ist somit in seiner Anwendung nicht auf Deutschland beschränkt, sondern kann überall dort, wo ein System ähnlich der TA Luft erstellt ist verwendet werden. Dies ist für Europa zur Zeit bereits gegeben. Die Stabilitätsklassen I und II beschreiben stabile Wetterlagen mit Bodeninversionen, die Klassen IV und V labile Wetterlagen mit erwärmten Boden, d.h. bei Sonneneinstrahlung. Die Klassen III.1 und III.2 beschreiben den Übergang zwischen stabilen und labilen Wetterlagen.

Nach einer Veröffentlichung von G.Manier, "Ausbreitungsklassen und Temperaturgradienten", Meteorologische Rundschau 28, 6-11 (März 75) zur TA Luft kann zusätzlich anhand der Stabilitätsklasse der Temperaturgradient angegeben werden, der in der Regel als Temperaturänderung zwischen 0 und 100 m angegeben wird. Unterstellt man zur Vereinfachung, daß die Temperatur der gleichen Höhenabhängigkeit folgt, wie der Wind, dann kann G1. (2.1) wie folgt geschrieben werden:

$$(2.3) \qquad C(z) = (\upsilon_o \cdot \cos\varphi + dtm)\left(\frac{z}{z_o}\right)^m + C_o$$

wobei dtm der folgenden Tabelle entnommen werden kann:

Tab. 2.2:

| Stabilitätsklassen nach TA Luft, der Temperaturfaktor dtm und $C_o$ der Schallgeschwindigkeit am Boden | | |
|---|---|---|
| dtm | Stabilitätsklasse | |
| 1.07 | I | (sehr stabil) |
| 0.47 | II | (stabil) |
| 0 | III.1 | (neutral) |
| -1.1 | III.2 | (neutral) |
| -1.45 | IV | (labil) |
| -2.76 | V | (sehr labil) |

Die Vereinfachung bezüglich des Temperaturverlaufs wird sich in der Regel nur bei niedrigen Windgeschwindigkeiten auswirken und ist ausschließlich für den Fall der Windstille relevant. Windstillen in 10 m Höhe treten selten auf. Die Ausbreitungsklassenstatistik nach TA Luft rechnet Windstillen auf Zeiten mit Windgeschwindigkeiten von 1 m/s um, d.h. im Kontext der TA-Luft wird Windstille nicht getrennt berücksichtigt.

Neben den obigen Zusammenhängen liefert die TA Luft auch Hinweise auf die Turbulenz der Atmosphäre, d.h. sie gibt an, mit welcher Wahrscheinlichkeit ein aus einem Schornstein heraustretendes Volumen luftfremder Stoffe durch die Turbulenz quer zur Ausbreitungsrichtung und in Ausbreitungsrichtung abgelenkt wird. Damit kann eine mittlere zu erwartende Wegabweichung auch für den sich wesentlich schneller ausbreitenden Schall abgeschätzt werden. Die mittlere Wegabweichung eines Luftpakets aus einem Schornstein wird durch die Faktoren $\sigma_x$, $\sigma_y$ und $\sigma_z$ (horizontale und vertikale Ausbreitungsparameter nach TA Luft) beschrieben. Sie sind wie folgt definiert:

$$(2.4) \qquad \sigma_x = F \cdot (r)^{tr} \quad \sigma_z = G \cdot (r)^{gr} \text{ und } \sigma_y = \sigma_x$$

wobei r der Abstand ist. Die Faktoren F, G, tr und gr sind tabelliert in der Technischen Anleitung zur Reinhaltung der Luft - TA Luft vom 27.02.1986 (GMBI. S.95, 202) 1. BImSchVwV.

In einer Entfernung r ergibt sich eine mittlere Wegabweichung $\bar{s}$

$$(2.5) \qquad \overline{s(r)} = \sqrt{\sigma_x^2 + \sigma_y^2 + \sigma_z^2 + r^2} - r$$

Die Zeit t, in der die Wegstrecke $\bar{s}$ zurückgelegt wird, ergibt sich aus

$$t = \frac{r}{\upsilon}.$$

Daraus folgt die mittlere, der Windgeschwindigkeit zufällig durch Turbulenz überlagerte Geschwindigkeit $\bar{\upsilon}$

$$(2.6) \qquad \bar{\upsilon} = \frac{\bar{s}(r)}{t} = \frac{\bar{s}(r) \cdot \upsilon}{r}$$

Bei einer Windgeschwindigkeit von $\upsilon$=1 m/s führt dies bei 100 m Entfernung zu Werten für die mittlere Geschwindigkeit der Turbulenz $\bar{\upsilon}$ von

$$0.032 \leq \bar{\upsilon} \leq 0.386 \text{ m/s}$$

je nach Wetterlage. Bezogen auf die mögliche Varianz des Weges einer Schallwelle $w_t$ ergibt sich je nach Stabilität bei ca. 3 s Ausbreitungsdauer (1000 m)

$$0.1 \leq w_t \leq 1.2 \text{ m}$$

d.h. die Turbulenz der Atmosphäre kann zu mittleren Wegabweichungen zwischen 0.1 m und 1.2 m bei 1000 m Abstand bei einer Windgeschwindigkeit $\upsilon_o$=1m/s führen, bei 3 m/s treten entsprechend höhere Werte auf. Ab ca. 6 m/s Windgeschwindigkeit nimmt die Turbulenz nicht mehr zu.

Verallgemeinert ergibt sich die mittlere Wegabweichung $w_t$ einer Schallwelle zu

$$(2.7) \qquad w_t = \frac{\bar{s}(r) \cdot \upsilon}{c}$$

wobei c die Schallgeschwindigkeit ist.

Um $w_t$ zu parametrisieren, wird als Proportionalitätsfaktor das Turbulenzmaß $t_o$ eingeführt:

$$(2.8) \qquad w_t = t_D \cdot \frac{s(r) \cdot \upsilon}{c}$$

**3. Schallstrahlenmodelle**

Der Ansatz des Schallstrahlenmodells beruht auf dem Fermatischen Prinzip, das besagt, daß eine Schallwelle, die sich von einem Quellenpunkt A nach B ausbreitet, sich den Weg sucht, der bezüglich des Zeitablaufs ein Minimum hat. Die Zeit T, mit der der Schall von der Quelle $(x_q, h_q)$ zum Aufpunkt $(x_a, h_a)$ gelangt, ist durch das Linienintegral

$$(3.1) \quad T = \int_{x_q}^{x_a} \frac{\sqrt{1 + z'^2}}{c(z)} \cdot dx$$

bestimmt, wobei z die Höhe des Strahls als Funktion des Weges x beschreibt und z' dessen erste Ableitung.

Dies führt, etwa nach A. Pierce "Acoustics, An introduction to its physical principles and application" zu der folgenden Differentialgleichung z zweiter Ordnung für z:

$$(3.2) \quad z'' = -\frac{\left(1 + z'^2\right)}{c(z)} \cdot \frac{\partial c(z)}{\partial z}$$

wobei der Krümmungsradius R(z) des Schallstrahls an der Stelle z durch

$$(3.3) \quad R(z) = c(z)\left(\frac{\partial \cdot c(z)}{\partial \cdot z}\right)^{-1}$$

gegeben ist.

Mit der Gleichung (2.3) erhält man:

$$(3.4) \quad R(z) = \frac{C_o \cdot z_o^{\,m}}{m \cdot (\upsilon_o \cos\varphi + dtm) \cdot z^{m-1}}$$

Für z=0 wird R=∞. Das bedeutet, daß im Grenzfall bei streifendem Einfall am Boden die Krümmung des Schallstrahls unendlich würde. Geht man davon aus, daß am Boden der Wind eine endliche Geschwindigkeit beibehält, dann tritt diese Singularität nicht mehr auf. Die kann durch einen weiterer Parameter $h_v$ erreicht werden. Die Schallgeschwindigkeit ergibt sich dann zu

$$(3.5) \quad c(z) = c_o + (\upsilon_o \cos \varphi + dtm) \cdot \left(\frac{z + h_v}{z_o}\right)^m$$

wobei die Höhe der Grenzhöhenparameter $h_v$ von der Stabilitätsklasse abhängen kann. Mit dem Parameter $h_v$ kann eine verbesserte Anpassung an thermodynamisch begründete Temperaturen und Windgeschwindigkeitsverläufe mit der Höhe erreicht werden (siehe hierzu beispielsweise H. Klug, "Schallimpulse als Meßsonde zur Bestimmung meteorologischer Einflüsse auf die Schallausbreitung", Dissertation 10.01.90, Universität Oldenburg).

$h_v$ wird hier in der Regel mit 0.1 m angenommen und beschreibt anschaulich, daß am Boden noch eine endliche Strömung vorhanden ist bzw. daß die Änderung der Temperatur endlich ist. Damit wird vermieden, daß der reziproke Krümmungsradius divergieren kann.

Die Differentialgleichung (3.2) kann für z numerisch durch stückweise Integration berechnet werden. Da die Höhenabhängigkeit der Schallgeschwindigkeit nach Gl. (3.5) schon erheblichen Vereinfachungen unterworfen wurde, ist es möglich, die Gl. (3.2) ohne Informationsverlust durch einen Näherungsansatz zu lösen.

Üblicherweise wird in der Akustik mit geradlinigen Strahlen gerechnet. Eine andere hier nun überraschend gefundene Möglichkeit besteht darin, die Abhängigkeit der Schallgeschwindigkeit von der Höhe mittels eines parabolischen Terms zu berücksichtigen.

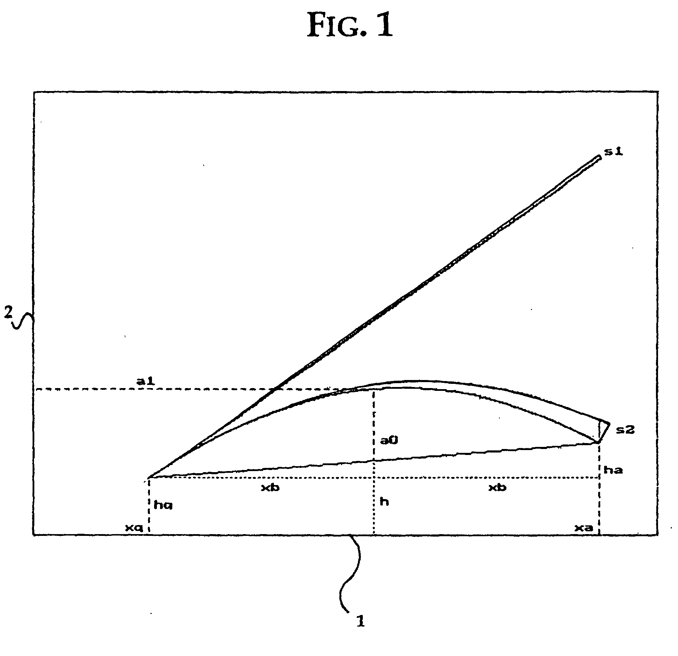

Dies führt zu dem folgenden Ansatz für den Verlauf eines Schallstrahls von der Quelle zum Aufpunkt (siehe Fig.1):

$$(3.6) \quad z = a_o \cdot \left(1 - \frac{(x - a_1)^2}{x_b^{\,2}}\right) + b_1 \cdot (x - a_1) + h$$

mit

$$(3.7) \qquad a_1 = 0.5(x_q + x_a)$$

$$(3.8) \quad b_1 = \frac{(h_a - h_q)}{x_a - x_q}$$

$$(3.9) \qquad x_b = 0.5\,(x_a - x_q)\ ,$$

und

$$(3.10) \qquad h = 0.5\,(h_a + h_q).$$

Die Faktoren $a_1$, $b_1$, $x_b$ und h werden allein durch den Quellenpunkt und den Aufpunkt beschrieben. $a_0/x_b^2$ beschreibt die zweite Ableitung, die als konstant angenommen wird, wobei $a_o$ bei größeren Entfernungen die maximale Elevation des Strahls über h beschreibt bzw. die minimale Elevation für negative Krümmungsradien.
Der obige Ansatz gemäß Gl.(3.6) führt mit $x = x' - a_1$ zu der folgenden Bestimmungsgleichung für $a_o$:
mit

$$\bar{b} = \left(b_1 - \frac{\alpha_o \cdot 2 \cdot x}{x_b^2}\right)^2$$

und

$$\gamma = \frac{c_o \cdot Z_o^{\,m}}{m \cdot (v_o \cdot \cos\varphi + dtm)}$$

$$(3.11) \quad a_o = \frac{x_b^2 \cdot \left(1 + \bar{b}\right)}{2 \cdot \gamma} \cdot \left(a_o\left(1 - \frac{x^2}{x_b^2}\right) + b_1 \cdot x + h\right)^{m-1}$$

wobei $x_a$ und $x_q$ so gewählt werden, daß $a_1 = 0$ ist. Ist $x_b \gg |h_a - h_q|$, kann in nullter Näherung der zweite Term in $\bar{b}$ vernachlässigt und $\bar{b} = b_1^2$ gesetzt werden; $b_1 x$ wird im Mittel über den Gesamtweg gegenüber h vernachlässigt
Die Gleichung (3.11) kann jeweils nur für einen Wert von x bzw. β erfüllt werden, wobei β wie folgt definiert ist:

$$(3.12) \qquad \beta = 1 - \frac{x^2}{x_b^2}$$

Damit erhält man:

$$(3.13) \quad a_o = \frac{x_b^2 \cdot \left(1 + \bar{b}\right)}{2\gamma} \cdot \left(a_o \cdot \beta \pm b_1 \cdot x_b \cdot \sqrt{1 - \beta} + h\right)$$

oder

$$(3.14) \quad a_o = \frac{x_b{}^2 \cdot \left(1 + \vec{b}\right)}{2\gamma} \left(a_o \beta + \bar{h}\right)$$

mit

$$(3.15) \quad \bar{h} = h \pm b_1 \cdot x_b \cdot \sqrt{1-\beta}$$

Wird $\beta = 1$ gewählt, erfolgt die Anpassung im Scheitelpunkt des parabolischen Strahls. Ist $\beta = 0$ erfolgt die Anpassung in der Höhe h. Würde $\beta < 0$ gewählt, würde die Anpassung außerhalb des Bereiches zwischen Anfangs- und Endpunkt erfolgen. Es stellt sich daher die physikalische Frage, ob es einen bezüglich der Fragestellung optimalen Anpassungspunkt gibt.

Der parabolische Lösungsansatz der Differentialgleichung (3.2) impliziert, daß für jeweils einen bestimmten Schallstrahl die rechte Seite der Gl. (3.2) konstant ist. Daraus leitet sich ab, daß der Wert der rechten Seite durch den Mittelwert über den Strahlenverlauf beschrieben wird:

$$(3.16) \quad \overline{U} = \frac{1}{2x_B} \int_{-x_B}^{+x_B} \frac{c(z)'}{c(z)} \cdot dx$$

wobei U(z) der Kehrwert des Krümmungsradius' R(z) ist (siehe Gl.(3.3)) und $a_1 = 0$ gewählt ist. Mit Gl.(3.17) erhält man:

$$(3.17) \quad \overline{U} = \frac{\left(1 + b_1{}^2\right)}{2x_B \cdot \gamma} \int \left(a_o\left(\beta + \bar{h}\right) + b_1 \cdot x + h\right)^{m-1} \cdot dx$$

Der Parameter $\beta$ kann nur auf der Basis der Gl. (3.11) bestimmt werden:

$$(3.18) \quad \overline{U} = \frac{1}{\gamma} \cdot (a_o \cdot \beta + \bar{h})^{m-1}$$

Entwickelt man den Integranten in Gl. (3.17) für $b_1 = 0$ bis zur ersten Ordnung, dann ergibt sich

$$\beta = 2/3$$

oder die Anpassung erfolgt für die Stellen

$$x = \pm x_B \sqrt{1 - \beta} = \pm x_B / \sqrt{3}$$

unabhängig von der meteorologischen Situation.

Numerische Lösungen der Gl. (3.17) liefern für Mitwind- und Gegenwindsituation ($\gamma$ positiv oder $\gamma$ negativ) unterschiedliche Werte für $\beta$.

Für $\gamma > 0$ $\beta \approx 0.5$ und $\gamma < 0$ $\beta \approx 0.75$, d.h. $\beta$ wird für $\gamma < 0$ größer 1/(2-m), für $\gamma > 0$ kleiner 1/(2-m) mit der Konsequenz, daß ein Halbschatten mit zwei Strahlen entsteht.

Mit Meteorologiemaß dM wird im folgenden die Zunahme bzw. Abnahme des Schallpegels eines Schallstrahls durch Fokussierung bzw. Defokussierung des Schallstrahls bezeichnet.Bei, B. Hallberg, C. Larson und S. Israelson wird dies mit "geometric intensity" bezeichnet. In Figur 1 sind die durch zwei Strahlen gebildeten Öffnungen für den Fall konstanter Schallgeschwindigkeit und nicht konstanter Schallgeschwindigkeit dargestellt. Die Strecke $s_1$ gibt die Öffnung des Strahls bei konstanter und $s_2$ bei nicht konstanter Schallgeschwindigkeit an. Das Meteorologiemaß ergibt sich aus:

$$(3.19) \qquad dM = 10 \log s_1/s_2$$

Daraus folgt für kleine Winkel des Strahls gegenüber der Ebene:

$$(3.20) \qquad dM = 10\log\left|x_B \cdot z_q^{(2)} / z_a^{(1)}\right|$$

mit

$$z_q^{(2)} = \frac{\partial}{\partial x_B}\left(\frac{\partial}{\partial x} z(x)\Big|_{x=xq}\right)$$

und

$$z_a^{(1)} = \frac{\partial \cdot z(x)}{\partial \cdot x}\Big|_{x=xa}.$$

Wie im Anhang später noch detailliert abgeleitet wird, führt der parabolische Ansatz Gl. (3.20) zu:

$$(3.21) \quad dM = 10\log\left|\left(\frac{h}{a_o} + \beta \cdot m\right) / \left(\frac{h}{a_o} + \beta \cdot (2-m)\right)\right|$$

Die Schattenzone wird durch die Bedingung

$$h = -a_o$$

beschrieben. Für negative Krümmung $a_o < 0$ wird sowohl das Vorzeichen des Nenners als auch des Zählers in Gl. (3.22) negativ.

Im Fall m=0, d.h. bei konstanter Schallgeschwindigkeit, wird dM Null, da für m gegen 0 auch $a_o$ gegen Null geht, d.h. die Krümmung verschwindet, die Schallstrahlen sind gerade. Für m=1 verschwindet dM ebenfalls. Dies ist der Fall, bei dem sich die Schallgeschwindigkeit mit der Höhe konstant ändert und die Strahlen nach Gl. (3.2) kreisförmig werden.

Negative Werte im Betrag von Gl. (3.21) und Kaustiken sind ausgeschlossen, wenn

$$(3.22) \qquad \beta \leq \frac{1}{2-m}$$

gewählt wird.

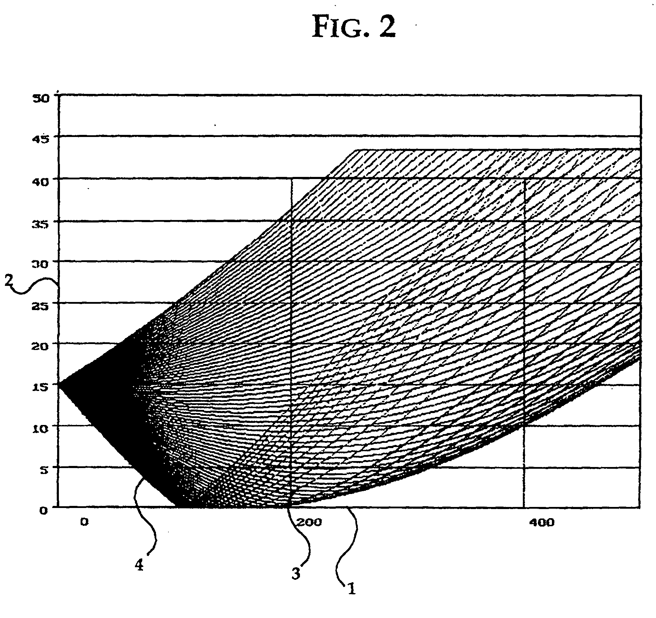

Aus den durch schrittweise Integration berechneten Schallstrahlen bei Ausbreitung in Gegenwindrichtung (siehe Figur 2) erkennt man, daß zwischen der Grenze der Schattenzone und dem Bereich, der noch durch Reflexionen am Boden getroffen werden kann, eine Zone liegt, die durch einen Direktstrahl und einen Strahl durch eine Kaustik erreicht werden kann (zur Erläuterung des Begriffes "Kaustik" siehe den im weiteren Text folgenden Abschnitt Kaustik). In Figur 2 ist diese "Halbschattenzone", die rechts vom ersten, am Boden reflektierten Strahl liegt, dargestellt. Für Werte von $\beta > 1/(2-m)$ liefert die parabolische Näherung entsprechend sowohl einen Direktstrahl als einen zweiten Strahl, der durch eine Kaustik verläuft. Dies spiegelt Gl. (3.22): Der Wert im Betrag wird negativ für $a_o$ nahe bei -h, wenn $\beta > 1/(2-m)$ ist. Für $\beta = 1/(2-m)$ wird bei $a_o = -h$ dM $= \infty$. Für Werte von $\beta < 1/(2-m)$ bleibt dM endlich, Kaustiken treten nicht mehr auf. Eine detaillierte Analyse bestätigt diesen Befund (siehe auch im Abschnitt Berechnungsverfahren unter Punkt Berechnungsverfahren für $a_0$, resp. $a_{0i}$).

B. Hallberg, C. Larson und S. Israelson berichten in "Numerical ray tracing in the atmosphere surface layer", I. Acoustic Soc. Am. 83 (6), 88 für Messungen in der Halbschattenzone, daß die Resultate eher der Situation in der Schattenzone entsprechen, d.h. die Phasenumkehr durch Kaustiken im zweiten Direktstrahl führt zu Interferenzauslöschung. Gleichzeitig wird auf den Umstand hingewiesen, daß geringe Änderungen der Profile des Winds und der Temperatur zu erheblichen Änderungen der Strahlen führen. Diese Gesichtspunkte - und die einfachere Handhabung - führen dazu, $\beta$ kleiner gleich $1/(2\text{-}m)$ zu wählen, damit die Halbschattenzone gerade verschwindet und dennoch hohe Fokussierungen auftreten können.

Das bedeutet, daß die Änderung der Schallgeschwindigkeit mit der Höhe in Bodennähe bei Gegenwind etwas schwächer berücksichtigt wird, als dies nach der exakten numerischen Lösung der Gl.(3.2) erforderlich wäre. Andererseits stellt die Funktion (3.5) eine Näherung für einen mittleren Verlauf der Schallgeschwindigkeit mit der Höhe dar, von der erhebliche momentane Abweichungen bestehen können. Diese Abweichungen wirken sich auf die Ausbildung der Schattenzone und Halbschattenzone am stärksten aus und führen dazu, daß diese Zonen örtlich nicht stabil sind.

Für ein Modell, das die Schallausbreitung im Mittel über bestimmte meteorologische Situationen bei wechselnden Windrichtungen und Geschwindigkeiten beschreiben soll, erscheint ein Ansatz plausibel, der die akustische Situation in der Halbschattenzone nur näherungsweise beschreibt. Wie aus Figur 2 ersichtlich ist, erfolgt die Reflexion mit Winkeln nahe Null, d.h. wegen des Reflexionsfaktors R = -1 ist der reflektierte Strahl von einem Direktstrahl, der durch eine Kaustik läuft, in nullter Näherung nicht zu unterscheiden, d.h. es besteht kein großer Unterschied, ob die Halbschattenzone über Direktstrahlen oder Direktstrahl und Bodenreflexion beschrieben wird.

Weiter zeigen Berechnungen mit unterschiedlichen Grenzhöhen $h_v$ und niedrigen Quellenhöhen, daß für Wer-te von $h_v > 0.1$ m nur geringe Veränderungen zu beobachten sind. Die folgenden Berechnungen werden daher mit $h_v = 0.1$ m durchgeführt. Bei Quellenhöhen von 0.5 m und mehr über Grund sowie Empfangshöhe von 4 m und mehr hat die Wahl von $h_v$ kaum Einfluß auf die Ergebnisse.

### 4. Reflexion der Strahlen am Boden

Das Meteorologiemaß für den Fall der Reflexion am Boden ergibt sich unmittelbar aus Gl. (3.19) unter der Annahme, daß die Reflexion durch Zusammensetzen von zwei Strahlen mit gleichem Einfall- und Ausfallwinkel gebildet wird, deren gemeinsamer Aurpunkt bei

$$y_z = 0 \qquad \text{bzw.} \qquad y_z = h_v$$

liegt.

Daraus ergibt sich

$$(4.1) \qquad dM = 10 \log \frac{r \cdot M_1 \cdot M_2}{r_1 \cdot M_2 + r_2 \cdot M_2}$$

mit

$$M_i = \left( \frac{\overline{h_i}}{a_{oi}} + \beta \right) \Big/ \left( \frac{\overline{h_i}}{a_{oi}} + \beta(2 - m) \right)$$

und i = 1,2
wobei $\overline{h_1}$ nach Gl. (3.15) mit hi = $h_q + h_v$ und $h_v$ und $\overline{h_2}$ entsprechend mit $h_v$ und $h_2 + h_v$ berechnet wird.

$a_{o1}$ und $a_{o2}$ berechnen sich unter der Annahme, daß der Aufpunkt oder Quellenpunkt auf der Bodenhöhe bzw. auf der Höhe des Grenzhöhenparameters $h_v$ liegt. Im Widerspruch zu exakteren numerischen Lösungen liefert die Lösung nach Gl. (3.11) unterschiedlich gekrümmte Strahlen vor und nach der Reflexion. Alternativ kann auch die Bedingung eingeführt werden, daß beide Krümmungen gleich sind. Auf das Resultat hat dies nur geringen Einfluß, ist jedoch numerisch wesentlich einfacher zu handhaben. Dies ist im Abschnitt über Berechnungsverfahren unter dem Punkt Reflexionen erläutert.

### 5. Reflexionsfaktor

Bei der Reflexion am Boden tritt sowohl eine Phasendrehung als auch Absorption auf. Zur Beschreibung dieses Vorgangs haben sich die folgenden Ansätze für den Reflexionskoeffizient R und die Impedanz z bewährt (siehe hierzu auch W. Huismann, "Sound propagation over vegetation covered ground", Dissertation 19.11.90, Universität Nijmegen und I. Wempen, "Schallausbreitung über Erdboden", Bibliothek- und Informationssystem der Universität Oldenburg, 1991):

$$(5.1) \qquad R = \frac{\sin\gamma - \frac{1}{z}}{\sin\gamma + \frac{1}{z}}$$

mit

$$(5.2) \qquad z = 0.436\left(\sigma_e / f\right)^{1/2} - i\left(0.436\left(\sigma_e / f\right)^{1/2} + 19.48\left(\alpha_e / f\right)\right)$$

wobei $\gamma$ der Winkel zwischen dem Strahl und der Ebene des Bodens, z die Bodenimpedanz relativ zur Umgebungsluft, $\sigma_e$ der Strömungswiderstand in $Ns \cdot m^{-4}$, $\alpha_e$ die effektive Rate der exponentiellen Änderung der Porosität des Bodens und f die Frequenz in Herz ist. Der Ansatz geht von einem porösen, lokal reagierenden Absorber aus.

Die Reflexion am Boden kann bei größeren Abständen zum Boden auf der Basis ebener Wellen mit dem Reflexionsfaktor R beschrieben werden. Für kleinere Abstände und Höhen über dem Boden ist die Kugelcharakteristik der Ausgangswelle und der reflektierten Welle mit zu berücksichtigen. Der Reflexionsfaktor Q oder die Spiegelquellenstärke für Kugelwellen lautet;

$$(5.3) \qquad Q = R_p + (1-R_p)F(w)$$

wobei F(w) die Bodenwellenfunktion ist, die eine Funktion der numerischen Distanz

$$(5.4) \qquad w = (i(x_r/s) * (2\pi f/c))^{1/2} * (mr + 1/z)$$

mit

$$(5.5) \qquad z = x_r + iy_r$$

ist. Eine ausführliche Beschreibung dieses Formalismus findet sich bei I. Wempen, "Schallausbreitung über Erdboden", Bibliothek- und Informationssystem der Universität Oldenburg, 1991 inclusive einer Beschreibung der erforderlichen Algorithmen zur Berechnung der Bodenwellenfunktion als Funktion der numerischen Distanz w.

Für die folgende Berechnung der Absorption über Grasland wird die aus Messungen von I. Wempen abgeleitete Admittanz von Grasland herangezogen:

$$(5.6) \qquad \nu(f) = 0.027e^{-i\cdot22^\circ} + 0.1 \cdot f \cdot e^{-i\cdot77^\circ}$$

wobei die Impedanz durch

$$(5.7) \qquad z = \nu(t)^{-1}$$

gegeben ist.

In Tabelle 5.1 ist die nach Gl. 5.6 über Gl. 5.1 zu berechnende Absorption am Boden dargestellt. Zwischen 2 und 3 Grad gegenüber der Ebene wird im tieffrequenten

Bereich jeweils ein Maximum beobachtet, ab 500 Hz nimmt die Bodenabsorption mit dem Winkel zu.

Tab. 5.1:

| Abhängigkeit der Bodenabsorption vom Winkel zwischen Boden und Strahl und der Frequenz mit der Admittanz nach Gl. (5.6) | | | | | | | |
|---|---|---|---|---|---|---|---|
| Winkel Grad | Frequenzen in Hz | | | | | | |
| | 63 dB | 125 dB | 250 dB | 500 dB | 1k dB | 2k dB | 4k dB |
| 0.0 | -0.0 | -0.0 | -0.0 | -0.0 | -0.0 | -0.0 | -0.0 |
| 0.5 | -1.9 | -1.4 | -0.8 | -0.4 | -0.2 | -0.1 | -0.0 |
| 1.0 | -3.7 | -2.6 | -1.6 | -0.8 | -0.3 | -0.2 | -0.1 |
| 1.5 | -4.9 | -3.6 | -2.2 | -1.1 | -0.5 | -0.2 | -0.1 |
| 2.0 | -5.1 | -4.0 | -2.6 | -1.4 | -0.7 | -0.3 | -0.1 |
| 2.5 | -4.7 | -4.1 | -2.9 | -1.7 | -0.8 | -0.4 | -0.2 |
| 3.0 | -4.2 | -3.9 | -3.0 | -1.9 | -1.0 | -0.4 | -0.2 |
| 3.5 | -3.7 | -3.6 | -3.0 | -2.0 | -1.1 | -0.5 | -0.2 |
| 4.0 | -3.3 | -3.3 | -2.9 | -2.1 | -1.2 | -0.6 | -0.3 |
| 4.5 | -3.0 | -3.0 | -2.8 | -2.2 | -1.3 | -0.6 | -0.3 |
| 5.0 | -2.7 | -2.7 | -2.7 | -2.2 | -1.4 | -0.7 | -0.3 |
| 5.5 | -2.5 | -2.5 | -2.5 | -2.2 | -1.4 | -0.8 | -0.4 |
| 6.0 | -2.3 | -2.3 | -2.4 | -2.2 | -1.5 | -0.8 | -0.4 |
| 6.5 | -2.1 | -2.2 | -2.3 | -2.1 | -1.6 | -0.9 | -0.4 |
| 7.0 | -2.0 | -2.0 | -2.1 | -2.1 | -1.6 | -0.9 | -0.5 |
| 7.5 | -1.8 | -1.9 | -2.0 | -2.0 | -1.6 | -1.0 | -0.5 |
| 8.0 | -1.7 | -1.8 | -1.9 | -2.0 | -1.6 | -1.0 | -0.5 |

## 6. Kaustik

Die unter einem bestimmten Winkel $\vartheta$ von einer Quelle abgestrahlten Schallstrahlen können durch eine einhüllende untere Fläche, die durch r-$\Delta\vartheta$/2, und eine obere Fläche, die durch $\vartheta$+$\Delta\vartheta$/2 gegeben ist beschrieben werden. Schneidet man diese Einhüllenden mit einer vertikalen Fläche, die durch den Mittelpunkt der Quelle geht, dann ergibt sich eine obere und eine untere Grenzlinie des Strahls. Von Kaustiken wird gesprochen, wenn sich diese Linien schneiden. Da die obere Grenzlinie sich mit der unteren Grenzlinie vertauscht, ist das Durchlaufen der Kaustik mit einem 180°-Phasensprung verbunden (siehe auch: Arnold Sommerfeld, Vorlesungen über theoretische Physik, B and IV, Optik, Akademische Verlagsgesellschaft Geest & Portig K.-G., Leipzig 1959).

Unter Einfachreflexionen werden Schallstrahlen verstanden, die nach einer Reflexion am Boden am Aufpunkt auftreffen. Solange wegen eines zu geringen Abstandes zwischen Quelle und Aufpunkt oder einer zu geringen Krümmung der Schallstrahlen nur eine Reflexion am Boden auftritt, treten nach der Reflexion am Boden keine Kaustiken auf. Ab einem bestimmten Abstand werden drei Einfachreflexionen beobachtet, wobei die Reflexion in der Mitte zwischen Auf- und Sendepunkt eine Kaustik aufweist. Im Grenzfall des Übergangs heben sich wegen der in der Kaustik auftretenden Phasenumkehrung zwei Strahlen auf. Die beiden Strahlen können erst unterschieden werden, wenn sich die Auftreffpunkte bezüglich der betrachteten Wellenlänge ausreichend unterscheiden.

Kaustiken treten, wie zuvor ausgeführt und in Fig. 2 dargestellt, auch in Gegenwindrichtung im Halbschatten auf, wenn die Krümmung der Schallstrahlen ausreichend groß wird

$$\left( \beta > \frac{1}{2-m} \right),$$

ohne daß Reflexionen am Boden auftreten.

**7. Berücksichtigung der Turbulenz**

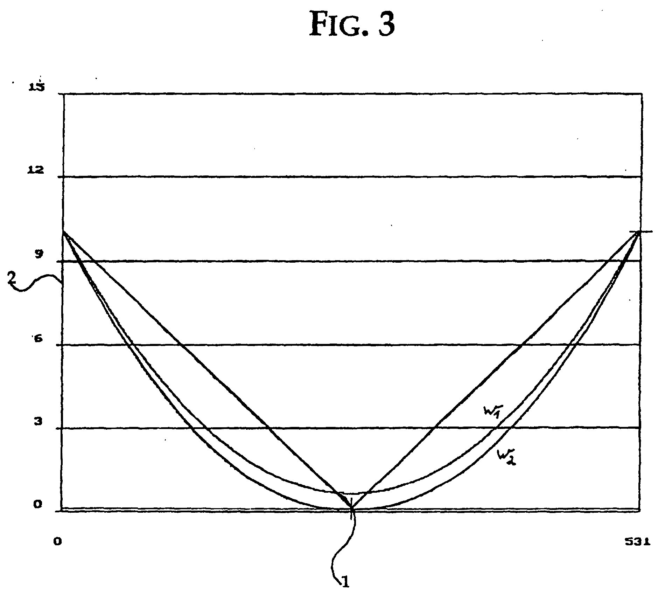

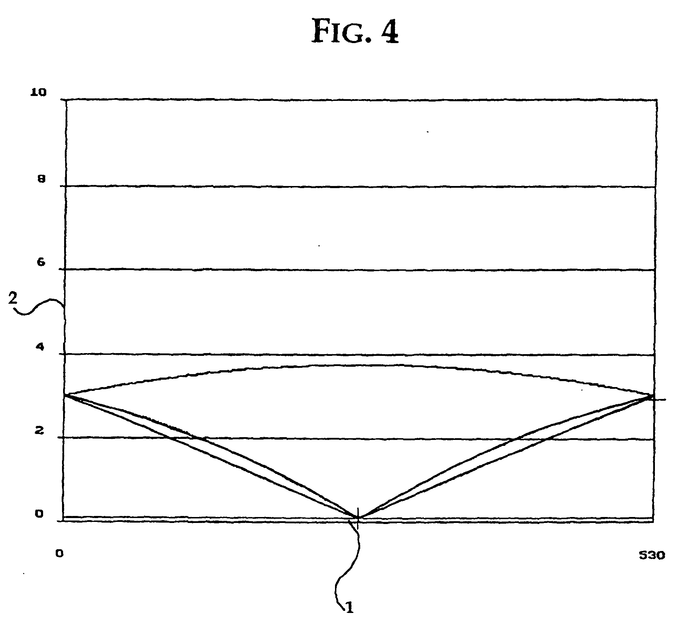

In erster Näherung kann stets davon ausgegangen werden, daß sich das Schallgeschwindigkeitsfeld so langsam ändert, daß unterschiedliche Verschiebungen zwischen den Schallstrahlen nur eintreten können, wenn diese unterschiedliche Bereiche der Atmosphäre durchlaufen. In Figur 3 ist die Gegenwindsituation und in Figur 4 eine Mitwindsituation dargestellt. Die Wegdifferenz $w_2-w_1$ beträgt sowohl für den Fall in Figur 3 als auch für den in Figur 4 jeweils 6 cm. Bei Gegenwind werden die Strahlungsverläufe sehr ähnlich. Bei Mitwind, wie in Figur 4 dargestellt, durchläuft der am Boden reflektierte Strahl weitgehend andere Luftschichten als der Direktstrahl. Dies legt die Annahme nahe, daß bei negativen Krümmungsradien der mittlere Wegunterschied $\Delta l_t$ in erster Näherung proportional zum Wegunterschied der beiden Strahlen ist:

$$(7.1) \qquad \Delta l_t = \frac{(w_2-w_1)\cdot w_t}{w_2}$$

wobei $w_t$ die mittlere Verschiebung oder turbulenzbedingte Wegabweichung nach Gl. 2.5 ist. Für positive Krümmungen, bei denen Reflexionen auch mehrmals auftreten können, gilt die Annahme, daß die Verschiebung durch:

$$(7.2) \qquad \Delta l_t = w_t$$

gegeben ist. Denkbar ist auch die Annahme, daß die Turbulenz auf die Windrichtung zu projezieren ist:

$$(7.3) \qquad \Delta l_t = w_t \cdot \cos \varphi$$

wobei $\varphi$ der Winkel zur Windrichtung ist.

Dabei ist berücksichtigt, daß der größte Turbulenzanteil aus der Windausbreitungsrichtung stammt und daß die resultierende Windgeschwindigkeit durch $v = v_o \cos \varphi$ gegeben ist. Andere Ansätze sind durchaus denkbar, wie auch weitere Ursachen für mögliche Weg- bzw. Zeitvarianzen. Bei bodennahen Quellen oder Aufpunkten läßt sich leicht zeigen, daß die Bodenunebenheiten zu Wegunterschieden führen. Nimmt man an, daß Quelle und Aufpunkt in gleicher Höhe h liegen und einen Abstand von r haben, ergibt sich für die unebenheitenbedingte mittlere Abweichung $\Delta l_b$ zu:

$$(7.4) \qquad \Delta l_b = \frac{(h+\Delta h_b)^2}{r} - \frac{h^2}{r}$$

Für zunehmenden Abstand r verschwinden die Unterschiede, im Nahbereich sind sie in jedem Fall relevant.

Bei nach unten gekrümmten Strahlen vergrößern sich die Weg- bzw. Zeitunterschiede mit zunehmender Entfernung. Das bedeutet, daß bei Quellen in Bodennähe oder am Boden die Variation der Bodenhöhe bedeutsam wird und zusätzlich zur Turbulenz zu Wegunterschieden führt.

Zwei kohärente Strahlen $z_1$ und $z_2$ mit einem Phasenunterschied $\psi$ überlagern sich nach der folgenden Gleichung:

$$(7.5) \qquad z^2 = (z_1 + z_2)^2 = A_1^2 + A_2^2 + 2A_1 * A_2 * \cos(\psi)$$

wobei $A_1$ und $A_2$ die Amplituden beschreiben.

Nimmt man an, daß die Amplituden der Strahlen i und j unabhängig von der Phasenverschiebung sind, die zwischen $\pm\Delta_\chi$ gleichmäßig verteilt ist, erhält man durch Integration:

$$(7.6) \qquad z^2 = A_i^2 + A_j^2 + 2A_i \cdot A_j \cdot \cos\psi \frac{\sin \Delta\chi ij}{\Delta\chi ij}$$

mit

$$\Delta\chi_{ij} = w_{tij} \cdot 2\pi \cdot f / C_o$$

wobei $w_{tij} / C_o$ der mittlere Laufzeitunterschied zwischen den Strahlen i und j ist, der durch Turbulenz und Boden-unebenheiten erzeugt wird und $w_t$ mit Gl. (2.8) bestimmt wird.

Gl. (7.6) kann für insgesamt 4 Strahlen in der Summe mit den unterschiedlichen Zeitdifferenzen verallgemeinert werden. Dasselbe gilt für die Berücksichtigung der Inkohärenz entsprechend dem Abschnitt über Kohärenz.

Bei Sommerwetter mit hoher Sonneneinstrahlung ist insbesondere in Bodennähe, d.h. unter 2 m mit erheblicher zusätzlicher Turbulenz zu rechnen, die im TA-Luft-Modell nicht enthalten ist. Insgesamt muß davon ausgegangen werden, daß unterschiedliche Strahlen entsprechend dem Ansatz in Gl. (2.5) mit zunehmender Entfernung inkohärenter werden. Ausgehend von Messungen geben I.E. Piercy u. T.F.W. Embelton in "Review of noise propagation in the atmosphere", I. Acoustic Soc. Am. 61 (6), 77 an, daß bei Entfernungen von 700 * Wellenlänge und Frequenzen zwischen 500 Hz und 5000 Hz die Phasen eines Schallstrahls zufällig zwischen $\pm 90°$ schwanken. Dies kommt dem hier getroffenen Ansatz nach Gl. (2.7) nahe, welcher jedoch wesentlich allgemeiner ist.

Windgeschwindigkeit und Windrichtung ändern sich zeitlich, wobei mit abnehmender Stabilität die Fluktuationen stärker werden. Es ist daher nicht zu erwarten, daß bei einer Messung in einer bestimmten meteorologischen Situation die berechneten Pegel vorgefunden werden, da sich das Windprofil schon in der Ausbreitungsstrecke ändert. Für einen realistischen Vergleich zwischen Berechnung und Messung sind daher die Resultate bei unterschiedlichen Windgeschwindigkeiten und Windrichtungen zu mitteln, um eine realistische Vergleichsbasis zu Messungen zu erhalten.

## 8. Ausführungsbeispiele

*8.1 Einzelberechnungen für eine feste Konfiguration von Sende- und Aufpunkt*

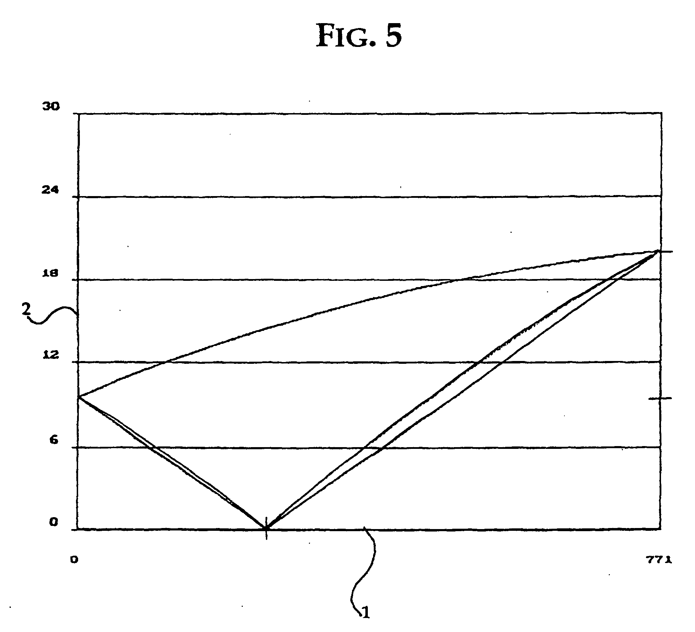

In Figur 5 ist der Schallstrahl des Direktstrahls und der Bodenreflexion für eine Quellenhöhe von 9.5 m und eine Aufpunkthöhe von 20 m für die Stabilitätsklasse V dargestellt. In Tabelle 8.1 sind die geometrischen Daten über Weg- und Zeitdifferenz, Krümmungsradien etc. dazu zusammengestellt. Der Weg des Direktschalls (Weg 1) beträgt 770.6 m, der des reflektierten Strahls 771.1 m. Die zurückgelegte Zeit, die sich als Wegintegral über das Schallgeschwindigkeitsfeld errechnet, beträgt 2.258 bzw. 2.260 s. Die daraus resultierende tatsächliche Wegverschiebung am Aufpunkt beträgt 0.715 m und führt je nach Frequenz zu einer entsprechenden Phasenverschiebung.

Die durch die nicht-lineare Änderung der Schallgeschwindigkeit mit der Höhe hervorgerufene Pegelminderung dM des Direktstrahls beträgt -0.5 dB. Diese Pegeländerung wird im folgenden mit meteorologischer Zusatzdämpfung oder Meteorologiemaß bezeichnet. Die Minderung des am Boden reflektierten Strahls beträgt bei einem Einfallswinkel von 2.7° gegen die Horizontale gerechnet

- 2.0 dB und setzt sich aus der Absorption am Boden und den Meteorologiemaßen des einfallenden und reflektierten Strahls zusammen, unter Berücksichtigung der Spiegelquellenschallstärke Q. Die Bodenabsorption ist frequenzabhängig. Um einen Einzahlwert zu erhalten, wurde eine lineare Frequenzzusammensetzung zwischen 50 Hz und 1500 Hz angenommen und A-bewertet. Alle Pegeländerungen beziehen sich auf den A-Schallpegel.

Die sich aus der Addition des Direktstrahls und dem reflektierten Strahl ergebende Summe unter Berücksichtigung der Phasenverschiebung wird im folgenden in Anlehnung an die VDI 2714 als Bodenmeteorologiemaß $D_{BM}$ bezeichnet ($\Delta\chi_{ij} = 0$) und beträgt ohne Berücksichtigung von Phasenfluktuationen durch Turbulenz (kohärenter Fall gemäß Gl. (7.4)

1.3 dB.

Die energetische Summe ergibt (inkohärenter Fall $\Delta X_{ij} \gg 2$)

1.2 dB

**Ausbreitungsparameter**

```
------------------------------------------------------------------------------------
  Weg1     :        770.5833 m           Zeit1    :        2.25758 s
  Weg2     :        771.0782 m           Zeit2    :        2.25965 s
  Verschiebungen  :      1-2     :      0.707 m


  Turbulenzwegabweichung:        2.59 m        Turbulenzmaß    :        0.00 m
  Abstand        :       770.6 m
  Quellenhöhe     :         9.5 m          Aufpunkthöhe          :        20.0 m
  Windrichtung    :        1.9 Grad        Windgeschwindigkeit   :         3.0 m/s
  Stabilitätsfaktor  :        0.09         Radius in 1 m Höhe    :        3643.1 m
  Krümmungsradien       :        11:     41127.3 m
                                  21:     23801.6 m      :      22:    11959.4 m


  Zahl der Reflexionen     :      1 Schattenzone  :    Nein hmax     :        20.37 m
  Meteorologische Zusatzdämpfung           :      1 dB
------------------------------------------------------------------------------------
```

**Tab. 8.1: Ausbreitungsparameter entsprechend der Situation in Figur 5**

und beschreibt den Fall, daß durch Bodenunebenheiten, Turbulenzen etc. die Kohärenz zwischen den Strahlen zerstört ist. Die Differenz zwischen den beiden Werten von 0.1 dB ist auf Interferenz zurückzuführen. Der Krümmungsradius des Direktschalls beträgt

41.12 km, der der beiden Teile des am Boden reflektierten Strahls

23.8 und 11.95 km, d.h. die Krümmung des reflektierten Strahls ist im Mittel größer als die des Direktstrahls. Dies entspricht der Erwartung wegen des bodennäheren Verlaufs und erklärt, daß das Bodenreflexionsmaß bei -2.6 dB liegt, die mittlere Bodenabsorption von 50 Hz bis 1500 Hz beträgt davon ca. -1 dB. Die Krümmungsradien sind ausreichend groß, um zu einem Strahlenverlauf zu führen, der der Annahme geradliniger Schallausbreitung weitgehend entspricht (siehe Figur 5). Der in Tab. 8.1 und Figur 5 dargestellte Fall entspricht einer sehr instabilen Wetterlage, wie sie bei starker Sonneneinstrahlung auftritt. Bei 770 m Ausbreitung wird nach TA Luft eine mittlere turbulente Wegabweichung von 2.59 m errechnet. Das in der Tabelle 8.1 angegebene Turbulenzmaß ist das Produkt aus turbulenter Wegabweichung und einem frei wählbaren Parameter $t_D$. Wird $t_D = 0$ gewählt, ergibt sich der Fall kohärenter Strahlen mit dem Turbulenzmaß = 0:

$$dBM = +1.2$$

d.h. es kommt zu einem Pegelanstieg wie im inkohärenten Fall.

Beim Vergleich mit der VDI 2714 ist zu berücksichtigen, daß das $D_{BM}$ dort als Minderungsmaß definiert ist. Die Reflexion am Boden wird pauschal mit +3 dB berücksichtigt. Um die Zusatzdämpfung nach VDI 2714 mit den vorliegenden Resultaten vergleichen zu können, wird wieder auf $D_{BM}'$ umgerechnet:

$$D_{BM}' = 3 - D_{BM} \text{ (VDI 2714).}$$

So liefert die VDI 2714 für größere Entfernungen ein $D_{BM}'$ von -1.8 dB. Im Beispiel der Figur 5 und Tabelle 8.1 tritt durch Reflexion am Boden eine Pegelerhöhung zwischen 1.2 und 1.6 dB ein. Nach VDI 2714 ergibt sich ein $D_{BM}'$ von -1 dB, d.h. eine Pegelminderung.

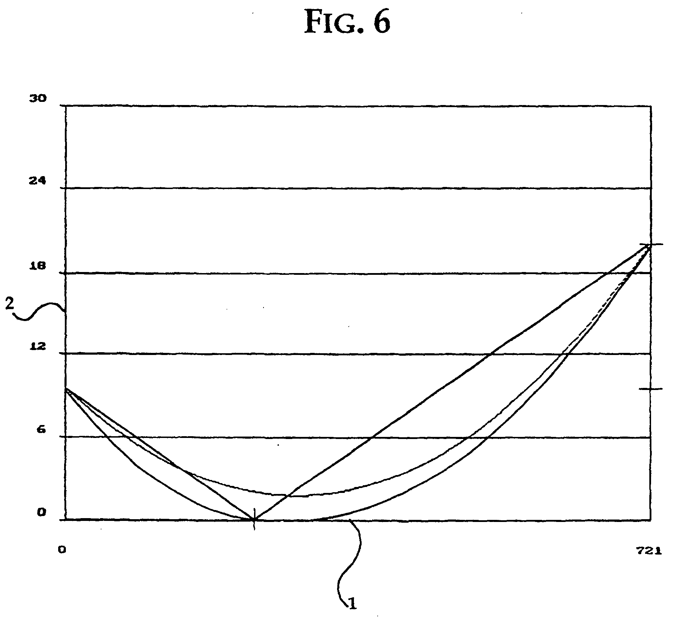

In Figur 6 ist der Strahlenverlauf in Gegenwindrichtung für die Stabilitätsklasse I (m = 0.41, stabile Wetterlage nachts) dargestellt. Nach Tabelle 8.2 beträgt das Bodenmeteorologiemaß

Ausbreitungsparameter

```
-----------------------------------------------------------------------------------
Weg1     :        721.2231 m          Zeit1   :      2.12774 s
Weg2     :        721.4211 m          Zeit2   :      2.12717 s
Verschiebungen  :        1-2      :      -0.195 m


Turbulenzwegabweichung:        0.16 m          Turbulenzmaß    :        0.16 m
Abstand          :        720.7 m
Quellenhöhe      :          9.5 m              Aufpunkthöhe          :        20.0 m
Windrichtung     :        178.0 Grad           Windgeschwindigkeit   :         2.0 m/s
Stabilitätsfaktor  :        0.41               Radius in 1 m Höhe    :      -1597.2 m
Krümmungsradien      :        11:    -5176.0 m
                              21:    -4894.4 m     :       22:     -3179.0 m


Zahl der Reflexionen    :      1 Schattenzone  :      Nein hmax      :        1.76 m
Meteorologische Zusatzdämpfung          :        7.1 dB


Bodenreflexion 1                    :        +0.2 dB        +0.1 Grad
Bodenmeteorologiemaß                :        8.9 dB
Weißes Rauschen vom fu              :        50.0 Hz bis 1500.0 Hz    A-bewertet
-----------------------------------------------------------------------------------
```

Tab. 8.2: Ausbreitungsparameter bei Gegenwind und m=0.41 unter

Berücksichtigung der Turbulenz proportional zum Wegunterschied

16.9 dB, d.h. in Gegenwindrichtung und in der Nähe der Schattenzone kommt es zu einer Fokussierung der Schallstrahlen. Der Strahlenverlauf weicht erheblich von dem Strahlenverlauf ab, der sich unter der Annahme geradliniger Ausbreitung ergeben würde. Beide Strahlen durchlaufen in sehr geringem Abstand dieselben Luftschichten und werden damit auch von der Luftturbulenz weitgehend in gleicher Weise vom berechneten Weg abgelenkt, d.h. die Strahlen bleiben trotz der berücksichtigten Turbulenz weitgehend kohärent und werden fokussiert.

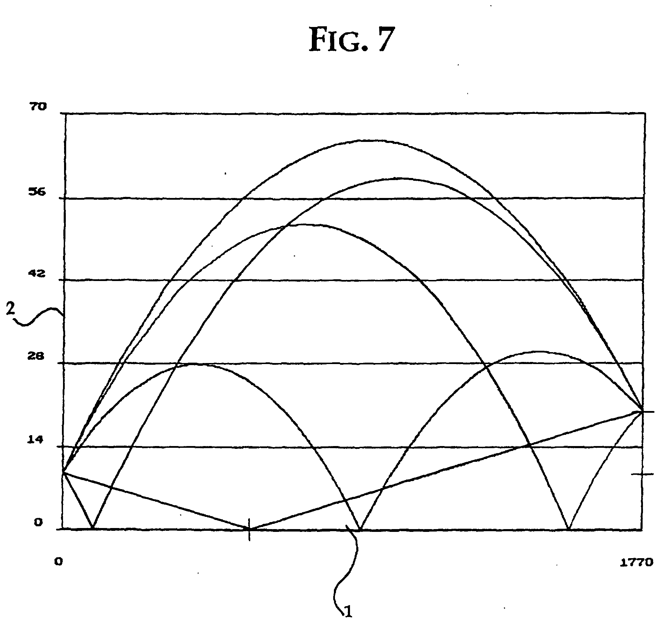

In Figur 7 ist der Fall einer Mitwindwetterlage bei stabilen Witterungsbedingungen und einer Entfernung von 1770 m dargestellt. In dieser Situation treten die auch im Anhang D VDI 2714 beschriebenen drei Reflexionen am Boden auf. Das Bodenmeteorologiemaß setzt sich in diesem Fall aus 4 Beiträgen zusammen zu -0.7 dB (siehe Tab. 8.3). Aufgrund der großen Zeitverschiebungen zwischen den Strahlen ist ein resultierender Interferenzeffekt nicht zu beobachten, d.h. die energetische Summe der 4 Dämpfungsmaße beträgt ebenfalls -0.7 dB (vollständige Inkohärenz).

20

## Ausbreitungsparameter

```
--------------------------------------------------------------------------------
Weg1    :       1776.5374 m          Zeit1   :       5.11515 s
Weg2    :       1777.0379 m          Zeit2   :       5.12662 s
Weg3    :       1774.6510 m          Zeit3   :       5.14188 s
Weg4    :       1777.3555 m          Zeit4   :       5.13229 s


Verschiebungen  :       1-2     :       3.902 m
                :       1-3     :       9.089 m
                :       1-4     :       5.829 m


Turbulenzwegabweichung:         0.36 m         Turbulenzmaß    :       0.36 m
Abstand         :       1770.4 m
Quellenhöhe     :       9.5 m           Aufpunkthöhe            :       20.0 m
Windrichtung    :       0.8 Grad        Windgeschwindigkeit     :       3.0 m/s
Stabilitätsfaktor  :    0.41            Radius in 1 m Höhe      :       583.9 m
Krümmungsradien         :       11:     6166.8 m
                        :       21:     5768.1 m      :       22:     1038.6 m
                        :       31:     3920.8 m      :       32:     3399.7 m
                        :       41:     2380.9 m      :       42:     4887.0 m


Zahl der Reflexionen    :       3 Schattenzone  :   Nein hmax    :       83.69 m
Meteorologische Zusatzdämpfung          :       -4.0 dB


Bodenreflexion 1                        :       -3.3 dB         9.0 Grad
Bodenreflexion 2                        :       -3.4 dB         8.5 Grad
Bodenreflexion 3                        :       -3.3 dB         9.7 Grad
Bodenreflexion 4                        :       -0.7 dB
Weißes Rauschen vom fu :         50.0 Hz bis 1500.0 Hz          A-bewertet
--------------------------------------------------------------------------------
```

Tab. 8.3: Ausbreitungsparameter bei Mitwind für eine stabile Wetterlage (m=0.41)

mit Berücksichtigung der Turbulenz

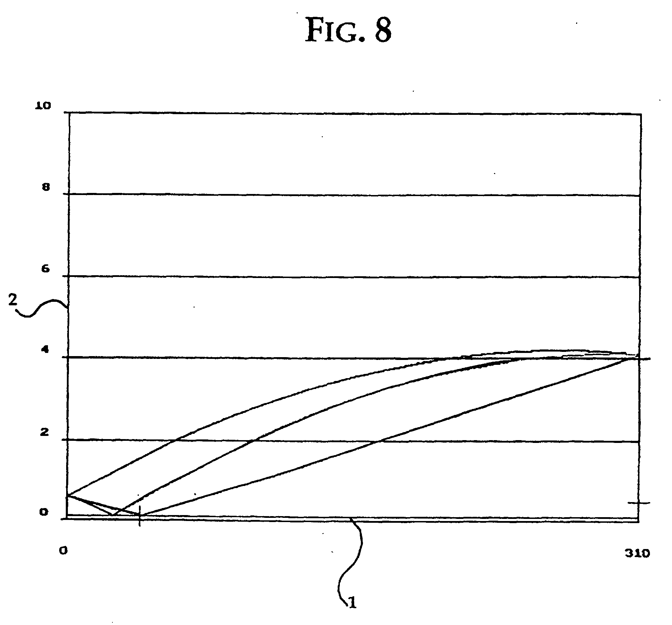

Ein anders gelagerter Fall ist in Figur 8 dargestellt, mit einer Quellenhöhe von 0.5 m und 4 m Aufpunkthöhe. Wegen der bei sehr labilen Wetterlagen (m = 0.09) geringeren Änderung der Krümmung mit der Höhe tritt bei dieser Entfernung nur eine Reflexion am Boden auf. Die Wegverschiebung beträgt 4.7 cm und damit sind resultierende Interferenzeffekte zu beobachten. Die energetische Summe beträgt (inkohärenter Fall)
       -1.0 dB.

Im kohärenten Fall wird eine Minderung um -3.8 dB berechnet. Da bei instabilen Wetterlagen die höchsten Turbulenzen auftreten, beschreibt eher der inkohärente Fall mit -1.0 dB die Situation bei diesen Entfernungen. Die mittlere Turbulenzverschiebung nach Gl. (2.7) beträgt 1.08 m und bestätigt die Annahme. Dieses Beispiel ist insofern bedeutsam, als es die Geometrie der Schallausbreitung von Straßenverkehr beschreibt. Bei Straßen- und Schienenverkehr ist zusätzlich zu berücksichtigen, daß die sich bewegenden Fahrzeuge in Straßennähe weitere Turbulenzen erzeugen.

Instabile Wetterlagen mit m = 0.09 (Stabilitätsklasse V) treten bei starker Sonneneinstrahlung am Tage und daraus resultierendem Wind mit kräftigen böigen Winden auf.

**Ausbreitungsparameter**

```
---------------------------------------------------------------------------------
Weg1    :       310.0449 m           Zeit1   :        0.90887 s
Weg2    :       310.0578 m           Zeit2   :        0.90900 s
Verschiebungen :       1-2     :       0.045 m


Turbulenzwegabweichung:         1.08 m      Turbulenzmaß   :        0.00 m
Abstand        :       310.0 m
Quellenhöhe    :         0.5 m               Aufpunkthöhe          :           4.0 m
Windrichtung   :         4.6 Grad            Windgeschwindigkeit   :           3.0 m/s
Stabilitätsfaktor  :      0.09               Radius in 1 m Höhe    :        3666.2 m
Krümmungsradien        :       11:    9903.9 m
                               21:    9006.3 m        :       22:    1510.4 m


Zahl der Reflexionen   :       1 Schattenzone   :       Nein hmax   :        4.19 m
Meteorologische Zusatzdämpfung          :       -1.8 dB


Bodenreflexion 1                        :       -1.1 dB        2.2 Grad
Bodenmeteorologiemaß                    :       -3.8 dB
Weißes Rauschen vom fu         :       50.0 Hz bis 1500.0 Hz            A-bewertet
---------------------------------------------------------------------------------
```

**Tab. 8.4: Ausbreitungsparameter bei stabiler Wetterlage ohne Berücksichtigung der Turbulenz**

Bei geringeren Windgeschwindigkeiten entsteht in dieser Stabilitätsklasse um eine bodennahe Schallquelle eine elliptische Zone, in der die Quelle direkt wahrnehmbar ist.

Jenseits dieses Bereiches bildet sich in alle Himmelsrichtungen eine Schattenzone aus. So kann der gleiche Pegel außerhalb der Schattenzone sowohl in ca. 350 m als auch in 1000 m Entfernung gemessen werden, bei einer Meßhöhe von 10 m über Grund. Dazwischen tritt ein Minimum auf.

Aus Langzeitmessungen von Industriequellen sind solche Effekte bekannt (vgl. auch: Kühner, D., "Erhebungsmethode zur Erfassung repräsentativer Immissionsdaten für genehmigungsbedürftige Anlagen", Forschungsbericht Nr. 105 02 504/02, Umweltbundesamt Berlin, Mai 1985). Bei geringen Windgeschwindigkeiten, auch bei Mitwind in Entfernungen von mehr als 100 m kann es tagsüber zu erheblichen Abweichungen von den Pegeln kommen, die unter günstigen Ausbreitungsbedingungen zu erwarten sind. Dies ist insbesondere beim Messen von Schießlärm bedeutsam.

Aus der Figur 6 kann abgelesen werden, daß bei Gegenwind oder negativen Krümmungsradien mit Fokussierungseffekten zu rechnen ist und Interferenz zwischen dem reflektierten Schall und dem Direktstrahl auftritt. Umgekehrt kann, wie Figur 8 zeigt, bei kleineren positiven Krümmungsradien von erheblichen Wegunterschieden ausgegangen werden. Dies gilt in jedem Fall immer dann, wenn mehr als eine einzige Bodenreflexion wie in Figur 8 auftritt. Ab Quellenhöhen und Empfangshöhen über 1 m ergeben alle Berechnungen bei positiven Krümmungsradien Verschiebungen um 1 m und mehr. Im folgenden wird von einem resultierenden Interferenzeffekt gesprochen, wenn sich durch Addition von Direktstrahl und Bodenreflexion in der Summe über das Spektrum eine Pegelreduzierung gegenüber dem inkohärenten Ansatz einstellt.

Die nach der VDI 2714 unterstellte resultierende Interferenzauslöschung tritt bei größeren Entfernungen in Mitwindrichtung bei vertikal ausgedehnten Quellen nicht auf. Andererseits ist Interferenzauslöschung beim Übergang von beginnenden negativen Krümmungsradien bis in die Schattenzonen zu erwarten. Daraus ergibt sich, daß Interferenzauslöschung bei ausgedehnten Quellen, die durch Messungen immer wieder bestätigte Zusatzdämpfung bei Mitwind $D_{BM}$ nach VDI 2714 nicht erklären kann. Dagegen spricht auch ganz eindeutig die Kohärenzbedingung für inkohärente Quellen (siehe hierzu auch im Abschnitt Kohärenz). Nach dem vorliegenden Modell erklärt sich die meteorologische Zusatzdämpfung in Mitwindrichtung bei größeren Entfernungen (r > 500 m) als Zusammenwirken von Defokussierung durch die nicht-lineare Änderung der Schallgeschwindigkeit mit der Höhe und der frequenzabhängigen Absorption des Schalls bei der Reflexion am Boden und der Ausbildung einer Bodenwelle. Auftretende Kaustiken bei mehr als einer Bodenreflexion können lokale Abweichungen bewirken, da die Schallstrahlen nach Durchlaufen der Kaustik wieder der Defokussierung unterliegen.

*8.2 Vergleich bei einem festen Sendepunkt und Aufpunkten in einer Fläche*

Anhand einer Schallquelle mit einem Schalleistungspegel von 11 dB ($h_q$ = 3.5, $h_a$ = 4 m), deren Pegelabnahme in Schritten von 5 dB dargestellt wird (Pegel eines weißen Spektrums zwischen 50 und 2000 A-bewertet), kann der kohärente Fall mit dem inkohärenten Fall verglichen werden. Dabei wurde über 5 stabile Wetterlagen (m=0.41, v=1 und 2 m/s, m=0.37, v=1.2 und 3 m/s) über ±10° Windrichtung (in Schritten von 1°) gemittelt. Ferner wurde Luftabsorption nach VDI 2714 berücksichtigt. Daraus leitet sich ab:

Die meteorologisch bedingte Wegverschiebungen sind so groß, daß eine resultierende Interferenzauslöschung kaum festzustellen ist. Im Bereich des Gegenwinds treten erwartungsgemäß in den resultierenden $D_{BM}$-Werten zwischen kohärentem Ansatz und inkohärentem Ansatz deutliche Unterschiede auf. In Gegenwindrichtung wird beim inkohärenten Ansatz vor der Schattenzone bei 170 m Abstand eine Pegelzunahme von +5 dB berechnet, beim kohärenten Ansatz liegt der Anstieg bei ca. 3 dB. Quer zur Windrichtung treten die niedrigsten Zusatzdämpfungen dBM auf und der Übergang in die Schattenzone erfolgt, bedingt durch das Fluktuieren von Windrichtung und Windgeschwindigkeit weitgehend kontinuierlich.

In der Tabelle 8.5 sind die Pegelabnahmen nach VDI 2714 für eine Quellenhöhe von 0.5 m und eine Aufpunkthöhe von 4 m den Werten für dBM gegenübergestellt, die man für stabile, labile und instabile Wetterlagen bei gleicher Geometrie für die Grenzfälle kohärenter und inkohärenter Schallstrahlen erhält. In Mitwindrichtung wird bei stabilen Witterungsbedingungen ein $D_{BM}$ von -2.4 dB in 2000 m Abstand erreicht, bei instabilen wird über -6 dB ein kohärenter Fall errechnet. Die in Klammern gesetzten Werte beschreiben den kohärenten Fall.

Tab. 8.5:

| Meteorologische Zusatzdämpfung inkohärent und kohärent (in Klammern gesetzt) für eine Quellenhöhe von 0.5 m und Aufpunkthöhe von 4 m | | | | | | | |
|---|---|---|---|---|---|---|---|
| Entfern. m | VDI2714* dB | stab. dB | | indif. dB | | labil dB | |
| 50 | 0.3 | 1.8 | (1.5) | 2.1 | (1.7) | 2.3 | (-1.6) |
| 100 | -0.9 | 0.9 | (0.2) | 1.8 | (0.3) | 2.4 | (-0.6) |
| 200 | -1.4 | -0.7 | (-1.7) | 0.9 | (-3.4) | 2.6 | (-5.4) |
| 500 | -1.6 | -1.1 | (-2.5) | -1.2 | (-5.3) | -0.2 | (-6.3) |
| 1000 | -1.7 | -1.7 | (-2.5) | -2.1 | (-6.0) | -1.5 | (-6.0) |
| 2000 | -1.8 | -2.4 | (-3.4) | -3.1 | (-6.6) | -2.5 | (-5.8) |

**\* Hier wird dBM' = 3 - dBM (VDI 2714) dargestellt.**

Der resultierende Bodeninterferenzeffekt beträgt im Nahbereich (kohärent) bis 75 m -1.0 dB. Tabelle 8.5 zeigt, daß dieser Anteil in dem Ansatz der VDI 2714 enthalten zu sein scheint, d.h. das Bodenmeteorologiemaß für eine bodennahe Quelle der VDI 2714 basiert auf Kohärenz von direkten und reflektierten Strahlen und beschreibt die Schallausbreitung bei stabilen Witterungsbedingungen. In größeren Entfernungen treten in jedem Fall deutlich höhere Zusatzdämpfungen für die indifferenten und labilen Wetterlagen auf. Der kohärente Fall ist vom inkohärenten außer im Fall labiler Wetterlagen in der Praxis nicht zu unterscheiden, da für größere Entfernungen der kohärente Fall und labile Wetterlagen unrealistisch sind, da gerade hier die Turbulenz groß ist.

Für labile Witterungsbedingungen treten durch resultierende Interferenzen Pegelreduzierungen bis zu -4 dB bei 500 m auf. Diese sind jedoch im VDI-Modell **nicht** enthalten und könnten in der Praxis auftreten.

Auch in einer Situation bei 3.5 m Quellenhöhe und 4 m Aufpunkthöhe zeigt sich, daß beide Ansätze entsprechend den Erfahrungen, den Übergang in die Schattenzone richtig darstellen. In Querwindrichtung werden leicht erhöhte Pegel beobachtet. Die Erhöhung ist so gering, daß sich dies meßtechnisch nicht bemerkbar macht.

In Tabelle 8.6 ist das $D_{BM}$ nach VDI 2714 und für drei Wetterlagen für eine Quellenhöhe von 3.5 und eine Aufpunkthöhe von 4 m gegenübergestellt (kohärenter Ansatz). Dabei wurde jeweils über 5 oder 6 unterschiedliche Windgeschwindigkeiten und über ±10° Windrichtung in den drei Wetterlagen gemittelt. Der kohärente Fall weicht vom inkohärenten teilweise deutlich ab.

Für die stabilen Witterungen liefert das Verfahren nach der vorliegenden Erfindung in 50 m Abstand denselben Wert wie die VDI 2714; in 200 m Entfernung prognostiziert die VDI 2714 eine um 1 dB höhere Abnahme, in ca. 700 m Abstand liefern das hier vorliegende technische Verfahren und das nach VDI 2714 gleiche Werte und bei 2000 m Abstand sagt die Theorie einen um 1.6 dB höheren $D_{BM}$ voraus. Mit abnehmender Stabilität verstärken sich die Unterschiede im Nahbereich und Fernbereich. Für den Fernbereich liegt die Vermutung nahe, daß Reflexionen zweiter Ordnung noch weitere Beiträge liefern und damit die Differenzen etwas geringer sind. Allerdings entspricht es den Beobachtungen von ausgedehnten Industriequellen durch Langzeitmessungen, daß schon bei Entfernungen ab 800 m am Tage der Pegel im energetischen Mittel um mindestens 1 dB niedriger liegt als bei Mitwind nachts.

Tab. 8.6:

| Gegenüberstellung von VDI 2714 und dem mit inkohärentem und kohärentem (in Klammern) Modell für die Mitwindrichtung berechneten Meteorologiemaß dB für stabile, indifferente und labile Wetterlagen (Quellenhöhe 3.5 m, Aufpunkthöhe 4.0 m) | | | | | | | |
|---|---|---|---|---|---|---|---|
| Entfernung m | VDI 2714 dB | stabil dB | | labil dB | | inst. dB | |
| 50 | 1.4 | 2.0 | ( 1.9) | 2.1 | (2.0) | 2.3 | ( 1.6) |
| 100 | -0.4 | 1.7 | ( 1.6) | 2.0 | ( 1.9) | 2.4 | (-0.6) |
| 200 | -1.2 | 1.1 | ( 0.7) | 1.7 | ( 1.7) | 2.6 | (-5.4) |
| 500 | -1.6 | 0.6 | ( 0.8) | 1.7 | (-0.2) | 0.2 | (-6.3) |
| 1000 | -1.7 | -1.0 | ( 0.1) | -0.7 | (-0.6) | -1.5 | (-6.0) |
| 2000 | -1.7 | -2.0 | (-1.0) | -1.9 | (-2.7) | -2.5 | (-5.8) |

Für die Quellenhöhe 9.5 m und Aufpunkthöhe 20 m ergibt sich:

Tab. 8.7:

| Gegenüberstellung von VDI 2714 und inkohärentem Modell für eine Quellenhöhe von 9.5 m und Aufpunkthöhe von 20 m (kohärente Werte in Klammern). | | | | | | | |
|---|---|---|---|---|---|---|---|
| Entfern. m | VDI 2714 dB | stab. dB | | indif. dB | | labil dB | |
| 50 | 3.0 | 1.7 | ( 1.7) | 1.8 | ( 1.6) | 1.8 | ( 1.7) |
| 100 | 3.0 | 1.8 | ( 1.8) | 1.9 | ( 1.9) | 1.9 | ( 1.9) |
| 200 | 0.9 | 1.6 | (1.6) | 1.8 | ( 1.8) | 1.8 | (1.8) |
| 500 | -0.8 | 0.7 | ( 0.7) | 1.5 | ( 1.5) | 1.8 | ( 1.8) |
| 1000 | -1.3 | -0.2 | (-0.4) | 0.9 | ( 1.0) | 2.0 | ( 1.5) |
| 2000 | -1.5 | -0.7 | (-0.8) | -0.2 | (-0.9) | 1.9 | ( 0.9) |

Im Nahbereich der Quelle bis 50 m Abstand liefert der kohärente und inkohärente Ansatz 1.1 dB weniger als die VDI 2714. In allen drei Fällen ist bei dieser Konfiguration das kohärente und inkohärente Modell sehr ähnlich. Bei größeren Abständen zeigen alle Wetterlagen weniger Zusatzdämpfung als die VDI 2714. Die Unterschätzung der Zusatzdämpfung bei hohen Schallquellen ist ein in der Praxis häufig beobachtetes Phänomen, das jedoch wegen der häufig noch vorhandenen Richtcharakteristik in der Auswirkung schwer abzuschätzen ist.

*8.3 Schlußfolgerungen*

Aus der obigen Gegenüberstellung kann man schlußfolgern, daß der Übergang von kohärenten zu inkohärenten Strahlen gleitend durchgerührt werden muß. Dies gelingt, wenn die mittlere Turbulenzverschiebung entsprechend den vorstehend zu 7.) gemachten Angaben berücksichtigt wird. Damit liegt ein Verfahren vor, um die Schallausbreitung mit einem Strahlenmodell im Kontext der Ansätze zur TA-Luft zu bestimmen. Als zusätzliche Information wird die Impedanz des Bodens benötigt und die vertikale Ausdehnung der Quelle (siehe Abschnitt zur Kohärenz).
Die Gegenüberstellungen im quantitaviven Vergleich mit der VDI 2714 haben gezeigt, wenn von dem Fall bodennaher Quellen und instabiler Wetterlagen mit Windgeschwindigkeiten unter 3.5 m/s abgesehen wird, daß resultierende Interferenzeffekte in der Regel nur im Nahbereich mit höchstens 1 dB zu beobachten sind. Dies stimmt mit der Beobachtung aus Langzeitmessungen überein. Spektren der Schallimmission (Frequenzauflösung 5 Hz) mit ausgeprägten Frequenzeinbrüchen werden bei Messungen von Industriegebieten in 10 m Höhe über Grund praktisch nie beobachtet. Dies schließt nicht aus - und dies bestätigt auch die Praxis -, daß in einzelnen Stunden solche Effekte insbesondere bei stabilen Witterungsbedingungen in kürzeren Entfernungen, d.h. unter 500 m, beobachtet werden können. Die von Lang (Lang, J., Über den Einfluß der meteorologischen Bedingungen und des Bodens auf die Schallausbreitung von Autobahnen, Österreichischer Ingenieur- und Architektenzeitung 133(2), 88) an Autobahnen beobachteten Minima der Terzspektren zwischen 125 und 250 Hz erklären sich dadurch, daß der Beobachtungswinkel zu klein ist, um tatsächliche Interferenz beobachten zu können, die den A-Schallpegel jedoch nicht wesentlich beeinflußt.
Die Gegenüberstellung zeigt, daß das Modell der VDI 2714 auf stabile Wetterlagen abgestellt ist, d.h. Windgeschwindigkeiten von 1 bis 3 m/s und Inversion. Berücksichtigt man die Turbulenz auf der Basis der TA Luft, erhält man die in Tabelle 8.8 dargestellte Gegenüberstellung für die Mitwindrichtung.

Tab. 8.8:

| Gegenüberstellung VDI 2714 und parabolisches Modell mit Turbulenz bei Mitwind und stabile Witterungsbedingungen | | | | | | |
|---|---|---|---|---|---|---|
| Quellen- u. Aufpunkthöhe Entfernung m | hq ha m m 0.5 4.0 VDI 2714 dB | hq ha m m 0.5 4.0 Modell dB | hq ha m m 3.5 4.0 VDI 2714 dB | hq ha m m 3.5 4.0 Modell dB | hq ha m m 9.5 20 VDI 2714 dB | hq ha m m 9.5 20 Modell dB |
| 50 | 0.3 | 1.4 | 1.4 | 1.9 | 3.0 | 1.7 |
| 100 | -0.9 | 0.1 | -0.4 | 1.6 | 3.0 | 1.8 |
| 200 | -1.4 | -2.0 | -1.2 | 1.0 | 0.9 | 1.6 |
| 500 | -1.6 | -2.5 | -1.6 | 0.7 | -0.8 | 0.7 |
| 1000 | -1.7 | -2.5 | -1.7 | -0.3 | -1.3 | -0.4 |
| 2000 | -1.8 | -3.2 | -1.7 | -1.5 | -1.5 | -0.8 |

Die Abweichungen liegen im Bereich bis 800 m unter 2.4 dB, wobei mit zunehmender Entfernung das parabolische Modell bei niedrigen Höhen höhere Zusatzdämpfung bei stabilen Witterungsbedingungen voraussagt. Berücksichtigt man Reflexionen höherer Ordnung, reduzieren sich die prognostizierten Zusatzdämpfungen um ca. 0.5 dB oberhalb von 1000 m.

Insgesamt ist daher davon auszugehen, daß das parabolische Modell nach TA Luft in der Lage ist, die Schallausbreitung in Abhängigkeit von der Windrichtung, Windgeschwindigkeit und der atmosphärischen Stabilität gut zu beschreiben. Bei größeren Entfernungen sind Reflexionen höherer Ordnung entsprechend dem Punkt Reflexionen im Abschnitt Berechnungsverfahren zu berücksichtigen.

Für den Fall stabiler Wetterlagen bei $h_q$ = 3.5 m und $h_a$ = 4 m und einer Gegenüberstellung von inkohärentem Ansatz und Turbulenzenansatz, wie auch bei labilen Wetterlagen, als auch bei hochliegender Quelle oder Aufpunkt bei stabilen Wetterlagen ($h_q$ = 9.5 m, $h_a$ = 20 m) sind in Gegenwindrichtung deutlich Fokussierungen zu erkennen, die aus der Praxis bekannt sind. Weiter zeigt sich in diesen drei Fällen, daß der turbulente Ansatz zu plausibleren Werten für dBM führt als der inkohärente Ansatz.

Die Aussagen des Modells haben erhebliche Auswirkungen auf die Auslegung von Schallschirmen:

Die VDI 2720 (Schallschutz durch Abschirmung im Freien, Beuth-Verlag, Berlin, Entwurf 1991) zieht bei der Berechnung der Einfügungsdämpfung von Schallschirmen das $D_{BM}$ vom Schirmmaß ab. Dies geschieht unter der Annahme, daß nach Errichtung des Schirms keine Interferenzauslöschung eintreten kann. Dem steht entgegen, daß mit dem vorliegenden Modell der Interferenzanteil beim $D_{BM}$ bis 200 m Abstand höchstens bis 1 dB beträgt. Darüberhinaus ist für Entfernungen über 200 m eine resultierende Interferenz bei stabilen Wetterlagen vernachlässigbar. Dies bedeutet, insbesondere für höher liegende Schallquellen, daß das $D_{BM}$ nicht zum Abzug zu bringen ist. Dies stimmt mit dem Hinweis, der auf praktische Erfahrungen bei großen Industrieflächen zurückgeht, in der VDI 2720 überein, daß bei ausgedehnten industriellen Quellen der Abzug entfallen kann. Dafür spricht auch, daß in diesen Fällen die Strahlen die Quellen nicht kohärent verlassen.

Für bodennahe bewegliche Quellen wie Straßenverkehr ist die Kohärenzbedingung nach dem Abschnitt über Kohärenz erfüllt. Bei dichterem Verkehr ist davon auszugehen, daß die durch den Verkehr erzeugte Turbulenz die Interferenzauslöschung im Nahbereich reduziert. In labilen Situationen prognostiziert die vorliegende, von einem parabolischen Modell ausgehende Erfindung nach TA Luft höhere resultierende Interferenzeffekte gegenüber stabilen Wetterlagen. Dies entspricht dem nordischen Modell (siehe Anhang D VDI 2714).

Die obige Feststellung macht die entsprechende Angabe der Deutschen Bahn AG in der Schall 03 verständlich, in der von Abschirmung auch bei gerade noch bestehender Sichtverbindung ausgegangen wird. Hier scheinen die am Boden reflektierten Wellen zumindest teilweise abgeschirmt zu werden und damit zu einer Pegelreduzierung zu führen.

## 9. Zusammenfassung

Es konnte gezeigt werden, daß mit einem parabolischen Ansatz und den Vorgaben der TA Luft ein klimatologisches Strahlenmodell für die Schallausbreitung entwikkelt werden kann, dessen Resultate für stabile Wetterlagen und Windgeschwindigkeiten von 1 bis 3 m/s den bestehenden Berechnungsnormen des VDI weitgehend entspricht. Das VDI 2714 Modell repräsentiert die Schallausbreitung unter ausbreitungsgünstigen Bedingungen bei Inversionen nachts. Für die indifferenten und instabilen Wetterlagen werden höhere Zusatzdämpfungen in Mitwindrichtung berechnet. Dies ist durch die Erfahrung bestätigt. Das auf dem hier entwickelten Modell basierende Verfahren nach der vorliegenden Erfindung erlaubt darüber hinaus, die Schallausbreitung und die meteorologischen Zusatzdämpfungen bei bekannter Windrichtung, Windgeschwindigkeit und atmosphärischer Stabilität (Bedeckungsgrad) zu berechnen. Als Zusatzinformation wird die Bodenimpedanz benötigt. Das Verfahren nach der vorliegenden Erfindung wurde mit einer gemessenen Bodenimpedanzen für Grasland geprüft. Andere Bodenimpedanzen, die aus dem Strömungswiderstand berechnet werden, können eingesetzt werden.

Damit eröffnet sich die Möglichkeit, mit überschaubarem numerischen Aufwand die Schallausbreitung mit einer deutlich verbesserten Genauigkeit unter Berücksichtigung der Windgeschwindigkeit, Windrichtung und Stabilität (Bedeckungsgrad) für reale Situationen zu berechnen. Dabei ist Mittelung über unterschiedliche Windrichtungen und Windgeschwindigkeiten sinnvoll. Dies wird insbesondere zur genaueren Berechnung der Abschirmung von Bedeutung sein, da der Meteorologiefaktor $K_w$ der VDI 2720, mit dem der Effekt der Schallstrahlenkrümmung nach dieser Richtlinie berücksichtigt wird, durch eine realistische Approximation ersetzt werden kann. Bedeutsam für die Berechnung der Abschirmung ist weiter, daß gezeigt werden konnte, daß das dBM für ein breitbandiges Geräusch nur teilweise durch Interferenzen bestimmt wird und daher bei der Berechnung der Abschirmung berücksichtigt werden kann.

Die Häufigkeit von Windrichtung, Windgeschwindigkeit und Stabilität kann für jeden Standort in Deutschland durch den Deutschen Wetterdienst angegeben werden. Mit diesen Daten und dem vorliegenden Modell sind klimatologische Berechnungen der Schallimmission möglich, die die Häufigkeiten der unterschiedlichen Wetterlagen im langfristigen Mittel (10 Jahre) berücksichtigen. Damit wird es möglich, die Wirkung von Schallschirmen in einen klimatologischen Zusammenhang zu bringen, d.h. es erschließt sich die Möglichkeit darzulegen, mit welcher Häufigkeit welche Pegelminderungen am Tage und in der Nacht zu erwarten sind. Regionale Unterschiede, die klimatisch oder orographisch bedingt sind, können damit quantifiziert werden. Dabei kann an die eingeführten Verfahren zur Berechnung der Immission von luftfremden Stoffen nach TA Luft angeknüpft werden.

Weiter erschließt sich die Möglichkeit, über die Windrichtung, Windgeschwindigkeit und die Stabilität den Einfluß verschiedener Quellen auf einen Immissionsort zu berechnen. Zusammen mit Langzeitmessungen kann dies dazu benutzt werden, Anteile von Quellen zu bestimmen, deren Zeit- bzw. Frequenzstruktur eine Trennung mit anderen Methoden nicht zuläßt.

Für die Praxis erscheint es weiter wichtig, daß mit dem vorliegenden Modell die Tages- und Nachtwerte mit unterschiedlichen meteorologischen Zusatzdämpfungen berechnet werden können, da sich die Immissionsgrenzwerte oder Immissionsrichtwerte zwischen Tag und Nacht erheblich unterscheiden.

Die vorgenannten Möglichkeiten zu einer differenzierteren Darstellungsmethode von aktiven Schallschutzmaßnahmen können eine erhebliche Auswirkung auf deren Bewertung und Akzeptanz haben, da ihre Wirksamkeit besser dargestellt werden kann.

### 10. Berechnungsverfahren

*A. Ableitung der meteorologischen Dämpfung dM*

Nimmt man ohne Beschränkung der Allgemeinheit an, daß $x_q = -x_a$ ist, dann ist

$$\text{(A1)} \qquad \frac{\partial z'(x)}{\partial x_q}\Big|x = xq = \frac{2a_o}{x_q^2} - \frac{2}{x_q}\cdot\frac{\partial a_o}{\partial x_q}$$

Aus Gl.(3.11) folgt für $a_o$ unter Vernachlässigung von $b_1$:

$$\text{(A2)} \qquad a_o = E(a_o \cdot \beta + h)^{m-1}$$

mit

$$E = \frac{\left(1 + \bar{b}\right)\cdot x_q^2}{2\cdot\gamma}$$

Durch Differentation von $a_o$ nach $x_q$ und Einsetzen der Gl. (A3) erhält man nach einigen Umformungen

$$\text{(A3)} \qquad \frac{da_o}{dx_b} = \frac{2a_o}{x_b} \cdot \frac{a_o \cdot \beta + \bar{h}}{a_o \cdot \beta(2-m) + \bar{h}}$$

Durch Einsetzen in Gleichung (3.13) ergibt sich die meteorologische Zusatzdämpfung bei einem parabolischen Ansatz:

$$\text{(A4)} \qquad dM = 10 \log \left( \frac{m\beta + \dfrac{\bar{h}}{a_o}}{(2-m) \cdot \beta + \dfrac{\bar{h}}{a_o}} \right).$$

Mit

$$\beta = \frac{1}{2-m}$$

ist sichergestellt, daß bei freier Schallausbreitung an keiner Stelle eine Kaustik auftreten kann. Der Grenzfall der Schattenzone $a_o = -h$ ist durch das Verschwinden des Nenners gekennzeichnet.

Der Grenzfall große Entfernung ist durch $h/a_o \approx 0$ beschrieben. Die meteorologische Zusatzdämpfung erreicht dabei ein Maximum:

$$\text{(A5)} \qquad dM = -10 \log \frac{m}{2-m}$$

Bei der Reflexion am Boden ergibt sich das resultierende Meteorologiemaß für einen Reflexionspunkt zu

$$\text{(A6)} \qquad dM = 10 \log \left( \frac{r \cdot dM_1 \cdot dM_2}{r_1 \cdot dM_2 + r_2 \cdot dM_1} \right)$$

mit

$$dM_1 = \frac{m \cdot \beta + \dfrac{\bar{h}_1}{a_{o1}}}{(2-m)\beta + \dfrac{\bar{h}_1}{a_{o1}}}$$

und

$$dM_2 = \frac{m \cdot \beta + \dfrac{\bar{h}_2}{a_{o2}}}{(2-m)\beta + \dfrac{\bar{h}_2}{a_{o2}}}$$

wobei $a_{01}$ die Krümmung des Schallstrahls bis zum Reflexionspunkt $x_S$ und $a_{02}$ die Krümmung des Schallstrahls vom $x_S$ bis zum Aufpunkt beschreibt und $h_v$ der Grenzhöhenparameter ist.

Der obige Ansatz gilt auch bei Reflexionen höherer Ordnung, wobei der Index "1" sich auf den Bereich vor der ersten Reflexion und der Index "2" auf den Bereich nach der letzten Reflexion bezieht.

*B. Berechnungsverfahren für $a_o$, resp. $a_{0i}$*

Die gesuchte Größe $a_o$, die die maximale Höhe über der mittleren Höhe aus Aufpunkt und Quellenpunkt des Schallstrahls beschreibt, ist bei bekanntem Abstand r durch

$$(B1) \qquad a_o = E(r,v,\varphi,b) \, (a_o\beta+h)^{m-1}$$

bestimmt. Der Faktor E hängt vom Abstand r mit $x_q$ = r/2, der Windgeschwindigkeit v, vom Winkel $\varphi$, zwischen Windrichtung und der Ausbreitungsrichtung und von der durch die Quellenhöhe und Aufpunkthöhe bestimmten Steigung b ab. m wird durch die Ausbreitungsklasse festgelegt. Der Faktor $\beta$ ist durch

$$\beta = \frac{1}{2\text{-}m}$$

so festgelegt, daß es bei Gegenwind zu keiner Überschneidung der Strahlen (Kaustiken) kommen kann.
Führt man eine renormierte Höhe h' und Strahlhöhe $a_o$' mit

$$(B2) \qquad h' = h * K$$

und

$$(B3) \qquad a_o' = a_o * K$$

mit

$$(B4) \qquad K = \left(\frac{1}{|E|}\right)^{\frac{1}{2\text{-}m}}$$

ein, erhält man für E > 0

$$(B5) \qquad a_o' = (a_o'\cdot\beta + h')^{m\cdot1}$$

und für E < 0 erhält man:

$$(B6) \qquad + a_o' = -(h'+a_o' \cdot \beta)^{m-1}$$

Gleichung (B5) gilt für positive Krümmungsradien, Gleichung (B6) für negative Krümmungsradien. Der Fall geradliniger Schallausbreitung wird durch K=0 beschrieben.
Die Gleichung (B5) hat immer eine Lösung. Berücksichtigt man zur Berechnung von $a_o$' nach Gl. (B5) die beiden Grenzfälle:

1. Fall:

$$h' \gg a_o$$

$$a_o' = +h'^{m-1}$$

2. Fall:

$$h' < a_o$$

$$a_o' = \beta^{\frac{m-1}{2-m}}$$

wobei $\beta = 1/(2-m)$ gewählt wird,
können für positive E die dazwischen liegenden Werte durch Iteration bestimmt werden.

Für die Gleichung (B6) existieren zwei Lösungen. Die erste Lösung ergibt sich aus der Bedingung

$$h' + a_o' > 0$$

d.h. der Schallstrahl verläuft über dem Boden, bei $h' + a_o' = 0$ berührt der Schallstrahl den Boden. Die Schattenzone ergibt sich aus

$$(B7) \qquad a_{o,s} = (1-\beta)^{\frac{1}{2-m}}$$

Daraus leitet sich der Abstand $x_s$ der Schattenzone von der Quelle ab:

$$(B8) \qquad x_s = \left( \frac{2\gamma \cdot h^{2-m}}{\left(1+\vec{b}^2\right) \cdot \left(1-\beta\right)} \right)^{1/2}$$

Die zweite Lösung ergibt sich für

$$h' + a_o' < 0.$$

Wird $\beta < 1/(2-m)$ angesetzt, liegt, falls eine Lösung existiert, d.h. der Aufpunkt sich nicht in der Schattenzone befindet, die Lösung bei

$$a_o' > -h'$$

d.h. der Schallstrahl verläuft über dem Boden. Für $\beta > 1/(2-m)$ existiert eine zweite Lösung $a_o'$:

$$-h' \geq a_o' \geq -\frac{h'}{\beta}$$

Der Grenzfall der Schattenzone ist durch

$$(B9) \qquad a_{o,s} = (1-\beta)^{\frac{1}{2-m}}$$

eindeutig bestimmt.

Hat man die Umkehrfunktion für $\beta = 1/(2-m)$ bestimmt, können die Lösungen für andere Werte von $\beta$ algebraisch umgerechnet bestimmt werden. Ist die Lösung für

$$a_o = \frac{r^2}{8\gamma}\cdot(a_o\beta'+h)^{m-1}$$

gesucht, wird

$$a_o\beta'=\tilde{a}_o\cdot\beta$$

ersetzt. Damit erhält man

$$\tilde{a} = \frac{r^2}{8\gamma\cdot\beta}(\tilde{a}\beta + h)^{m-1}$$

$\tilde{a}$ wird bestimmt und auf $a_o$ mit

$$a_o = \tilde{a}_o \cdot (\beta / \beta)^{\frac{1-m}{2-m}}$$

umgerechnet. Ist $\beta' > \beta$ bei negativem $\gamma$, dann kann die obengenannte zweite Lösung zu Werten führen, für die

$$a_o > -h$$

ist, d.h. es existieren zwei reale Lösungen und damit zwei Strahlen, von denen der zweite Strahl eine Kaustik durchläuft. Zur numerischen Lösung können unterschiedliche Algorithmen angewendet werden, so z.B. eine numerische Iteration oder das bekannt Newtonsche Verfahren zur Bestimmung der Nullstellen und ähnliche Algorithmen. In der numerischen Lösung empfiehlt es sich, die Funktion für die 6 festen Werte von m zu tabellieren.undsätzlich kann

Grundsätzlich kann $\beta$ innerhalb der Grenzen $0 < \beta < 1$ gewählt werden.

Neben der Möglichkeit $\beta$ mit $\beta =1/ (2-m)$ zu wählen, die sich besonders für den Fall einer hohen Fokussierung des Schallstrahls ohne Kaustiken bewährt hat, kann $\beta$ vorzugsweise auch mit dem Wert 2/3, basierend auf dem Ansatz zur Anpassung an die mittlere Strahlhöhe gewählt werden.

In weiteren bevorzugten Ausführungsformen des Verfahrens nach der vorliegenden Erfindung wird $\beta$ so gewählt, daß der mittlere reziproke Krümmungsradius in den einzelnen Punkten des Schallstrahles über den gesamten Schallstrahl, nämlich

$$\frac{1}{\tilde{\tilde{R}}}$$

gleich dem reziproken Krümmungsradius des gesamten Schallstrahles ist, also, daß

$$\frac{1}{\tilde{\mathbf{R}}} = \frac{1}{\mathbf{R}} = \frac{2\cdot\mathbf{a_o}}{\mathbf{x_b^2}}$$

gilt, wobei $\tilde{R}$ der mittlere Krümmungsradius in den einzelnen Punkten des Schallstrahles über den gesamten Schallstrahl ist und **R** der Krümmungsradius des gesamten Schallstrahles ist.

Der Krümmungsradius R(z) über den Verlauf des Schallstrahles jeweils in einer Höhe z ist dabei nach Gl. 3.4 mit

$$R(z)=\frac{C_o\cdot z_o^{\,m}}{m\cdot(\upsilon_o\cos\varphi+dtm)\cdot z^{m-1}}$$

gegeben. R kann näherungsweise mit

$$R = \frac{x_b^2}{2 \cdot a_0}$$

ermittelt werden. Dies gilt aus folgender Überlegung heraus:

R sei $R = a_0 + h'$ mit h' als dem Abstand zwischen Kreismittelpunkt und Boden und $a_0$, wie bereits bekannt als dem maximalen Abstand des Schallstrahles vom Boden.

Dann gilt einerseits gilt $R^2 = h'^2 + x_b^2$, und somit $h'^2 = R^2 - x_b^2$, andererseits ist aber auch $R = a_0 + h$, somit $h' = R - a_0$ und daher auch $h'^2 = (R - a_0)^2$. Daher kann aus diesen beiden Überlegungen

$$R^2 - x_b^2 = (R - a_0)^2$$

angesetzt werden. Hieraus ergibt sich im weiteren dann

$$R^2 - x_b^2 = (R - a_0)^2$$

$$R^2 - x_b^2 = a_0^2 - 2 a_0 R + R^2$$

$$-x_b^2 = a_0^2 - 2 a_0 R$$

Und, da $a_0^2 \ll x_b^2$ ist, gilt näherungsweise

$$x_b^2 = 2 a_0 R$$

und somit

$$R = \frac{x_b^2}{2 \cdot a_0}$$

Aufgrund des bekannten Zusammenhanges

$$a_o = E \cdot (a_o \cdot \beta + h)^{m-1}$$

kann β nun so bestimmt werden, daß

$$\frac{1}{\tilde{R}} = \frac{1}{R} = \frac{2 \cdot a_0}{x_b^2}$$

gilt.

Darüber hinaus ist es jedoch auch möglich β experimentell zu bestimmen. Dies erfolgt dabei vorzugsweise vor dem Hintergrund der Kenntnis des Zusammenhangs aus Gl. 3.21, nämlich daß

$$dM = 10\log\left|\left(\frac{h}{a_o} + \beta \cdot m\right)/\left(\frac{h}{a_o} + \beta \cdot (2 - m)\right)\right|$$

ist. Im Übergang zur Schattenzone gilt jedoch

$$a_0 = -h,$$

so daß dann Gl. 3.21 wie folgt geschrieben werden kann:

$$dM = 10\log| (-1 + \beta \cdot m)/(-1 + \beta \cdot (2 - m))|$$

Für $\beta$ ergibt sich so

$$\beta = \frac{10^{0,1 \cdot |dm|} - 1}{1 - m} \ .$$

Da dM gemessen werden kann, kann $\beta$ auf diese Weise vorzugsweise auch experimentell bestimmt werden.

*C. Reflexionen*

Wie schon erläutert, treten eine oder drei einfache Reflexionen am Boden auf. Die Punkte werden durch die Bedingung, daß der Einfallswinkel gleich dem Ausfallswinkel ist, bestimmt. Der Strahl von der Quelle wird dadurch berechnet, daß die Aufpunkthöhe mit h = 0 angesetzt wird. Entsprechend wird für den zweiten Strahl angenommen, daß die Quelle auf h = 0 liegt und die Empfangshöhe gleich der Aufpunkthöhe ist.

Dabei kann die Krümmung der Schallstrahlen für die Teilstrahlen einzeln berechnet werden, oder die Krümmung wird für beide Strahlen gleich angesetzt, wobei jeweils immer die Krümmung des längeren Strahls herangezogen wird. Die Berechnungen zeigen, daß die unterschiedlichen Ansätze nur eine geringe Auswirkung auf die meteorologisch bedingte Zusatzdämpfung besitzen.

Numerisch werden die Reflexionspunkte X am Boden dadurch bestimmt, daß die Funktion

$$(C1) \qquad f(x) = z_1'(x) + z_2'(x)$$

für ein äquidistantes Raster zwischen Aufpunkt und Quellenpunkt bestimmt wird. $z_1'$ ist die erste Ablenkung des ersten Strahls am Boden an der Stelle x, $z_2'$ ist entsprechend definiert. Es hat sich als vorteilhaft erwiesen, diese Stützstellen durch ein Polygon dritter Ordnung zu approximieren und dafür die Nullstellen zu suchen, an denen die Reflexionsbedingung erfüllt ist. Der Vorteil-dieses Ansatzes ist es, daß er auch in nicht ebenem Gelände funktioniert.

Als schneller Algorithmus hat sich ein Algorithmus erwiesen, bei dem die Nullstelle jeweils durch Halbierung des Suchintervalls bestimmt wird.

Numerisch kann für konstante Krümmung die Reflexion bei ebenem Gelände durch die folgenden Ansätze beschrieben werden:

$$(C2) \quad z^o = a_o\left(1 - \frac{(x - a)^2}{x_B{}^2}\right)$$

wobei $z^\circ$ an der Quelle beginnt.

Für einfache Reflexionen und Reflexionen höherer Ordnungen und konstanter Krümmung der Strahlen wird die Funktion des Strahls, der den Empfänger erreicht durch

$$(C3) \quad z^{1} = a_{o}\left(1 - \frac{(x - a + 2 \cdot x_B \cdot n)^2}{x_B{}^2}\right)$$

beschrieben, wobei n für die Anzahl der Bodenreflexionen steht und a eine unbekannte Konstante ist.

Für $x_b$ (=$x_B$) ergibt sich, wenn die Bedingung $z^{o'} = z^{1'}$ am Reflexionspunkt am Boden erfüllt ist:

$$(C4) \quad x_b = \frac{x_a \text{-} x_q}{2 \cdot n \pm \sqrt{1 - \dfrac{h_q}{a_o}} \pm \sqrt{1 - \dfrac{h_a}{a_o}}}$$

a ergibt sich aus:

$$(C5) \quad a = x_q \pm x_B \cdot \sqrt{1 - \frac{h_q}{a_o}}$$

und

$$(C6) \quad a_o = \beta^{\frac{m\text{-}1}{2\text{-}m}} \cdot \left(\frac{x_B{}^2}{2 \cdot \gamma}\right)^{\frac{1}{2\text{-}m}}$$

Das Gleichungssystem läßt sich numerisch einfach mit einem Algorithmus zur Bestimmung jeweils einer Nullstelle bestimmen. Grundsätzlich existieren jeweils 4 Lösungen zu einem n, wobei höchstens jeweils 3 reale Lösungen auftreten.

Wenn keine reale (reelle) Lösung mehr existiert, dann existiert auch kein Schallstrahl für die Anzahl von n Reflexionen mehr.

**11. Implementierungbestimmter Ausführungsformen des erfindungsgemäßen Verfahrens**

*A. Beschreibung der Initialisierung*

Ziel dieses Programmteils ist die Umkehrfunktion Gl.(B5) zur Verfügung zu stellen

$$\beta = 1/(2\text{-}m)$$

1. Grenzfall:

$$h' \ll a_o \qquad a_o' = \beta^{\frac{m\text{-}1}{2\text{-}m}}$$

2. Grenzfall:

$$h' \gg a_o \qquad a_o' = (h')^{m\text{-}1}$$

Die Fälle dazwischen werden durch Iteration z.B. mit Newton'schem Algorithmus berechnet. Die Berechnung zwischen dem Grenzfall z.B. h' = 100 bis h' = 0 kann in einer Schrittweite von 0.01 erfolgen, damit ist $a_o'$ für alle

möglichen Werte von h' > 0 für die Gl. (B5) verfügbar.

Ziel dieses Programmteils ist die Umkehrfunktion Gl. (B6) zur Verfügung zu stellen

$$\beta = 1/(2-m)$$

Es existieren zwei Lösungen. Lösung 1 wird durch Iteration für h' > 0 bestimmt

$$a_o' + h' > 0$$

1. Grenzfall:

$$h' \gg a_o \qquad a_o' = -(h')^{m-1}$$

Die Werte zwischen h' = 100 und h' > 0 werden durch Iteration bestimmt und in Schritten von 0.01 tabelliert.

Die zweite Lösung liegt zwischen

$$a_o' + h' < 0$$

und

$$h' + a_o \cdot \beta > 0.$$

Die Werte zwischen h' = 100 und h' > 0 werden durch Iteration bestimmt.

*B. Die Berechnung*

| Eingabe | Quellenhöhe | hq |
|---|---|---|
| | Abmessung der Quelle | $s_q$ |
| | Aufpunkthöhe | $h_a$ |
| | Abstand | r |
| | Winkel zur Mitwindrichtung | $\varphi$ |
| | Windgeschwindigkeit | $\upsilon$ |
| | Stabilitätsklasse bzw. Faktor | m |
| | Bodenimpedanz | aus Messungen oder Literatur |
| | Festlegung z.B. | $\beta' = 0.5$ oder $\beta' = 0.75$ |
| | Turbulenzfaktor | $t_s$ |

1. Berechnung des Faktors E nach Gl. (A2)

2. Berechnung des Faktors K nach Gl. (B4)

3. Berechnung des Faktors h' nach Gl. (B2)

4. Berechnung des Faktors $a_o'$ aus der Umkehrfunktion durch Interpolation zwischen zwei Werten von h'.

| Fall 1 | E > 0 |
|---|---|

(fortgesetzt)

| Fall 2 | E < 0 | für β < 1/2-m 1. Lösung |
|---|---|---|
| | | für β > 1/2-m Prüfung, ob Lösung existiert. Wenn nein, wie Lösung 1. Sonst keine Reflexion am Boden, jedoch Kaustik und Lösung 2. |

5. Berechnung $\quad a_o = a_o'/K$ und Umrechnung auf $\beta'$

6. Berechnung $\quad$ dM nach Gl.(A4)

7. Berechnung der Druckamplitude des Direktstrahls

$$p_1 = 10^{\,0.05 \cdot dM}$$

8. Berechnung der Reflexionsstrahlen
Numerische Lösung nach Gl. (C1) und Intervallschachtelung oder mit n = 1 nach den Gl. (C4), (C5) und (C6)
Berechnung der Druckamplitude der Reflexion $p_i$

$$p_i = 10^{0.05 \cdot dMi}$$

wobei dMi nach Gl. (4.1) berechnet wird.

9. Berechnung des Reflexionsfaktors R nach Gl.(5.1) mit Gl.(5.6) oder mit Gl.(5.2) je nach gewählter Bodenimpedanz und multipliziert mit $p_i$ für den jeweiligen Winkel.

10. Berechnung der Turbulenzverschiebung Gl.(2.5) und Kohärenzlänge und Umrechnung auf resultierende Wegverschiebung durch quadratische Addition.

11. Berechnung der Betragsquadrate mit Gl.(7.4) für den Direktstrahl und die Reflexion i.

12. Durchführung der Berechnungsschritte 9 bis 11 für jede Frequenz in Schrittweite mit 1 % Frequenzzunahme.

13. Ausgabe des dBM als Funktion der Frequenz von 10 bis 16 kHz je nach Bedarf.

14. Berechnung der sonstigen Ausbreitungsparameter nach VDI 2714 als Funktion der Frequenz (z.B. Luftabsorption)

15. Berechnung der Oktavschallpegel oder Schmalbandpegel aus dem Schalleistungspegel der Quelle für den gewählten Aufpunkt.

## 12. Kohärenz

In der praktischen Anwendung existieren ausschließlich Quellen, die inkohärent abstrahlen, wenn man von technischen Quellen absieht, die gerade so konstruiert sind, daß sie zumindest teilweise kohärent abstrahlen können. Bedingung dafür, daß bei zwei überlagernden Strahlen Interferenzeffekte beobachtet werden können, ist, daß die Strahlen zumindest teilweise kohärent sind.
Unter kleinen Beobachtungswinkeln $\vartheta$ wird, wie aus der Optik und Astronomie wohl bekannt ist, die Strahlung kohärent, obwohl die Quelle, z.B. ein Fixstern, inkohärent strahlt. Die Bedingung für die Kohärenz lautet:

$$x \cdot \sin(\vartheta) < \lambda/4$$

wobei x die Abmessung der Quelle und $\lambda$ die Wellenlänge ist und $\vartheta$ der Öffnungswinkel, unter dem die Quelle beobachtet wird.

Im hier vorliegenden Problem werden zwei oder mehr Strahlen beobachtet, von denen einer direkt von der Quelle zum Beobachter und die übrigen unter einem Winkel $\vartheta$ zu diesem Strahl abgestrahlt und am Boden reflektiert werden. Kohärenz der Strahlung kann angenommen werden, wenn die obige Ungleichung erfüllt ist. Der Übergang von Kohärenz zur Inkohärenz kann dadurch beschrieben werden, daß eine Fluktuation $\Delta l$ ganz entsprechend der der Turbulenz als mittlere Längenverschiebung angesetzt wird:

$$(D1) \qquad \Delta l = 4 \cdot x \cdot \sin(\vartheta) \qquad m$$

Diese Formulierung ist äquivalent mit einer begrenzten Phasenfluktuation.

Mit Gl. (D1) kann unmittelbar gezeigt werden, daß eine Straße mit einer Quellenabmessung von ca. 0.5 m Höhe schon bei 50 m Abstand wie eine kohärente Quelle strahlt:

$$\Delta l = 4 \cdot 0.5 \sin\left(\frac{0.5}{50}\right) = \frac{4 \cdot 0.25}{50} = 0.02 \qquad m$$

Für den nächstgelegenen Straßenteil ist Kohärenz unter 4000 Hz gegeben. Dies erklärt die von Lange beobachteten Interferenzeinbrüche in der Schallemission von Straßen für Abstände zwischen 100 und 200 m. Andererseits sind ausgedehnte Industriequellen mit Höhen bis 40 m, die über diese Höhe vom Boden an auch abstrahlen, auch bis 1000 m Entfernung noch nicht kohärent.

$$\Delta l = \frac{4 \cdot 40 \cdot 80}{1000} = 9.6 \qquad m$$

Dies erklärt, warum Stüber bei der Messung in der Umgebung einer Ölraffinerie keine kohärenten Anteile gefunden hat.

**13. Vorteilhafte Anwendungen der Erfindung**

Die vorliegenden erfindungsgemäßen Verfahren und Vorrichtungen erlauben es nicht nur die Schallstrahlen einfach zu ermitteln, sondern darüber hinaus auch die durch das Wind- und Temperaturfeld erzeugte Fokussierung und Defokussierung ohne weitere numerische Differentiation incl. der durch die Reflexion am Boden hervorgerufenen Interferenzen unter Berücksichtigung der atmosphärischen Turbulenz zu bestimmen.

Vorteilhafterweise kann unter Zuhilfenahme der vorliegenden Erfindung die Bestimmung der Schallimmission bei bekannter räumlicher Struktur der Schallquellen für eine meteorologische Situation anhand der Windrichtung, Windgeschwindigkeit und Stabilitätsklasse erfolgen. Diese Anwendung ist außerordentlich nützlich, um anhand von wenigen Schallimmissionsmessungen zu prüfen, ob das Verfahren für die angesetzten oder gemessenen Schallemissionen korrekt ist. Damit kann die Aussagesicherheit von Messungen zur Überprüfung, ob Gewerbebetriebe die Immissionsrichtwerte einhalten, erheblich vereinfacht werden.

Durch Berechnung der Schallimmission für verschiedene Windrichtungen nach Tageszeiten und Vergleich mit entsprechenden kontinuierlichen Messungen können über einfache Modellansätze die Pegel von Fremdgeräuschquellen, wie z.B. Straßen- und Schienenverkehr von weitgehend kontinuierlich einwirkenden Gewerblichen Quellen mit hoher Präzision getrennt werden. Dies gilt insbesondere, wenn akustische Langzeitmessungen zum Einsatz kommen.

Die Berechnung der Wirkung von aktiven Schallschutzmaßnahmen in bestimmten meteorologischen Situationen kann vorteilhafterweise unter Verwendung der Verfahren und Vorrichtungen nach der vorliegenden Erfindung erfolgen.

So folgt etwa die Windrichtung in einem Flußtal nachts häufig der Fließrichtung des Wassers. Damit ist die Wahrscheinlichkeit einer Mitwindsituation bei Lärmschutzwällen oder -wänden, die parallel zum Fluß stehen, wesentlich geringer als bei einer Straße, die quer zur Fließrichtung verläuft. Solche Unterschiede, die sich ganz erheblich auswirken können, können so etwa nach der vorliegenden Erfindung berücksichtigt werden.

Innerhalb Europas herrschen sehr unterschiedliche klimatologische Bedingungen, die sich ebenfalls in bisher unbekannter Weise auf die Reichweite und Intensität von Lärmquellen auswirken. Solche regionalen Unterschiede in der Häufigkeit bestimmter meteorologischer Situationen, wie sie beispielsweise zwischen Bayern und Schleswig-Holstein oder Österreich und Dänemark dokumentiert sind, können vorteilhafterweise nach der vorliegenden Erfindung ebenfalls quantifiziert werden.

In vielen Fällen wird auf den Bau von Schirmwänden verzichtet, weil diese angeblich nicht mehr wirksam sind. Stattdessen werden keine oder passive Maßnahmen ergriffen. Die Aussage der Unwirksamkeit der Schallschirme beruht auf einer Extremalbetrachtung. Dabei wird angenommen, daß bei Inversion und Mitwind der Schirm wegen der starken Strahlenkrümmung übersprungen wird. Dies ist grundsätzlich richtig. Es stellt sich jedoch die Frage, wie häufig dieser Fall eintritt und ob dieser ungünstigste Fall nicht zu einer Zeit eintritt, in der z.B. Verkehrslärm wegen der geringen Fahrzeugdichte unerheblich ist, wie dies z.B. kurz vor Sonnenaufgang im Sommer, Frühjahr und Herbst der Fall ist. Hier gestattet die vorliegende Erindung eine weitaus differenziertere Abwägung von Maßnahmen.

Bei genauer Kenntnis der Abstrahlungsbedingungen der resultierenden Bodenreflexionen ist auch im gewerblichen Bereich eine wesentlich genauere akustische Planung möglich. So wird schon längere Zeit darüber spekuliert, daß bei Betriebsstätten der Großindustrie ausschließlich die in den Randzonen liegenden Schallquellen die Schallimmission bestimmen. Mit den Verfahren und Vorrichtungen nach der vorliegenden Erfindung läßt sich diese Vermutung überprüfen und quantifizieren. Damit können Lärmsanierungen wesentlich kostengünstiger ausgeführt werden.

Im folgenden werden nun die zugehörigen Zeichnungen erläutert. In dieser zeigen:

Fig. 1    die Parameter des parabolischen Ansatzes,

Fig. 2    eine numerische Lösung für die Gegenwindrichtung, und

Fig. 3    eine Schallausbreitung unter stabilen Bedingungen bei Gegenwind,

Fig. 4    eine Schallausbreitung unter instabilen Bedingungen bei Mitwind,

Fig. 5    einen Direktstrahl und Reflexion am Boden,

Fig. 6    einen Direktstrahl und Bodenreflexion bei Gegenwind und stabiler Wetterlage,

Fig. 7    eine Mitwindwetterlage unter stabilen Bedingungen, und

Fig. 8    eine Bodenreflexion bei instabiler Wetterlage.

Fig. 1 zeigt die Parameter des parabolischen Ansatzes. Auf der x-Achse ist der Abstand **1** aufgetragen, wohingegen die y-Achse die Höhe **2** angibt. $s_1$ und $s_2$ sind die Öffnungen der Strahlen bei konstanter und nicht konstanter Schallgeschwindigkeit.

Fig. 2 zeigt eine eine numerische Lösung für die Gegenwindrichtung. Der Winkel zum Wind beträgt hier 180°, der Bedeckungsgrad m = 0,42, die Windgeschwinfigkeit 3 m/s in 10 m Höhe. Die Schallquelle befindet sich in 15 m Höhe. Auf der x-Achse ist die Entfernung in Metern 1 aufgetragen, wohingegen die y-Achse die Höhe in Metern **2** angibt. Man kann den Strahl des Schalls nach Reflexion am Boden **3** von dem des Direktschalls **4** in der Darstellung unterscheiden. Ferner ist eine Zone zwischen Schatten und Strahlen mit Bodenreflexion (Halbschatten) zu sehen.

Fig. 3 zeigt eine Schallausbreitung unter stabilen Bedingungen mit einem Bedekkungsgrad von m = 0.41 bei Gegenwind mit einer Geschwindigkeit von v = 2 m/s. Die Wegdifferenz beträgt -0.06 m. Auf der x-Achse ist der Abstand **1** aufgetragen, wohingegen die y-Achse die Höhe **2** angibt.

Fig. 4 zeigt eine Schallausbreitung unter instabilen Bedingungen, der Bedeckungsgrad beträgt hier m = 0.09. Es herrscht Mitwind bei einer Geschwindigkeit von v = 2 m/s. Die Wegdifferenz beträgt 0.06 m. Auf der x-Achse ist wiederum der Abstand 1 aufgetragen, die y-Achse gibt auch hier die Höhe **2** an.

Fig. 5 zeigt einen Direktstrahl und Reflexion am Boden bei einer Quellenhöhe von 9.5 m und einer Aufpunkthöhe von 20 m. Auf der x-Achse ist der Abstand **1** aufgetragen, die y-Achse gibt die Höhe **2** an.

Fig. 6 zeigt einen Direktstrahl und Bodenreflexion bei Gegenwind und stabiler Wetterlage mit einem Bedekkungsgrad von m = 0.41. Wie in den Figuren zuvor ist auf der x-Achse ist der Abstand **1** aufgetragen und die y-Achse gibt auch hier die Höhe **2** an.

Fig. 7 zeigt eine Mitwindwetterlage unter stabilen Bedingungen (Bedeckungsgrad m=0.41). Es treten drei Reflexionen am Boden auf. Auf der x-Achse ist der Abstand **1** aufgetragen, wohingegen die y-Achse die Höhe **2** angibt.

Fig. 8 zeigt eine Bodenreflexion bei instabiler Wetterlage mit einem Bedeckungsgrad von m=0.09. Auf der x-Achse ist der Abstand **1** aufgetragen, die y-Achse gibt wie immer die Höhe **2** an.

**Patentansprüche**

1. Verfahren zur Ermittlung der zusätzlich zu den durch Abstand, Luftabsorption, Bewuchs und Bebauung sowie durch Abschirmung hervorgerufenen Dämpfungen gegebenen meteorologischen Zusatzdämpfung **dM** an einem Aufpunkt **A** eines, von einer an einem anderen Ort **Q** befindlichen Schallquelle im Freien ausgehenden Schalls, **dadurch gekennzeichnet, daß** zu ihrer Bestimmung von einem parabolischen Verlauf aller Schallstrahlen von **Q** nach **A** ausgegangen wird.

2. Verfahren zur Ermittlung der meteorologischen Zusatzdämpfung **dM** nach Anspruch 1, **dadurch gekennzeichnet, daß** der parabolische Verlauf aller Schallstrahlen dabei in etwa der Gleichung

$$z(x) = a_0 \cdot \left( 1 - \frac{(x - a_1)^2}{x_b^{\,2}} \right) + b_1 \cdot (x - a_1) + h$$

folgt, mit

$$a_1 = 0.5(x_q + x_a), \, b_1 = \frac{(h_a - h_q)}{x_a - x_q}, \, x_b = 0.5(x_a - x_q),$$

und

$$h = 0.5\,(h_a + h_q),$$

wo
**x** der jeweilige Abstand von der Schallquelle **Q**,
**z(x)** die Höhe des jeweiligen Schallstrahles am Ort x, d.h. im Abstand x von der Schallquelle Q angibt
$h_q$ die Höhe der Schallquelle **Q** , $h_a$ die Höhe des Aufpunktes **A** ist,
$x_q$ den Abstand des Ortes der Schallquelle **Q** von einem gewählten Nullpunkt **N** angibt,
$x_q$ ohne Beschränkung der Allgemeinheit so gewählt ist, daß $x_q = -x_a$ ist, wo $x_a$ der Abstand des Aufpunktes **A** vom Nullpunkt **N** ist, und $a_0$ die maximale Elevation des Strahls über h an der Stelle x = $x_b$ bzw. die minimale Elevation für negative Krümmungsradien beschreibt.

3. Verfahren zur Ermittlung der meteorologischen Zusatzdämpfung **dM** nach Anspruch 2, **dadurch gekennzeichnet, daß** nur der Direktstrahl mit parabolischem Verlauf berücksichtigt wird, wobei

(i) in einem ersten Schritt
der Abstand $\overline{QA}$, r genannt,
die Höhe der Schallquelle **Q, $h_q$** genannt,
die Höhe des Aufpunktes **A, $h_a$** genannt,
die Windgeschwindigkeit, **v** genannt,
der Winkel zwischen der Windrichtung und der Strecke $\overline{QA}$, φ genannt,
der Stabilitätsfaktor, **m** genannt, und
der meteorologische Temperaturgradient, **dtm** genannt
bestimmt werden;

(ii) in einem zweiten Schritt dann die Größe $a_0$, die die maximale Elevation des Strahls über h an der Stelle x = $x_b$ bzw. die minimale Elevation für negative Krümmungsradien beschreibt, vorzugsweise in einem iterativen Verfahren so ermittelt wird, daß sie der Gleichung

$$a_o = E \cdot (a_o \cdot \beta + h)^{m-1}$$

genügt, wobei

$$E = \frac{\left(1 + \bar{b}\right) \cdot x_b^2}{2 \cdot \gamma}$$

ist und
$x_q$ den Abstand des Ortes der Schallquelle **Q** von einem gewählten Nullpunkt **N** angibt,
$x_q$ ohne Beschränkung der Allgemeinheit so gewählt ist, daß $x_q = -x_a$ ist, wo $x_a$
der Abstand des Aufpunktes **A** vom Nullpunkt **N** und

$$x_b = \frac{\left(x_a - x_q\right)}{2}$$

ist,
$\beta$ mit $0 < \beta < 1$, vorzugsweise mit

$$\beta = \frac{1}{2-m}$$

oder

$$\beta = \frac{2}{3}$$

gewählt wird,
$\bar{b}$ die mittlere quadratische Steigung des Schallstrahls, und
$\gamma$ eine Funktion von Windgeschwindigkeit, Windrichtung und atmosphärischer Stabilität mit

$$\gamma = \frac{c_o \cdot Z_o{}^m}{m \cdot (v_o \cdot \cos\varphi + dtm)}$$

(mit $c_0$ als der Geschwindigkeit des Schalls in der Höhe $Z_0$ und $v_0$ als der Geschwindigkeit des Windes in der Höhe $Z_0$) ist, und

$$h = \frac{\left(h_a + h_q\right)}{2}$$

ist;

(iii) in einem dritten Schritt dann die meteorologische Zusatzdämpfung **dM** des Schalls am Aufpunkt **A** nach der Gleichung

$$dM = 10\log\left|\left(\frac{m\beta + \dfrac{h}{a_0}}{(2-m)\cdot\beta + \dfrac{h}{a_0}}\right)\right|$$

bestimmt wird, wobei $\beta$ wie in Schritt (ii) gewählt wird.

4. Verfahren zur Ermittlung der meteorologischen Zusatzdämpfung **dM** nach Anspruch 2, **dadurch gekennzeichnet, daß** ein Schallstrahl mit einer Reflexion am Boden berücksichtigt wird, wobei die Krümmung des einfallenden Strahles von der des reflektierten Strahles unterschiedlich sein kann, und wobei

(i) in einem ersten Schritt
der Abstand $\overline{QA}$, r genannt,
die Höhe der Schallquelle **Q, $h_q$** genannt,
die Höhe des Aufpunktes **A, $h_a$** genannt,
die Windgeschwindigkeit, **v** genannt,
der Winkel zwischen der Windrichtung und der Strecke $\overline{QA}$, $\varphi$ genannt,
der Stabilitätsfaktor, **m** genannt, und
der meteorologische Temperaturgradient, **dtm** genannt
bestimmt werden;

(ii) in einem zweiten Schritt der Reflexionspunkt $x_R$ bestimmt wird, indem

a) in einem ersten Teilschritt ein beliebiger Punkt zwischen Quelle und Aufpunkt als Startreflexionspunkt gewählt wird,

b) dann in einem zweiten Teilschritt $a_{01}$ als das $a_0$ des einfallenden und $a_{02}$ als das $a_0$ des reflektierten Strahls jeweils wie folgt bestimmt werden, nämlich, daß die Größen $a_{0i}$, die die maximale Elevation des Strahls über h an der Stelle $x = x_{bi}$ (i = 1,2) bzw. die minimale Elevation für negative Krümmungsradien beschreiben, vorzugsweise in einem iterativen Verfahren so ermittelt werden, daß sie jeweils der Gleichung

$$a_{oi} = E\cdot(a_{oi}\cdot\beta + h)m^{-1}$$

genügen,
wobei

$$E = \frac{\left(1 + \overline{b}\right)\cdot x_{b_i}^2}{2\cdot\gamma},$$

mit (i=1,2) ist und
$x_q$ den Abstand des Ortes der Schallquelle **Q** von einem gewählten Nullpunkt **N** angibt,
$x_R$ den Abstand des Reflexionspunktes vom Nullpunkt angibt,
$x_q$ ohne Beschränkung der Allgemeinheit so gewählt ist, daß $x_q = -x_a$ ist, wo $x_a$ der Abstand des Aufpunktes **A** vom Nullpunkt **N** und
im Falle der Berechnung von $a_{01}$ als aktuelles $a_0$

$$x_{b_1} = \frac{(x_r - x_q)}{2}$$

ist,

im Falle der Berechnung von $a_{02}$ als aktuelles $a_0$

$$x_{b_2} = \frac{(x_a - x_r)}{2}$$

ist,

$\beta$ mit $0 < \beta < 1$, vorzugsweise mit

$$\beta = \frac{1}{2-m}$$

oder

$$\beta = \frac{2}{3}$$

gewählt wird,

$\bar{b}$ die mittlere quadratische Steigung des Schallstrahls, und

$\gamma$ eine Funktion von Windgeschwindigkeit, Windrichtung und atmosphärischer Stabilität mit

$$\gamma = \frac{c_o \cdot Z_o{}^m}{m \cdot (v_o \cdot \cos\varphi + dtm)}$$

(mit $c_0$ als der Geschwindigkeit des Schalls in der Höhe $Z_0$ und $v_0$ als der Geschwindigkeit des Windes in der Höhe $Z_0$) ist, und

$$h = \frac{(h_a + h_q)}{2}$$

ist;

c) dann in einem dritten Teilschritt der gewählte Punkt $\mathbf{x_R}$ solange verschoben wird, bis der Einfallswinkel des einfallenden Schallstrahles in etwa gleich dem Ausfallswinkel des reflektierten Schallstrahles ist, d. h. vorzugsweise, daß die Gleichung

$$f(x) = 0, \text{ mit } f(x) = z_1'(x) + z_2'(x)$$

noch eine reelle Lösung hat, wobei $z_1'(x)$ die erste Ableitung des jeweils einfallenden und $z_2'(x)$ die erste Ableitung des jeweils reflektierten Strahls und $x = x_R$ ist, wobei der so schließlich iterativ erhaltene Punkt $\mathbf{x_R}$ den gesuchten Reflexionspunkt darstellt,

(iii) in einem dritten Schritt dann die meteorologische Zusatzdämpfung **dM** am Aufpunkt **A** für eine Reflexion des Schalls nach der Gleichung

$$dM = 10 \log \frac{r \cdot M_1 \cdot M_2}{r_2 \cdot M_1 + r_1 \cdot M_2}$$

mit

$$M_i = \left( m \cdot \beta \frac{h_i + h_v}{2 a_{oi}} \right) \Big/ \left( (2 - m) \cdot \beta + \frac{h_i + h_v}{2 a_{oi}} \right)$$

und i = 1, 2 bestimmt wird, wobei

$\beta$ mit $0 < \beta < 1$, so wie in Schritt (ii) gewählt wird,

$r_1$ der Abstand zwischen Quelle und Reflexionspunkt und $r_2$ der Abstand zwischen Reflexionspunkt und Aufpunkt, und

$h_v$ ein Grenzhöhenparameter ist.

5. Verfahren zur Ermittlung der meteorologischen Zusatzdämpfung **dM** nach Anspruch 4, **dadurch gekennzeichnet, daß** hierbei eine in etwa gleiche Krümmung des einfallenden Strahles und des reflektierten Strahles angesetzt, und die Lage des Reflexionspunktes $\mathbf{x_R}$ derart bestimmt wird, daß in dem zweiten Schritt (ii) des Verfahrens nach dem zweiten Teilschritt (ii) b) zur Bestimmung von $a_{01}$ und $a_{02}$ und vor dem dritten Teilschritt (ii) c) zur iterativen Bestimmung des Reflexionspunktes $\mathbf{x_R}$ ein weiterer Zwischenteilschritt ausgeführt wird, in dem

$$\frac{a_{01}}{x_{b1}^2} = \frac{a_{02}}{x_{b2}^2} = \text{Minimum}\left(\frac{a_{01}}{x_{b1}^2}, \frac{a_{02}}{x_{b2}^2}\right)$$

gesetzt wird.

6. Verfahren zur Ermittlung der meteorologischen Zusatzdämpfung **dM** nach Anspruch 2, **dadurch gekennzeichnet, daß** ein Schallstrahl mit mindestens zwei Reflexionen berücksichtigt wird, wobei hier eine in etwa gleiche Krümmung des einfallenden Strahles und des reflektierten Strahles angesetzt wird, derart, daß

(i) in einem ersten Schritt

der Abstand $\overline{\mathbf{QA}}$, r genannt,

die Höhe der Schallquelle **Q, $h_q$** genannt,

die Höhe des Aufpunktes **A, $h_a$** genannt,

die Windgeschwindigkeit, **v** genannt,

der Winkel zwischen der Windrichtung und der Strecke $\overline{\mathbf{QA}}$, $\varphi$ genannt,

der Stabilitätsfaktor, **m** genannt, und

der meteorologische Temperaturgradient, **dtm** genannt

bestimmt werden;

(ii) weiterhin die Größen $a_{0i}$ (mit i = 2, ..., n-1 und (n-1) als der maximalen Anzahl der Reflexionen), die die maximale Elevation der Strahlen über h an der Stelle x = $x_b$ bzw. die minimale Elevation für negative Krümmungsradien beschreiben, mit

$$a_{oi} = a_0 = \beta^{\frac{m-1}{2-m}} \cdot \left( \frac{x_B}{2 \cdot \gamma}^2 \right)^{\frac{1}{2-m}}$$

für i = 2, ..., n-1 ermittelt werden, wobei $\mathbf{x_b}$ durch

$$x_b = \frac{x_a - x_q}{2 \cdot n \pm \sqrt{1 - \frac{h_q}{a_o}} \pm \sqrt{1 - \frac{h_a}{a_o}}}$$

gegeben ist;

(iii) sowie $a_{01}$ und $a_{0n}$ mit

$$a_{01} = \frac{a_0}{4x_b^2} \cdot a^2$$

und

$$a_{0n} = \frac{a_0}{x_b^2} \cdot (2x_b - a_0)^2$$

bestimmt werden, wobei

**a** durch

$$a = x_q \pm x_B \cdot \sqrt{1 - \frac{h_q}{a_o}}$$

gegeben ist;

(iv) im weiteren die Reflexionspunkte $x_{R1}, x_{R2}, ..., x_{Rn}$ bestimmt werden, indem zunächst $x_{R1}$ als

$$x_{R1} = a,$$

bestimmt wird, und

dann alle weiteren Reflexionspunkte $x_{Ri}$ mit

$$x_{Ri} = a + 2x_b \cdot i$$

bestimmt werden;

(v) in einem weiteren Schritt die meteorologische Zusatzdämpfung $dM_{0,n}$ am Aufpunkt **A** für **n-1** (jedoch mindestens zwei) Reflexionen des Schallstrahls am Boden aufeinander aufbauend rekursiv nach der Gleichung

$$dM_{0,n} = \frac{\sum_{i=1}^{n} r_i \cdot dM_{0,n-1} \cdot dM_{n-1,n}}{\sum_{i=1}^{n-1} r_i \cdot dM_{n-1,n} + r_n \cdot dM_{n-1,n}}$$

mit dem Rekursionsanker $dM_{0,2}$ als dem dM Wert, der für die meteorologische Zusatzdämpfung vom Quellpunkt bis zum ersten Reflexionspunkt unter einfacher Reflexion am Boden nach einem der Verfahren nach Anspruch 4 oder 5 bestimmt wird, wobei

$dM_{i,j}$ die meteorologische Zusatzdämpfung vom Punkt i zum Punkt j hin ist und der Index 0 für den Punkt der Quelle, der Index n für den Aufpunkt und die Indizes 2, ..., n-1 für den (i-1)-ten bis (n-2)-ten Reflexionspunkt stehen,

$r_1$ der Abstand zwischen Quelle und erstem Reflexionspunkt und $r_n$ der Abstand zwischen letztem Reflexionspunkt und Aufpunkt,

$r_i$ (mit i = 2,..., n-1) der Abstand zwischen Reflexionspunkt i-1 und Reflexionspunkt i ist.

7. Verfahren zur Ermittlung der meteorologischen Zusatzdämpfung dM nach Anspruch 3, 4, 5 oder 6, **dadurch gekennzeichnet, daß** $\beta$ mit der Nebenbedingung $0 < \beta < 1$ so gewählt wird, daß der mittlere reziproke Krümmungsradius in den einzelnen Punkten des jeweiligen Schallstrahles über den gesamten Schallstrahl, nämlich

$$\frac{1}{\widetilde{R}}$$

gleich dem reziproken Krümmungsradius des gesamten Schallstrahles ist, also, daß β so gewählt wird, daß

$$\frac{1}{\widetilde{R}} = \frac{1}{R} = \frac{2 \cdot a_0}{x_b^2}$$

gilt, wobei
$\widetilde{R}$ der mittlere Krümmungsradius in den einzelnen Punkten des Schallstrahles über den gesamten Schallstrahl ist und
R der Krümmungsradius des gesamten Schallstrahles ist.

8. Verfahren zur Ermittlung meteorologischer Zusatzdämpfungen $dM_k$ (k = 1, ..., n mit n = Anzahl der bestimmten dM) nach Anspruch 3 sowie einem der Ansprüche 4, 5, 6 oder 7, **dadurch gekennzeichnet, daß**

   (i)

   a) zunächst die meteorologische Zusatzdämpfung für den Direktstrahl bestimmt wird,
   b) dann die aktuelle Anzahl der Reflexionen auf den Initialwert 1 gesetzt wird,

   (ii) dann,

   solange    für die aktuelle Anzahl von Reflexionen ein Strahl zwischen Quelle und Aufpunkt existiert,
   die jeweiligen meteorologischen Zusatzdämpfungen für die aktuelle Anzahl von Reflexionen für
   alle existierenden Strahlen mit dieser Anzahl von Reflexionen bestimmt werden, und
   dann die aktuelle Anzahl der Reflexionen um 1 erhöht und wiederum Schritt (ii) wiederholt wird.

9. Verfahren zur Ermittlung der Überlagerung des Schalls unter Verwendung mit Hilfe des Verfahrens nach Anspruch 8 bestimmter meteorologischer Zusatzdämpfungen $dM_k$ unter Berücksichtigung von Turbulenzen, **dadurch gekennzeichnet, daß** zusätzlich der Schallpegel **L** am Ort **Q** bestimmt wird und die Überlagerung derart ermittelt wird, daß die jeweilige Amplitude $A_k$ des jeweiligen Schallstrahles durch

$$A_k \cdot \sqrt{dM_k} \cdot e^{i\varphi_t}$$

substituiert wird, statt nur mit $A_k$ angenommen zu werden, wobei
hier vorstehend $A_k$ die Amplitude unter Berücksichtigung der bekannten, durch Abstand, Luftabsorption, Bewuchs und Bebauung sowie durch Abschirmung hervorgerufenen Dämpfungen mit Ausnahme des bisher bekannten Bodenmeterologiemaßes darstellt,
i für die imaginäre Einheit steht,
$\varphi_t$ die Phasenfluktuation zwischen zwei Strahlwegen ist, die zwischen einem Minimalwert $-\Delta\chi_i$ und einem Maximalwert $+\Delta\chi_i$ zeitlich zufällig verteilt ist, und
durch Integration über einen Zeitraum T das mittlere Schalldruckquadrat $\widetilde{P}_{Ages.}$ durch

$$\widetilde{P}_{A_{ges.}} = \sum_{k=1}^{n} A_k^2 + 2 \cdot \sum_{k=1}^{n} \sum_{p=k+1}^{n} A_k \cdot A_p \cdot \cos\psi_{kp} \cdot \frac{\sin\Delta\chi_{kp}}{\Delta\chi_{kp}}$$

mit

$$\Delta\chi_{kp} = wt_{kp} \cdot 2\pi \cdot f/C_o$$

bestimmt wird, wobei

$\psi$ der Phasenunterschied ist, der durch die Zeitdifferenz bestimmt ist, die der Schall von der Quelle Q zum Aufpunkt A über die unterschiedlichen Schallwege k und p benötigt,

$\Delta\chi_{kp}$ die maximale Phasenfluktuation durch Turbulenz,

$w_{tkp}$ die maximale Wegdifferenz durch Turbulenz

f die Frequenz, und

$C_o$ die Geschwindigkeit des Schalls in der Höhe 0 ist, sowie

hier vorstehend die Amplituden $A_k$ bereits unter Berücksichtigung der ermittelten $dM_k$ wie angeführt substituiert sind.

**10.** Verfahren zur Ermittlung der Überlagerung des Schalls unter Verwendung mit Hilfe des Verfahrens nach Anspruch 8 bestimmter meteorologischer Zusatzdämpfungen **$dM_k$** unter Berücksichtigung von Inkohärenz, **dadurch gekennzeichnet, daß** zusätzlich der Schallpegel **L** am Ort **Q** bestimmt wird und die Überlagerung derart ermittelt wird, daß die jeweilige Amplitude $A_k$ des jeweiligen Schallstrahles durch

$$A_k \cdot \sqrt{dM_k} \cdot e^{i\varphi_t}$$

substituiert wird, statt nur mit **$A_k$** angenommen zu werden, wobei

hier vorstehend **$A_k$** die Amplitude unter Berücksichtigung der bekannten, durch Abstand, Luftabsorption, Bewuchs und Bebauung sowie durch Abschirmung hervorgerufenen Dämpfungen mit Ausnahme des bisher bekannten Bodenmeterologiemaßes darstellt,

i für die imaginäre Einheit steht,

$\varphi_t$ die Phasenfluktuation zwischen zwei Strahlwegen ist, die zwischen einem Minimalwert $-\Delta\chi_i$ und einem Maximalwert $+\Delta\chi_i$ zeitlich zufällig verteilt ist, und

durch Integration über einen Zeitraum T das mittlere Schalldruckquadrat $\tilde{P}_{A_{ges.}}$ durch

$$\tilde{P}_{A_{ges.}} = \sum_{k=1}^{n} A_k^2 + 2 \cdot \sum_{k=1}^{n} \sum_{p=k+1}^{n} A_k \cdot A_p \cdot \cos\psi_{kp} \cdot \frac{\sin\Delta\chi_{kp}}{\Delta\chi_{kp}}$$

mit

$$\Delta\chi_{kp} = \Delta l_{kp} \cdot 2\pi \cdot f/C_o$$

bestimmt wird, wobei

$\psi$ der Phasenunterschied ist, der durch die Zeitdifferenz bestimmt ist, die der Schall von der Quelle Q zum Aufpunkt A über die unterschiedlichen Schallwege k und p benötigt,

$\Delta\chi_{kp}$ die maximale Phasenfluktuation durch Inkohärenz,

$\Delta l_{kp}$ die scheinbare mittlere Wegverschiebung durch Inkohärenz, mit $\Delta l_{kp} = 4 \cdot s \cdot \sin(\Delta_{kp})$ ist, wobei s die vertikale Abmessung der Quelle und $\Delta_{kp}$ der Abstrahlwinkel zwischen zwei Strahlwegen k und p ist, sowie

f die Frequenz, und

$C_o$ die Geschwindigkeit des Schalls in der Höhe 0 ist, sowie

hier vorstehend die Amplituden $A_k$ bereits unter Berücksichtigung der ermittelten $dM_k$ wie angeführt substituiert sind.

**11.** Verfahren zur Ermittlung der Überlagerung des Schalls unter Verwendung mit Hilfe des Verfahrens nach Anspruch 8 bestimmter meteorologischer Zusatzdämpfungen **$dM_k$** unter Berücksichtigung von Turbulenzen und Inkohärenz, **dadurch gekennzeichnet, daß** zusätzlich der Schallpegel **L** am Ort **Q** bestimmt wird und die Überlagerung derart ermittelt wird, daß die jeweilige Amplitude $A_k$ des jeweiligen Schallstrahles durch

**45**

$$A_k \cdot \sqrt{dM_k} \cdot e^{i\varphi_t}$$

substituiert wird, statt nur mit $A_k$ angenommen zu werden, wobei

hier vorstehend $A_k$ die Amplitude unter Berücksichtigung der bekannten, durch Abstand, Luftabsorption, Bewuchs und Bebauung sowie durch Abschirmung hervorgerufenen Dämpfungen mit Ausnahme des bisher bekannten Bodenmeterologiemaßes darstellt,

i für die imaginäre Einheit steht,

$\varphi_t$ die Phasenfluktuation zwischen zwei Strahlwegen ist, die zwischen einem Minimalwert $-\Delta\chi_i$ und einem Maximalwert $+\Delta\chi_i$ zeitlich zufällig verteilt ist, und

durch Integration über einen Zeitraum T das mittlere Schalldruckquadrat $\tilde{P}_{A_{ges.}}$ durch

$$\tilde{P}_{A_{ges.}} = \sum_{k=1}^{n} A_k^2 + 2 \cdot \sum_{k=1}^{n} \sum_{p=k+1}^{n} A_k \cdot A_p \cdot \cos\psi_{kp} \cdot \frac{\sin\Delta\chi_{kp}}{\Delta\chi_{kp}}$$

mit

$$\Delta\chi_{kp} = \sqrt{w_{tkp}^2 + \Delta l_{kp}^2} \cdot 2\pi \cdot f / C_o$$

bestimmt wird, wobei

$\psi$ der Phasenunterschied ist, der durch die Zeitdifferenz bestimmt ist, die der Schall von der Quelle Q zum Aufpunkt A über die unterschiedlichen Schallwege k und p benötigt,

$\Delta\chi_{kp}$ die maximale Phasenfluktuation durch Turbulenz und Inkohärenz,

$w_{tkp}$ die maximale Wegdifferenz durch Turbulenz,

$\Delta l_{kp}$ die scheinbare mittlere Wegverschiebung durch Inkohärenz, mit $\Delta l_{kp} = 4 \cdot s \cdot \sin(\Delta_{kp})$ ist, wobei s die vertikale Abmessung der Quelle und $\Delta_{kp}$ der Abstrahlwinkel zwischen zwei Strahlwegen k und p ist, sowie,

f die Frequenz, und

$C_o$ die Geschwindigkeit des Schalls in der Höhe 0 ist, sowie

hier vorstehend die Amplituden $A_k$ bereits unter Berücksichtigung der ermittelten $dM_k$ wie angeführt substituiert sind.

**12.** Verfahren zur Ermittlung der Überlagerung des Schalls unter Verwendung mit Hilfe des Verfahrens nach Anspruch 8 bestimmter meteorologischer Zusatzdämpfungen, **dadurch gekennzeichnet, daß** zusätzlich der Schallpegel **L** am Ort **Q** bestimmt wird und aus den so bestimmten Größen das mittlere Schalldruckquadrat $\tilde{P}_{A_{ges.}}$ bestimmt wird.

**13.** Verfahren zur Ermittlung der Verteilung der mittleren Schalldruckquadrate $\tilde{P}_{A_{ges.k}}$ unter Verwendung mit Hilfe des Verfahrens nach einem der Ansprüche 9 bis 12 bestimmter meteorologischer Zusatzdämpfungen $dM_i$ des Schalls einer Schallquelle am Orte Q in einem bestimmten Gebiet im Freien, derart, daß in diesem Gebiet Aufpunktorte $A_k$ in einem bestimmten Raster gewählt werden und

(i)

a) für jeden der gewählten Aufpunkte $A_k$ das zugehörige mittlere Schalldruckquadrat $\tilde{P}_{A_{ges.k}}$ für den von **Q** ausgehenden Schall bestimmt wird,

b) jedes der bestimmten mittleren Schalldruckquadrate $\tilde{P}_{A_{ges.k}}$ mit den Koordinaten des jeweils zugehörigen Aufpunktes $A_k$ in einem Speicher abgelegt wird, und

(ii) hiernach dann die meteorologischen mittleren Schalldruckquadrate $\tilde{P}_{A_{ges.k}}$ aus dem Speicher ausgelesen werden und mit Hilfe eines graphischen Ausgabegerätes entprechend der räumlichen Verteilung ihrer Aufpunkte $A_k$ und entsprechend dem Wert der jeweiligen bestimmten mittleren Schalldruckquadrate $\tilde{P}_{A_{ges.k}}$ graphisch dargestellt werden.

**14.** Vorrichtung zur Durchführung eines Verfahrens nach einem der Ansprüche 1 - 8, mit mindestens einer Einrichtung zur Erfassung des Abstandes $\overline{\mathbf{QA}}$, r genannt, der Höhe der Schallquelle **Q**, $\mathbf{h_q}$ genannt, der Höhe des Aufpunktes **A**, $\mathbf{h_a}$ genannt, der Windgeschwindigkeit, **v** genannt, des Winkels zwischen der Windrichtung und der Strecke $\overline{\mathbf{QA}}$, φ genannt, des Stabilitätsfaktors, **m** genannt, und des meteorologischen Temperaturgradienten, **dtm** genannt, mit einem Prozessor (CPU) zur Durchführung der erforderlichen Berechnungen in den Verfahrensschritten, mit einem Speicher zur Aufnahme und Bereitstellung der erhaltenen Ergebnisse und einem Speicher, in den ein Programm, das nach der in dem Verfahren angegebenen Berechnung arbeitet, geladen ist.

**15.** Vorrichtung nach Anspruch 14, auch zur Durchführung eines Verfahrens nach einem der Ansprüche 9 bis 12, **dadurch gekennzeichnet, daß** zusätzlich eine Einrichtung zur Erfassung des Schallpegels **L** und auch ein Speicher vorhanden ist, in den ein Programm, das nach der in dem Verfahren enthaltenen Berechnung arbeitet, geladen ist.

**16.** Vorrichtung nach Anspruch 15, zur Durchführung des Verfahrens nach Anspruch 13, **dadurch gekennzeichnet, daß** sie zusätzlich noch einen Plotter oder graphischen Drucker oder graphischen Bildschirm aufweist, auf dem die aus dem Speicher ausgelesenen mittleren Schalldruckquadrate $\tilde{p}_{A_{ges.}k}$ entprechend der räumlichen Verteilung ihrer Aufpunkte $\mathbf{A_k}$ und entsprechend ihrer jeweiligen Werte graphisch dargestellt werden können und auch einen Speicher in den ein Programm, daß nach der in dem Verfahren enthaltenen Berechnung arbeitet, geladen ist.

**17.** Computerprogramm, das Instruktionen aufweist, die zur Durchführung des Verfahrens nach einem der Ansprüche 1 bis 13 eingerichtet sind.

**Claims**

**1.** Method for determining the meteorological additional attenuation **dM**, given in addition to the attenuations caused by distance, air absorption, vegetation and built-up areas as well as by screening, at a receptor point **A** of a sound emanating outdoors from a sound source located at another site **Q, characterized in that** a parabolic course of all the sound beams from **Q** to **A** is assumed for the purpose of determining it.

**2.** Method for determining the meteorological additional attenuation **dM**, according to Claim 1, **characterized in that** the parabolic course of all the sound beams in this case approximately follows the equation

$$z(x) = a_o \cdot \left(1 - \frac{(x-a_1)^2}{x_b^2}\right) + b_1 \cdot (x - a_1) + h$$

where

$$a_1 = 0.5(x_q + x_a), \, b_1 = \frac{(h_a - h_q)}{x_a - x_q}, \, x_b = 0.5(x_a - x_q),$$

and

$$h = 0.5(h_a + h_q)$$

where
**x** specifies the respective distance from the sound source **Q,**
**z(x)** specifies the height of the respective sound beam at the site **x** that is to say at the distance **x** from the sound source **Q,**
$\mathbf{h_q}$ is the height of the sound source **Q**, $\mathbf{h_a}$ is the height of the receptor point **A,**
$\mathbf{x_q}$ specifies the distance of the site of the sound source **Q** from a selected zero point **N,**
$\mathbf{x_q}$ is selected without the limitation of generality such that $\mathbf{x_q = -x_a}$, where $\mathbf{x_a}$ is the distance of the receptor point **A** from the zero point **N,** and $\mathbf{a_0}$ describes the maximum elevation of the beam above **h** at the point $\mathbf{x = x_b}$ or the minimum elevation for negative radii of curvature.

3. Method for determining the meteorological additional attenuation **dM** according to Claim 2, **characterized in that** only the direct beam with a parabolic course is taken into account, wherein

(i) the following are determined in a first step
the distance $\overline{QA}$, called r
the height of the sound source **Q,** called $h_q$,
the height of the receptor point **A,** called $h_a$,
the wind velocity, called **v**
the angle between the wind direction and the distance $\overline{QA}$, called φ,
the stability factor, called **m,** and
the meteorological temperature gradient, called **dtm;**

(ii) in a second step the variable $a_0$, which describes the maximum elevation of the beam above **h** at the point **x = $x_b$** or the minimum elevation for negative radii of curvature, is preferably determined in an iterative method such that it satisfies the equation

$$a_0 = E \cdot (a_0 \cdot \beta + h)^{\,m-1}$$

wherein,

$$E = \frac{\left(1+\bar{b}\right) \cdot x_b^2}{2 \cdot \gamma}$$

and,
$x_q$ specifies the distance of the site of the sound source **Q** from a selected zero point **N,**
$x_q$ is selected without limitation of generality such that $x_q = -x_a$, where $x_a$ is the distance of the receptor point **A** from zero point **N** and

$$x_b = \frac{\left(x_a - x_q\right)}{2},$$

β is selected with 0 < β < 1, preferably with

$$\beta = \frac{1}{2\text{-}m}$$

or

$$\beta = \frac{2}{3},$$

$\bar{b}$ is the mean square gradient of the sound beam, and
γ is a function of wind speed, wind direction and atmospheric stability with

$$\gamma = \frac{c_o \cdot Z_0{}^m}{m \cdot (v_0 \cdot \cos\varphi + dtm)}$$

(with $c_0$ as the speed of sound at the height $Z_0$ and $v_0$ as the speed of the wind at the height $Z_0$), and

$$h = \frac{h_a + h_q}{2} \; ;$$

(iii) in a third step the meteorological additional attenuation **dM** of the sound at the receptor point **A** is then determined using the equation

$$\mathbf{dM} = 10\log\left|\left(\frac{\mathbf{m}\beta + \frac{\mathbf{h}}{\mathbf{a_0}}}{(2-\mathbf{m})\cdot\beta + \frac{\mathbf{h}}{\mathbf{a_0}}}\right)\right|$$

the $\beta$ being selected as in step (ii).

**4.** Method for determining the meteorological additional attenuation **dM** according to Claim 2, **characterized in that** a sound beam with one reflection at the ground is taken into account, wherein the curvature of the incident beam can differ from that of the reflected beam, and wherein

(i) the following are determined in a first step
the distance $\overline{\mathbf{QA}}$, called r
the height of the sound source **Q**, called $\mathbf{h_q}$,
the height of the receptor point **A**, called $\mathbf{h_a}$,
the wind velocity, called **v**
the angle between the wind direction and the distance $\overline{\mathbf{QA}}$, called $\varphi$,
the stability factor, called **m,** and
the meteorological temperature gradient, called **dtm;**

(ii) in a second step the reflection point $\mathbf{x_R}$ is determined, **in that**

a) an arbitrary point between the source and receptor point is selected as initial reflection point in a first sub-step,

b) then, in a second sub-step, $\mathbf{a_{01}}$ is determined as the $\mathbf{a_0}$ of the incident beam and $\mathbf{a_{02}}$ is determined as the $\mathbf{a_0}$ of the reflected beam, this being performed respectively as follows, specifically **in that** the variables $\mathbf{a_{0i}}$, which describe the maximum elevation of the beam above **h** at the point $\mathbf{x = x_{bi}}$ **(i=1,2)** or the minimal elevation for negative radii of curvature, are preferably determined in an iterative step such that they respectively satisfy the equation

$$a_{0i} = E\cdot(a_{0i}\cdot\beta+h)^{m-1}$$

wherein

$$E = \frac{\left(1+\overline{b}\right)\cdot x_{bi}^2}{2\cdot\gamma} \; ,$$

with (i=1,2) and
$\mathbf{x_q}$ specifies the distance of the site of the sound source **Q** from a selected zero point **N**,
$\mathbf{x_R}$ specifies the distance of the reflection point from the zero point,
$\mathbf{x_q}$ is selected without limitation of generality such that $\mathbf{x_q = -x_a}$, where $\mathbf{x_a}$ is the distance of the receptor point **A** from the zero point **N** and

$$x_{b_1} = \frac{(x_r - x_q)}{2}$$

in the case of a calculation of $a_{01}$ as current $a_0$,

$$x_{b_2} = \frac{(x_a - x_r)}{2}$$

in the case of a calculation of $a_{02}$ as current $a_0$,
$\beta$ being selected with $0 < \beta < 1$, preferably with

$$\beta = \frac{1}{2-m}$$

or

$$\beta = \frac{2}{3},$$

$\bar{b}$ is the mean square gradient of the sound beam, and
$\gamma$ is a function of wind speed, wind direction and atmospheric stability

$$\gamma = \frac{c_0 \cdot Z_0{}^m}{m \cdot (v_0 \cdot \cos\varphi + dtm)}$$

(with $c_0$ as the speed of sound at the height $Z_0$ and $v_0$ as the speed of the wind at the height $Z_0$), and

$$h = \frac{(h_a + h_q)}{2};$$

c) then in a third sub-step the selected point $x_R$ is displaced until the angle of incidence of the incident sound beam is approximately equal to the angle of emergence of the reflected sound beam, that is to say preferably that the equation

$$f(x) = 0, \text{ with } f(x) = z_1{}'(x) + z_2{}'(x)$$

still has a real solution, $z_1'(x)$ representing the first derivative of the respectively incident beam, and $z_2'(x)$ the first derivative of the respectively reflected beam, and $x = x_R$, the point $x_R$ thus finally obtained iteratively representing the sought reflection point, and

(iii) in a third step, the meteorological additional attenuation $dM$ at the receptor point $A$ is then determined for one reflection of the sound by using the equation

$$dM = 10 \log \frac{r \cdot M_1 \cdot M_2}{r_2 \cdot M_1 + r_1 \cdot M_2}$$

where

$$M_i = \left( m \cdot \beta \frac{h_i + h_v}{2a_{0i}} \right) \Big/ \left( (2-m) \cdot \beta + \frac{h_i + h_v}{2a_{0i}} \right)$$

and i=1,2

wherein
   $\beta$ is selected with $0 < \beta < 1$ as in step (ii),
   $r_1$ is the distance between the source and reflection point, and $r_2$ is the distance between the reflection point and receptor point, and
   $h_v$ is a limiting height parameter.

5. Method for determining the meteorological additional attenuation **dM** according to Claim 4, **characterized in that** in this case an approximately equal curvature of the incident beam and the reflected beam is set and the position of the reflection point $x_R$ is determined in such a way that a further intermediate sub-step is executed in the second step (ii) of the method after the second sub-step (ii)b) for determining $a_{01}$ and $a_{02}$ and before the third sub-step (ii)c) for iteratively determining the reflection point $x_R$ by setting

$$\frac{a_{01}}{x_{b_1}^2} = \frac{a_{02}}{x_{b_2}^2} = Minimum \left( \frac{a_{01}}{x_{b_1}^2}, \frac{a_{02}}{x_{b_2}^2} \right).$$

6. Method for determining the meteorological additional attenuation **dM** according to Claim 2, **characterized in that** account is taken of a sound beam with at least two reflections, an approximately equal curvature of the incident beam and the reflected beam being set here, in such a way that

   (i) the following are determined in a first step
      the distance $\overline{QA}$, called r
      the height of the sound source **Q**, called $h_q$,
      the height of the receptor point **A**, called $h_a$,
      the wind velocity, called **v**
      the angle between the wind direction and the distance $\overline{QA}$, called $\varphi$,
      the stability factor, called **m**, and
      the meteorological temperature gradient, called **dtm**;

   (ii) in addition variables $a_{0i}$ (with $i = 2,...,n-1$ and $(n-1)$ as the maximum number of the reflections) which describe the maximum elevation of the beams above **h** at the point $x = x_b$ or the minimum elevation for negative radii of curvature, are determined, with the aid of

$$a_{0i} = a_0 = \beta^{\frac{m-1}{2-m}} \cdot \left( \frac{x_B^2}{2 \cdot \gamma} \right)^{\frac{1}{2-m}}$$

   for i=2,...,n-1
      wherein
      $x_b$ is given by

$$x_b = \frac{x_a - x_q}{2 \cdot n \pm \sqrt{1 - \frac{h_q}{a_0}} \pm \sqrt{1 - \frac{h_a}{a_0}}};$$

(iii) and $a_{01}$ and $a_{0n}$ are determined with the aid of

$$a_{01} = \frac{a_0}{4x_b^2} \cdot a^2$$

***and***

$$a_{0n} = \frac{a_0}{x_b^2} \cdot (2x_b - a_0)^2$$

wherein
**a** is given by

$$a = x_q \pm x_B \cdot \sqrt{1 - \frac{h_q}{a_0}};$$

(iv) the reflection points $x_{R1}, x_{R2}, ..., x_{Rn}$, are further determined by first determining $x_{R1}$ as

$$x_{R1} = a,$$

and
then all further reflection points $x_{Ri}$ are determined with the aid of

$$x_{Ri} = a + 2x_b \cdot i;$$

and

(v) in a further step the meteorological additional attenuation $dM_{0,n}$ at the receptor point **A** is determined for **n-1** (but at least two) reflections of the sound beam at the ground in a recursive fashion building one on top of another by using the equation

$$\mathrm{dM}_{0,n} = \frac{\sum\limits_{i=1}^{n} r_i \cdot dM_{0,n-1} \cdot dM_{n-1,n}}{\sum\limits_{i=1}^{n-1} r_i \cdot dM_{n-1,n} + r_n \cdot dM_{n-1,n}}$$

with the recursion anchor $dM_{0,2}$ as the **dM** value which is determined using one of the methods according to Claim 4 or 5 for the meteorological additional attenuation from the source point up to the first reflection point given single reflection at the ground, wherein
$dM_{i,j}$ is the meteorological additional attenuation from point i to point j, and the index 0 stands for the point of the source, the index n for the receptor point and the indices 2,...,n-1 for the (i-1)th to (n-2)th reflection point, $r_1$ is the distance between the source and first reflection point and $r_n$ is the distance between the last reflection point and receptor point, and
$r_i$ (with i = 2,...,n-1) is the distance between the reflection point **i-1** and reflection point **i.**

**7.** Method for determining the meteorological additional attenuation **dM** according to Claim 3, 4, 5 or 6, **characterized in that** $\beta$ is selected with the secondary condition $0 < \beta < 1$ such that the mean reciprocal radius of curvature at the individual points of the respective sound beam over the entire sound beam, specifically

$$\frac{1}{\tilde{R}}$$

is equal to the reciprocal radius of curvature of the entire sound beam, that is to say that β is selected such that it holds that

$$\frac{1}{\tilde{R}} = \frac{1}{R} = \frac{2 \cdot a_0}{x_b^2}$$

wherein
$\tilde{R}$ is the mean radius of curvature at the individual points of the sound beam over the entire sound beam, and
**R** is the radius of curvature of the entire sound beam.

8. Method for determining meteorological additional attenuations **dM$_k$** (k = 1,...,n with n = number of the determined **dM**) according to Claim 3 and one of Claims 4, 5, 6, or 7, **characterized in that**

    (i)

        a) firstly the meteorological additional attenuation is determined for the direct beam,
        b) then the current number of reflections is set to the initial value 1,

    (ii) then,
    as long as a beam exists between the source and receptor point for the current number of reflections,
        the respective meteorological additional attenuations are determined for the current number of reflections for all existing beams with this number of reflections, and
    then the current number of reflections is increased by 1 and step (ii) is repeated once again.

9. Method for determining the superimposition of sound by using meteorological additional attenuations **dM$_k$** determined with the aid of the method according to Claim 8, while taking account of instances of turbulence, **characterized in that** in addition the sound level **L** at the site **Q** is determined and the superimposition is determined in such a way that the respective amplitude **A$_k$** of the respective sound beam is substituted by

$$A_k \cdot \sqrt{dM_k} \cdot e^{i\varphi_t}$$

instead of being adopted only with **A$_k$**, wherein
    hereabove **A$_k$** represents the amplitude while taking account of the known attenuations caused by distance, air absorption, vegetation and built-up areas and by screening, with the exception of the previously known measure of ground meteorology,
    **i** stands for the imaginary unit,
    $\varphi_t$ is the phase fluctuation between two beam paths, which is distributed randomly in time between a minimum value $-\Delta\chi_i$ and a maximum value $+\Delta\chi_i$, and
the mean square of sound pressure $\tilde{P}_{A_{ges.}}$ is determined by integration over a period T by

$$\tilde{P}_{A_{ges.}} = \sum_{k=1}^{n} A_k^2 + 2 \cdot \sum_{k=1}^{n} \sum_{p=k+1}^{n} A_k \cdot A_p \cdot \cos\psi_{kp} \cdot \frac{\sin\Delta\chi_{kp}}{\Delta\chi_{kp}}$$

where

$$\Delta\chi_{kp} = w_{tkp} \cdot 2\pi \cdot f/C_0,$$

wherein

$\psi$ is the phase difference, which is determined by the time difference which the sound requires from the source **Q** to the receptor point **A** via the different sound paths k and p,

$\Delta\chi_{kp}$ is the maximum phase fluctuation through turbulence,

$w_{tkp}$ is the maximum path difference through turbulence,

f is the frequency, and

$C_0$ is the speed of sound at the height 0, and

hereabove the amplitudes $\mathbf{A_k}$ are already substituted as set forth taking account of the determined $\mathbf{dM_k}$.

10. Method for determining the superimposition of sound by using meteorological additional attenuations $\mathbf{dM_k}$ determined with the aid of the method according to Claim 8, while taking account of incoherence, **characterized in that** in addition the sound level **L** at the site **Q** is determined and the superimposition is determined in such a way that the respective amplitude $\mathbf{A_k}$ of the respective sound beam is substituted by

$$A_k \cdot \sqrt{dM_k} \cdot e^{i\varphi_t}$$

instead of being adopted only with $\mathbf{A_k}$, wherein

hereabove $\mathbf{A_k}$ represents the amplitude while taking account of the known attenuations caused by distance, air absorption, vegetation and built-up areas and by screening, with the exception of the previously known measure of ground meteorology,

**i** stands for the imaginary unit,

$\varphi_t$ is the phase fluctuation between two beam paths, which is distributed randomly in time between a minimum value $-\Delta\chi_i$ and a maximum value $+\Delta\chi_i$, and

the mean square of sound pressure $\tilde{P}_{A_{ges.}}$ is determined by integration over a period T by

$$\tilde{P}_{A_{ges.}} = \sum_{k=1}^{n} A_k^2 + 2 \cdot \sum_{k=1}^{n} \sum_{p=k+1}^{n} A_k \cdot A_p \cdot \cos\psi_{kp} \cdot \frac{\sin\Delta\chi_{kp}}{\Delta\chi_{kp}}$$

where

$$\Delta\chi_{kp} = \Delta l_{kp} \cdot 2\pi \cdot f/C_0,$$

wherein

$\psi$ is the phase difference, which is determined by the time difference which the sound requires from the source **Q** to the receptor point **A** via the different sound paths k and p,

$\Delta\chi_{kp}$ is the maximum phase fluctuation through incoherence,

$\Delta l_{kp}$ is the apparent mean path displacement through incoherence, with $\Delta l_{kp} = 4 \cdot s \cdot \sin(\Delta_{kp})$, **s** being the vertical dimension of the source and $\Delta_{\mathbf{kp}}$ being the emission angle between two beam paths **k** and **p**, and

f is the frequency, and

$C_0$ is the speed of sound at the height 0, and

hereabove the amplitudes $\mathbf{A_k}$ are already substituted as set forth taking account of the determined $\mathbf{dM_k}$.

11. Method for determining the superimposition of sound by using meteorological additional attenuations $\mathbf{dM_k}$ determined with the aid of the method according to Claim 8, while taking account of instances of turbulence and incoherence, **characterized in that** in addition the sound level **L** at the site **Q** is determined and the superimposition is determined in such a way that the respective amplitude $\mathbf{A_k}$ of the respective sound beam is substituted by

$$A_k \cdot \sqrt{dM_k} \cdot e^{i\varphi_t}$$

instead of being adopted only with $\mathbf{A_k}$, wherein

hereabove $\mathbf{A_k}$ represents the amplitude while taking account of the known attenuations caused by distance, air absorption, vegetation and built-up areas and by screening, with the exception of the previously known measure of ground meteorology,

$\mathbf{i}$ stands for the imaginary unit,

$\varphi_\mathbf{t}$ is the phase fluctuation between two beam paths, which is distributed randomly in time between a minimum value $-\Delta\chi_\mathrm{i}$ and a maximum value $+\Delta\chi_\mathrm{i}$, and

the mean square of sound pressure $\tilde{P}_{A_{ges.}}$ is determined by integration over a period T by

$$\tilde{P}_{A_{ges.}} = \sum_{k=1}^{n} A_k^2 + 2 \cdot \sum_{k=1}^{n} \sum_{p=k+1}^{n} A_k \cdot A_p \cdot \cos\psi_{kp} \cdot \frac{\sin\Delta\chi_{kp}}{\Delta\chi_{kp}}$$

where

$$\Delta\chi_{kp} = \sqrt{w_{tkp}^2 + \Delta l_{kp}^2} \cdot 2\pi \cdot f / C_0 \,,$$

wherein

$\psi$ is the phase difference, which is determined by the time difference which the sound requires from the source $\mathbf{Q}$ to the receptor point $\mathbf{A}$ via the different sound paths k and p,

$\Delta\chi_{kp}$ is the maximum phase fluctuation through turbulence and incoherence,

$w_{tkp}$ is the maximum path difference through turbulence,

$\Delta l_{kp}$ is the apparent mean path displacement through incoherence, with $\Delta l_{kp} = 4 \cdot s \cdot \sin(\Delta_{kp})$, $\mathbf{s}$ being the vertical dimension of the source and $\Delta_\mathbf{kp}$ being the emission angle between two beam paths $\mathbf{k}$ and $\mathbf{p}$, and

f is the frequency, and

$C_0$ is the speed of sound at the height 0, and

hereabove the amplitudes $\mathbf{A_k}$ are already substituted as set forth taking account of the determined $\mathbf{dM_K}$.

**12.** Method for determining the superimposition of sound by using meteorological additional attenuations determined with the aid of the method according to Claim 8, **characterized in that** in addition the sound level **L** at the site **Q** is determined, and the mean square of sound pressure $\tilde{P}_{A_{ges.}}$ is determined from the variables thus determined.

**13.** Method for determining the distribution of the mean squares of sound pressure $\tilde{P}_{A_{ges.k}}$ by using meteorological additional attenuations $\mathbf{dM_i}$, determined with the aid of the method according to one of Claims 9 to 12, of the sound of a sound source at the site **Q** in a specific zone outdoors in such a way that receptor point sites $\mathbf{A_k}$ are selected in this zone in a specific grid, and

(i)

a) for each of the selected receptor points $\mathbf{A_k}$ the associated mean square of sound pressure $\tilde{P}_{A_{ges.k}}$ is determined for the sound emanating from $\mathbf{Q}$,

b) each of the specific mean squares of sound pressure $\tilde{P}_{A_{ges.k}}$ is stored in a memory with the co-ordinates of the respectively associated receptor point $\mathbf{A_k}$, and

(ii) thereafter, the meteorological mean squares of sound pressure $\tilde{P}_{A_{ges.k}}$ are then read out of the memory and are displayed graphically with the aid of a graphic output device in accordance with the spatial distribution of their receptor points $\mathbf{A_k}$ and in accordance with the value of the respective determined mean squares of sound pressure $\tilde{P}_{A_{ges.k}}$.

**14.** Apparatus for carrying out a method according to one of Claims 1-8, having at least one device to aquire the distance $\overline{\mathbf{QA}}$, called **r**, the height of the sound source **Q**, called $\mathbf{h_q}$, the height of the receptor point **A**, called $\mathbf{h_a}$, the wind velocity, called **v**, the angle between the wind direction and the distance $\overline{\mathbf{QA}}$, called $\varphi$, the stability factor, called **m**, and the meteorological temperature gradient, called **dtm**, having a processor (CPU) for carrying out the required calculations in the method steps, having a memory for holding and providing the results obtained, and a memory into which a program is loaded which operates in accordance with the calculation specified in the method.

15. Apparatus according to Claim 14, also for carrying out a method according to one of Claims 9 to 12, **characterized in that** present in addition is a device to acquire the sound level **L,** and also a memory into which a program is loaded which operates in accordance with the calculation included in the method.

16. Apparatus according to Claim 15, for carrying out the method according to Claim 13, **characterized in that** it additionally also has a plotter or graphic printer or graphic display screen on which the mean squares of sound pressure $\tilde{p}_{A_{ges.k}}$ read out of the memory can be displayed graphically in accordance with the spatial distribution of their receptor points $\mathbf{A_k}$ and in accordance with their respective values and also has a memory into which a program is loaded which operates in accordance with the calculation included in the method.

17. Computer program having instructions adapted to carry out the method according to one of claims 1 to 13.

**Revendications**

1. Procédé de détermination de l'atténuation météorologique supplémentaire dM ajoutée aux atténuations suscitées par la distance, l'absorption atmosphérique, la végétation et les constructions ainsi que par les écrans antibruit en un point de destination A d'un son issu à l'air libre d'une source sonore se trouvant dans un autre lieu Q, **caractérisé en ce que** l'on part d'une courbe parabolique de tous les rayons sonores de Q à A pour leur détermination.

2. Procédé de détermination de l'atténuation météorologique supplémentaire dM selon la revendication 1, **caractérisé en ce que** la courbe parabolique de tous les rayons sonores répond en l'occurrence à l'équation :

$$z(x) = a_o \cdot \left( 1 - \frac{(x-a_1)^2}{x_b^{\ 2}} \right) + b_1 \cdot (x - a_1) + h$$

avec

$$a_1 = 0.5(x_q + x_a),\ b_1 = \frac{(h_a - h_q)}{x_a - x_q},\ x_b = 0.5(x_a - x_q),$$

et

$$h = 0.5(h_a + h_q)$$

où
x désigne la distance respective de la source sonore Q,
z(x) désigne la hauteur du rayon sonore respectif au lieu x, c'est-à-dire à la distance x de la source sonore Q,
$h_q$ est la hauteur de la source sonore Q, $h_a$ est la hauteur du point de destination A,
$x_q$ est la distance entre le lieu de la source sonore Q et un point de référence choisi N,
$x_q$ est choisi sans limiter la généralité de sorte que $x_q = -x_a$, où $x_a$ est la distance entre le point de destination A et le point de référence N, et $a_o$ décrit l'élévation maximale du rayon au-dessus de h au point $x = x_b$, respectivement l'élévation minimale pour des rayons de courbure négatifs.

3. Procédé de détermination de l'atténuation météorologique supplémentaire dM selon la revendication 2, **caractérisé en ce que** l'on ne prend en compte que le rayon direct à courbe parabolique, dans lequel :

   (i) dans une première étape, on détermine :

la distance $\overline{QA}$, dénommée r,
la hauteur de la source sonore Q, dénommée $h_q$,
la hauteur du point de destination A, dénommée $h_a$,
la vitesse du vent, dénommée v,
l'angle entre la direction du vent et le segment $\overline{QA}$, dénommé φ,
le facteur de stabilité, dénommé m, et
le gradient de température météorologique, dénommé dtm;

(ii) dans une deuxième étape, on détermine la grandeur $a_o$, qui décrit l'élévation maximale du rayon au-dessus de h au point $x = x_b$, respectivement l'élévation minimale pour des rayons de courbure négatifs, de préférence par une procédure itérative de telle sorte qu'elle satisfasse à l'équation :

$$a_o = E \cdot (a_o \cdot \beta + h)^{m-1}$$

où

$$E = \frac{\left(1 + \bar{b}\right) \cdot x_b^2}{2 \cdot \gamma}$$

et
$x_q$ indique la distance entre le lieu de la source sonore Q et un point de référence choisi N,
$x_q$ est choisi sans limiter la généralité de sorte que $x_q = -x_a$, où $x_a$ est la distance entre le point de destination A et le point de référence N et

$$x_b = \frac{\left(x_a - x_q\right)}{2},$$

β est choisi avec $0 < \beta < 1$, de préférence avec

$$\beta = \frac{1}{2\text{-}m}$$

ou

$\beta = \frac{2}{3}\bar{b}$ est le gradient quadratique moyen du rayon sonore, et

γ est une fonction de la vitesse du vent, de la direction du vent et de la stabilité atmosphérique avec

$$\gamma = \frac{c_0 \cdot Z_0^{m}}{m \cdot (v_0 \cdot \cos\varphi + dtm)}$$

(avec $c_0$ comme vitesse du son à la hauteur $Z_0$ et $v_0$ comme vitesse du vent à la hauteur $Z_0$), et

$$h = \frac{(h_a + h_q)}{2};$$

(iii) dans une troisième étape, on détermine l'atténuation météorologique supplémentaire dM du son au point de destination A selon l'équation :

$$dM = 10 \log \left| \left( \frac{m\beta + \frac{h}{a_0}}{(2-m) \cdot \beta + \frac{h}{a_0}} \right) \right|$$

où $\beta$ est choisi comme à l'étape (ii).

**4.** Procédé de détermination de l'atténuation météorologique supplémentaire dM selon la revendication 2, **caractérisé en ce qu'**un rayon sonore est pris en compte avec une réflexion au sol, la courbure du rayon incident pouvant être différente de celle du rayon réfléchi, dans lequel :

(i) dans une première étape, on détermine :

la distance $\overline{QA}$, dénommée r,
la hauteur de la source sonore Q, dénommée $h_q$,
la hauteur du point de destination A, dénommée $h_a$,
la vitesse du vent, dénommée v,
l'angle entre la direction du vent et le segment $\overline{QA}$, dénommé $\varphi$,
le facteur de stabilité, dénommé m, et
le gradient de température météorologique, dénommé dtm;

(ii) dans une deuxième étape, on détermine le point de réflexion $x_R$,

a) en choisissant dans une première étape partielle un point quelconque entre la source et le point de destination comme point de réflexion de départ,

b) en déterminant ensuite, dans une deuxième étape partielle, $a_{01}$ comme l'$a_0$ du rayon incident et $a_{02}$ comme l'$a_0$ du rayon réfléchi, respectivement, comme suit, à savoir que les grandeurs $a_{0i}$, qui décrivent l'élévation maximale du rayon au-dessus de h au lieu $x = x_{bi}$ (i=1,2), respectivement l'élévation minimale pour des rayons de courbure négatifs, de préférence par une procédure itérative de telle sorte qu'elles satisfassent respectivement à l'équation :

$$a_{oi} = E \cdot (a_{oi} \cdot \beta + h)^{m-1}$$

où :

$$E = \frac{(1 + \vec{b}) \cdot x_{bi}^2}{2 \cdot \gamma},$$

avec (i=1,2) et
$x_q$ indique la distance entre le lieu de la source sonore Q et un point de référence choisi N,
$x_r$ indique la distance entre le point de réflexion et le point de référence,
$x_q$ est choisi sans limiter la généralité de sorte que $x_q = -x_a$, où $x_a$ est la distance entre le point de destination A et le point de référence N
et en cas de calcul de $a_{01}$ en tant que $a_0$ actuel

$$x_{b_1} = \frac{(x_r - x_q)}{2}$$

en cas de calcul de $a_{02}$ en tant que $a_0$ actuel

$$x_{b_2} = \frac{(x_a - x_r)}{2}$$

$\beta$ est choisi avec $0 < \beta < 1$, de préférence avec

$$\beta = \frac{1}{2-m}$$

ou

$$\beta = \frac{2}{3},$$

$\bar{b}$ est gradient quadratique moyen du rayon sonore, et
$\gamma$ est une fonction de la vitesse du vent, de la direction du vent et de la stabilité atmosphérique avec

$$\gamma = \frac{c_0 \cdot Z_0{}^m}{m \cdot (v_0 \cdot \cos\varphi + dtm)}$$

(avec $c_0$ comme vitesse du son à la hauteur $Z_0$ et $v_0$ comme vitesse du vent à la hauteur $Z_0$), et

$$h = \frac{(h_a + h_q)}{2};$$

c) ensuite, dans une troisième étape partielle, le point choisi $x_R$ est déplacé jusqu'à ce que l'angle d'incidence du rayon sonore incident soit plus ou moins égal à l'angle de sortie du rayon sonore réfléchi, c'est-à-dire de préférence de telle sorte que l'équation :

$$f(x) = 0, \text{ avec } f(x) = z_1'(x) + z_2'(x)$$

ait encore une solution réelle, $z_1'(x)$ est la première dérivée du rayon respectivement incident et $z_2'(x)$ est la première dérivée du rayon respectivement réfléchi et $x = x_R$, le point $x_R$ finalement obtenu par itération représentant le point de réflexion recherché

(iii) dans une troisième étape, on détermine l'atténuation météorologique supplémentaire dM au point de destination A pour une réflexion du son selon l'équation :

$$dM = 10 \log \frac{r \cdot M_1 \cdot M_2}{r_2 \cdot M_1 + r_1 \cdot M_2}$$

avec

$$M_i = \left( m \cdot \beta \frac{h_i + h_v}{2a_{0i}} \right) / \left( (2-m) \cdot \beta + \frac{h_i + h_v}{2a_{0i}} \right)$$

et i = 1,2

où l'on choisit $\beta$ avec $0 < \beta < 1$ comme à l'étape (ii),

$r_1$ est la distance entre la source et le point de réflexion et $r_2$ est la distance entre le point de réflexion et le point de destination, et

$h_v$ est un paramètre de hauteur limite.

**5.** Procédé de détermination de l'atténuation météorologique supplémentaire dM selon la revendication 4, **caractérisé en ce que**, en l'occurrence, on part d'une courbure plus ou moins égale du rayon incident et du rayon réfléchi, et on détermine la position du point de réflexion $x_R$ de telle sorte que, dans la deuxième étape (ii) du procédé après la deuxième étape partielle (ii) b) pour la détermination de $a_{01}$ et $a_{02}$ et avant la troisième étape partielle (ii) c) pour la détermination itérative du point de réflexion $x_R$, on réalise une autre étape partielle intermédiaire dans laquelle on pose :

$$\frac{a_{01}}{x_{b_1}^2} = \frac{a_{02}}{x_{b_2}^2} = Minimum \left( \frac{a_{01}}{x_{b_1}^2}, \frac{a_{02}}{x_{b_2}^2} \right)$$

**6.** Procédé de détermination de l'atténuation météorologique supplémentaire dM selon la revendication 2, **caractérisé en ce qu'**on prend en compte un rayon sonore avec au moins deux réflexions, dans lequel on part ici d'une courbure plus ou moins égale du rayon incident et du rayon réfléchi, de telle sorte que :

(i) dans une première étape, on détermine :

la distance $\overline{QA}$, dénommée r,
la hauteur de la source sonore Q, dénommée $h_q$,
la hauteur du point de destination A, dénommée $h_a$,
la vitesse du vent, dénommée v,
l'angle entre la direction du vent et le segment $\overline{QA}$, dénommé $\varphi$,
le facteur de stabilité, dénommé m, et
le gradient de température météorologique, dénommé dtm;

(ii) par ailleurs, on détermine les grandeurs $a_{0i}$ (avec i=2,...,n-1 et (n-1) comme nombre maximal de réflexions), qui décrivent l'élévation maximale des rayons au-dessus de h au point $x = x_b$, respectivement l'élévation minimale pour des rayons de courbure négatifs, par :

$$a_{0i} = a_0 = \beta^{\frac{m-1}{2-m}} \cdot \left( \frac{x_B^2}{2 \cdot \gamma} \right)^{\frac{1}{2-m}}$$

pour i = 2, ..., n-1
dans lequel $x_b$ est donné par

$$x_b = \frac{x_a - x_q}{2 \cdot n \pm \sqrt{1 - \dfrac{h_q}{a_0}} \pm \sqrt{1 - \dfrac{h_a}{a_0}}};$$

(iii) et on détermine $a_{01}$ et $a_{0n}$ par :

$$a_{01} = \frac{a_0}{4x_b^2} \cdot a^2$$

et

$$a_{0n} = \frac{a_0}{x_b^2} \cdot (2x_b - a_0)^2$$

où
a est donné par

$$a = x_q \pm x_B \cdot \sqrt{1 - \frac{h_q}{a_0}};$$

(iv) en outre, on détermine les points de réflexion $x_{R1}$, $x_{R2}$, ..., $x_{Rn}$ en déterminant tout d'abord $x_{R1}$ par :

$$x_{R1} = a,$$

et
on détermine ensuite tous les autres points de réflexion $x_{Ri}$ par :

$$x_{Ri} = a + 2x_b \cdot i;$$

(v) dans une autre étape, on détermine l'atténuation météorologique supplémentaire $dM_{0,n}$ au point de destination A pour n-1 (mais au moins deux) réflexions du rayon sonore au sol par récurrence en basant une atténuation sur d'autres, selon l'équation :

$$dM_{0,n} = \frac{\displaystyle\sum_{i=1}^{n} r_i \cdot dM_{0,n-1} \cdot dM_{n-1,n}}{\displaystyle\sum_{i=1}^{n-1} r_i \cdot dM_{n-1,n} + r_n \cdot dM_{n-1,n}}$$

avec l'ancrage de récurrence $dM_{0,2}$ comme valeur dM, qui est déterminée pour l'atténuation météorologique supplémentaire entre le point de source et le premier point de réflexion en réflexion simple sur le sol selon l'un des procédés de la revendication 4 ou 5, où
$dM_{i,j}$ est l'atténuation météorologique supplémentaire entre le point i et le point j et l'indice 0 désigne le point de la source, l'indice n désigne le point de destination et les indices 2, ... , n-1 désignent les (i-1)ième à (n-2) ième points de réflexion,
$r_1$ est la distance entre la source et le premier point de réflexion et $r_n$ est la distance entre le dernier point de réflexion et le point de destination,

$r_i$ (avec i = 2, ..., n-1) est la distance entre le point de réflexion i-1 et le point de réflexion i.

**7.** Procédé de détermination de l'atténuation météorologique supplémentaire dM selon la revendication 3, 4, 5 ou 6, **caractérisé en ce que** β est choisi avec la contrainte 0 < β < 1 de telle sorte que le rayon de courbure réciproque moyen soit égal aux points individuels du rayon sonore respectif sur tout le rayon sonore, à savoir 1/$\tilde{R}$ soit égal au rayon de courbure réciproque de la totalité du rayon sonore, c'est-à-dire que β soit choisi de telle sorte que l'on puisse écrire :

$$\frac{1}{\tilde{R}} = \frac{1}{R} = \frac{2 \cdot a_0}{x_b^2}$$

où :

$\tilde{R}$ est le rayon de courbure moyen aux points individuels du rayon sonore sur la totalité du rayon sonore, et R est le rayon de courbure de la totalité du rayon sonore.

**8.** Procédé de détermination d'atténuations météorologiques supplémentaires $dM_k$ (k = 1, ... , n et n = nombre des dM déterminées) selon la revendication 3 ainsi que selon l'une quelconque des revendications 4, 5, 6 ou 7, **caractérisé en ce que** :

(i)

a) tout d'abord, on détermine l'atténuation météorologique supplémentaire pour le rayon direct,
b) le nombre réel de réflexions est ensuite réglé sur la valeur initiale 1,

(ii) ensuite,
aussi longtemps qu'il existe un rayon entre la source et le point de destination pour le nombre réel de réflexions, on détermine les atténuations météorologiques supplémentaires respectives pour le nombre réel de réflexions pour tous les rayons existants avec ce nombre de réflexions, et
ensuite, le nombre réel des réflexions est augmenté de 1 et on répète à nouveau l'étape (ii).

**9.** Procédé de détermination de la superposition du son avec utilisation d'atténuations météorologiques $dM_k$ supplémentaires déterminées à l'aide du procédé selon la revendication 8, compte tenu de turbulences, **caractérisé en ce qu'**on détermine en outre le niveau sonore L au lieu Q et on détermine la superposition de telle sorte que l'amplitude respective $A_k$ du rayon sonore respectif soit substituée par

$$A_k \cdot \sqrt{dM_k} \cdot e^{i\varphi_t}$$

au lieu d'être uniquement admise avec $A_k$, où :

$A_k$, ci-dessus, représente l'amplitude compte tenu des atténuations connues dues à la distance, à l'absorption atmosphérique, à la végétation et aux constructions ainsi qu'aux écrans antibruit, à l'exception de la mesure météorologique au sol connue jusqu'à présent,

i désigne l'unité imaginaire,

$\varphi_t$ est la fluctuation de phase entre deux trajets de rayons, qui est distribuée par hasard dans le temps entre une valeur minimale $-\Delta\chi_i$ et une valeur maximale $+\Delta\chi_i$, et

on détermine le carré moyen de la pression sonore $\tilde{p}_{A_{ges.}}$ par intégration sur un intervalle de temps T par :

$$\widetilde{P}_{A_{ges.}} = \sum_{k=1}^{n} A_k^2 + 2 \cdot \sum_{k=1}^{n} \sum_{p=k+1}^{n} A_k \cdot A_p \cdot \cos\psi_{kp} \cdot \frac{\sin\Delta\chi_{kp}}{\Delta\chi_{kp}}$$

avec

$$\Delta\chi_{kp} = w_{t_{kp}} \cdot 2\pi \cdot f/C_0,$$

où :

$\Psi$ est la différence de phase, qui est déterminée par la différence de temps, que nécessite le son pour passer de la source Q au point de destination A via les différents trajets sonores k et p,

$\Delta\chi_{kp}$ est la fluctuation de phase maximale due à la turbulence,

$w_{tkp}$ est la différence de trajet maximale due à la turbulence,

f est la fréquence, et

$C_0$ est la vitesse du son à la hauteur 0,

ainsi que comme mentionné ici, et les amplitudes $A_k$ ci-dessus sont déjà substituées comme mentionné, compte tenu de la valeur $dM_k$ déterminée.

**10.** Procédé de détermination de la superposition du son avec utilisation d'atténuations météorologiques supplémentaires $dM_k$ déterminées à l'aide du procédé de la revendication 8 compte tenu de l'incohérence, **caractérisé en ce que** l'on détermine en outre le niveau sonore L au lieu Q et on détermine la superposition de telle sorte que l'amplitude respective $A_k$ du rayon sonore respectif soit substituée par :

$$A_k \cdot \sqrt{dM_k} \cdot e^{i\varphi_t}$$

au lieu de l'être seulement admise par $A_k$, où :

$A_k$ ci-dessus représente l'amplitude compte tenu des atténuations connues dues à la distance, à l'absorption atmosphérique, à la végétation et aux habitations ainsi qu'aux écrans antibruit, à l'exception de la mesure météorologique au sol connue jusqu'à présent,

i désigne l'unité imaginaire,

$\varphi_t$ est la fluctuation de phase entre deux trajets de rayons, qui est distribuée par hasard dans le temps entre une valeur minimale $-\Delta\chi_i$ et une valeur maximale $+\Delta\chi_i$, et

on détermine le carré moyen de la pression sonore $\widetilde{P}_{Ages}$ par intégration sur un intervalle de temps T par :

$$\widetilde{P}_{A_{ges.}} = \sum_{k=1}^{n} A_k^2 + 2 \cdot \sum_{k=1}^{n} \sum_{p=k+1}^{n} A_k \cdot A_p \cdot \cos\psi_{kp} \cdot \frac{\sin\Delta\chi_{kp}}{\Delta\chi_{kp}}$$

avec

$$\Delta\chi_{kp} = \Delta l_{kp} \cdot 2\pi \cdot f/C_0,$$

où :

$\Psi$ est la différence de phase, qui est déterminée par la différence de temps, que nécessite le son pour passer de la source Q au point de destination A via les différents trajets sonores k et p,

$\Delta\chi_{kp}$ est la fluctuation de phase maximale due à l'incohérence,

$\Delta l_{kp}$ est le déplacement moyen apparent dû à l'incohérence avec $\Delta l_{kp} = 4 \cdot s \cdot \sin(\Delta_{kp})$, où s est la mesure verticale de la source et $\Delta_{kp}$ est l'angle d'irradiation entre deux trajets de rayons k et p, ainsi que

f est la fréquence, et

$C_0$ est la vitesse du son à la hauteur 0, et

les amplitudes $A_k$ apparaissant ici sont déjà substituées comme mentionné compte tenu de la valeur $dM_k$ déterminée.

**11.** Procédé de détermination de la superposition du son avec utilisation d'atténuations météorologiques supplémentaires $dM_k$ déterminées à l'aide du procédé de la revendication 8 compte tenu de turbulences et de l'incohérence, **caractérisé en ce que** l'on détermine en outre le niveau sonore L au lieu Q et on détermine la superposition de telle sorte que l'amplitude respective $A_k$ du rayon sonore respectif soit substituée par :

$$A_k \cdot \sqrt{dM_k} \cdot e^{i\varphi_t}$$

au lieu de l'être admise seulement par $A_k$, où :

$A_k$ ci-dessus représente l'amplitude compte tenu des atténuations connues dues à la distance, à l'absorption atmosphérique, à la végétation et aux habitations ainsi qu'aux écrans antibruit, à l'exception de la mesure météorologique au sol connue jusqu'à présent,

i désigne l'unité imaginaire,

$\varphi_t$ est la fluctuation de phase entre deux trajets de rayons, qui est distribuée par hasard dans le temps entre une valeur minimale $-\Delta\chi_i$ et une valeur maximale $+\Delta\chi_i$, et

on détermine par intégration sur un intervalle de temps T le carré moyen de la pression sonore $\tilde{P}_{A_{ges.}}$ par :

$$\tilde{P}_{A_{ges.}} = \sum_{k=1}^{n} A_k^2 + 2 \cdot \sum_{k=1}^{n} \sum_{p=k+1}^{n} A_k \cdot A_p \cdot \cos\psi_{kp} \cdot \frac{\sin\Delta\chi_{kp}}{\Delta\chi_{kp}}$$

avec

$$\Delta\chi_{kp} = \sqrt{w_{tkp}^2 + \Delta l_{kp}^2} \cdot 2\pi \cdot f / C_0$$

où :

$\Psi$ est la différence de phase, qui est déterminée par la différence de temps, que nécessite le son pour passer de la source Q au point de destination A via les différents trajets sonores k et p,

$\Delta\chi_{kp}$ est la fluctuation de phase maximale due à la turbulence et à l'incohérence,

$w_{tkp}$ est la différence de trajet maximale par turbulence,

$\Delta l_{kp}$ est le déplacement moyen apparent dû à l'incohérence avec $\Delta l_{kp} = 4 \cdot s \cdot \sin(\Delta_{kp})$, où s est la mesure verticale de la source et $\Delta_{kp}$ est l'angle d'irradiation entre deux trajets de rayons k et p, ainsi que

f est la fréquence, et

$C_0$ est la vitesse du son à la hauteur 0, et

les amplitudes $A_k$ ci-dessus sont déjà substituées comme mentionné compte tenu de la valeur $dM_k$ déterminée.

12. Procédé de détermination de la superposition du son avec utilisation d'atténuations météorologiques supplémentaires déterminées au moyen du procédé de la revendication 8, **caractérisé en ce qu'**on détermine en plus le niveau sonore **L** au lieu Q et on tire des grandeurs ainsi déterminées le carré moyen de la pression sonore $\tilde{P}_{.A_{ges.}}$.

13. Procédé de détermination de la distribution des carrés moyens de la pression sonore $\tilde{P}_{.A_{ges.k}}$ avec utilisation d'atténuations météorologiques supplémentaires $dM_i$ du son d'une source sonore au lieu Q déterminées au moyen du procédé selon l'une quelconque des revendications 9 à 12, dans une région déterminée à l'air libre de telle sorte que, dans cette région, les lieux de point de destination $A_k$ soient choisis dans une grille déterminée et

(i)

a) que, pour chacun des points de destination choisis $A_k$, on détermine le carré moyen pertinent de la pression sonore $\tilde{P}_{.A_{ges.k}}$ pour le - rayon provenant de Q,
b) que chacun des carrés moyens déterminés de la pression sonore $\tilde{P}_{.A_{ges.k}}$ soit stocké avec les coordonnées du point de destination respectif associé $A_k$ dans une mémoire, et

(ii) ensuite, les carrés météorologiques moyens de la pression sonore $\tilde{P}_{.A_{ges.k}}$ sont lus dans la mémoire et, au moyen d'un appareil de sortie graphique, on les représente graphiquement conformément à la distribution spatiale de leurs points de destination $A_k$ et conformément à la valeur des carrés moyens respectifs déterminés de la pression sonore $\tilde{P}_{.A_{ges.k}}$.

14. Dispositif de réalisation d'un procédé selon l'une quelconque des revendications 1 à 8, comprenant au moins un dispositif pour saisir la distance $\overline{QA}$, dénommée r, la hauteur de la source sonore Q, dénommée hq, la hauteur du point de destination A, dénommée $h_a$, la vitesse du vent, dénommée v, l'angle entre la direction du vent et le segment $\overline{QA}$, dénommé $\varphi$, le facteur de stabilité, dénommé m, et le gradient de température météorologique, dénommé dtm, un processeur (CPU) pour réaliser les calculs nécessaires au cours des étapes du procédé, une mémoire pour recevoir et mettre à disposition les résultats obtenus et une mémoire dans laquelle est chargé un programme qui fonctionne selon le calcul indiqué dans le procédé.

15. Dispositif selon la revendication 14, également pour la réalisation d'un procédé selon l'une quelconque des revendications 9 à 12, **caractérisé en ce qu'**il est prévu en outre un dispositif pour saisir le niveau sonore L et également une mémoire dans laquelle est chargé un programme qui fonctionne selon le calcul contenu dans le procédé.

16. Dispositif selon la revendication 15 pour réaliser le procédé selon la revendication 13, **caractérisé en ce qu'**il présente en outre encore un traceur ou une imprimante graphique ou un écran graphique, sur lequel les carrés moyens de la pression sonore $\tilde{P}_{.A_{ges.k}}$ lus dans la mémoire peuvent être représentés graphiquement conformément à la distribution spatiale de leurs points de destination $A_k$ et conformément à leurs valeurs respectives, et également une mémoire dans laquelle est chargé un programme qui fonctionne selon le calcul contenu dans le procédé.

17. Programme d'ordinateur présentant des instructions adaptées pour l'exécution de la méthode selon l'une quelconque des revendications 1 à 13.

# FIG. 1

# FIG. 2

FIG. 3

FIG. 4

# FIG. 5

# FIG. 6

# FIG. 7

FIG. 8